# EUROPEAN PATENT APPLICATION

(11) **EP 4 265 413 A1**
(43) Date of publication of application: **25.10.2023**
(21) Application number: 21906470.6
(22) Date of filing: 09.12.2021
(51) Int. Cl.: B32B 27/00, C08G 65/336, C08G 67/00, C09D 183/12, C09K 3/18

(54) **SURFACE TREATMENT AGENT AND ARTICLE TREATED WITH SAID SURFACE TREATMENT AGENT**

(30) Priority: 17.12.2020 JP 2020208946; 24.06.2021 JP 2021104506
(71) Applicant: SHIN-ETSU CHEMICAL CO., LTD., Tokyo 1000005 (JP)
(72) Inventor: KUDO Miki, Annaka-shi, Gunma 379-0224 (JP); SAKOH Ryusuke, Annaka-shi, Gunma 379-0224 (JP)
(74) Representative: Ter Meer Steinmeister & Partner
(86) International application number: PCT/JP2021/045227
(87) International publication number: WO 2022/131107

(57) **Abstract**

A surface treatment agent which contains a fluorooxyalkylene group-containing polymer and/or a partial hydrolysis-condensation product of the polymer, said polymer having at least one group represented by formula (1) 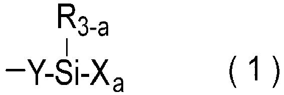 (wherein Y represents a single bond or a divalent hydrocarbon group which may have F, Si and a siloxane bond; R represents a C1-C4 alkyl group or a phenyl group; X represents a hydrolyzable group; and a represents 2 or 3)
at least at one end of each molecule, wherein the molecular weight distribution of the fluorooxyalkylene group-containing polymer or a fluorooxyalkylene group-containing polymer mixture containing the fluorooxyalkylene group-containing polymer contained in the surface treatment agent is within the range of from 1.2 to 1.8. This surface treatment agent is able to form a cured coating film that has excellent surface sliding properties, excellent water falling properties, low haze and excellent wear resistance.

## Description

### TECHNICAL FIELD

The present invention relates to a surface treatment agent containing a fluorooxyalkylene group-containing polymer and/or a partial hydrolytic condensate thereof, and more particularly to a surface treatment agent containing a fluorooxyalkylene group-containing polymer and/or a partial hydrolytic condensate thereof or a fluorooxyalkylene group-containing polymer mixture containing the fluorooxyalkylene group-containing polymer and/or the partial hydrolytic condensate thereof, which forms a coating excellent in water/oil-repellent property, surface slipperiness, and abrasion resistance, an article having a cured product coating of the surface treatment agent on its surface, and the like.

### BACKGROUND ART

Recently, there is an accelerating demand to mount touch panels as the screen on mobile phones and other displays. While the touch panel has a screen kept bare, there are many chances of the finger or cheek coming in direct contact with the screen. Undesirably the touch panel is readily fouled with stains like sebum. There is an annually increasing need for the technology to attain fingerprint proofness or easy stain removal on a display surface for better appearance or visibility. It is thus desired to have a material capable of meeting these requirements. In particular, for touch panel displays which are readily stained with fingerprints, it is desirable to form a water/oil-repellent layer on their surface. Prior art water/oil-repellent layers have high water/oil-repellent property and easy stain wipe-off, but suffer from the problem that the anti-fouling performance deteriorates during service.

Generally, a fluorooxyalkylene group-containing polymer exhibits, by virtue of their extremely low surface free energy, water/oil-repellent property, chemical resistance, lubricity, parting, anti-fouling and other properties. Taking advantage of these properties, they find use in a variety of industrial fields as water/oil repellent antifouling agents for paper and textiles, lubricants for magnetic recording media, oil-repellent agents for precision instruments, parting agents, cosmetic ingredients, protective films and the like. Inversely, the same properties indicate non-tackiness or non-adhesion to other substrates. Even if they can be coated to the substrate surface, it is difficult for the coating to tightly adhere thereto.

On the other hand, silane coupling agents are well known for their ability to bond surfaces of glass or fabric substrates to organic compounds. They are widely used as surface coating agents for numerous substrates. The silane coupling agent contains an organic functional group and a reactive silyl group (typically hydrolyzable silyl such as alkoxysilyl) in the molecule. In the presence of airborne moisture or the like, the hydrolyzable silyl groups undergo self-condensation reaction to form a coating. The hydrolyzable silyl groups form chemical and physical bonds with the surface of glass or metal, whereby the coating becomes a tough coating having durability.

Patent Documents 1 to 6 (JP-A 2008-534696, JP-A 2008-537557, JP-A 2012-072272, JP-A 2012-157856, JP-A 2013-136833, JP-A 2015-199906) disclose a composition comprising a fluorooxyalkylene group-containing polymer which is obtained by introducing a hydrolyzable silyl group into a fluorooxyalkylene group-containing compound, the composition being tightly adherent to the substrate surface and capable of forming a coating with water/oil-repellent property, chemical resistance, lubricity, parting, anti-fouling and other properties on the substrate surface.

When lenses and antireflective films are surface treated with a composition comprising the fluorooxyalkylene group-containing polymer obtained by introducing a hydrolyzable silyl group into a fluorooxyalkylene group-containing compound, the cured coatings have excellent parting, and excellent abrasion durability to steel wool, but performance improvement of slipperiness such as water removability of a surface of the cured film is required.

In addition, as a means for not impairing visibility of the surface of the substrate, that is, not increasing the haze, Patent Document 7 (JP-A 2013-136833) discloses that by mixing a fluorooxyalkylene group-containing silane with a nonfunctional fluorooxyalkylene group-containing polymer having an average molecular weight larger than that of a fluorooxyalkylene group-containing silane, irregularities on the coated surface can be suppressed to several nm when coating is performed by vacuum evaporation. In the evaporation coating, a layer containing a large amount of a fluorooxyalkylene group-containing polymer modified silane is formed on the substrate side, and a nonfunctional fluorooxyalkylene group-containing polymer layer having a larger molecular weight is formed on the surface side since evaporation is performed from a low boiling point component. Even if aggregation occurs in the fluorooxyalkylene group-containing polymer layer, the nonfunctional fluorooxyalkylene group-containing polymer layer as the outermost layer fills irregularities, so that the haze is less likely to increase. However, if the composition is diluted in a fluorine-based solvent and subjected to surface treatment by spray coating or Dip coating, compatibility between the fluorooxyalkylene group-containing silane and the nonfunctional fluorooxyalkylene group-containing polymer becomes a problem, and the haze may be increased. As described above, it has been found that the degree of increase in haze varies depending on the coating method even for the same composition.

Patent Document 8 (JP-A 2016-141699) discloses a fluorine-containing coating agent containing (A) a silane modified with a fluorooxyalkylene group-containing polymer and having a hydrolyzable group at one end and/or a partial hydrolytic condensate thereof, and (B) a silane modified with a fluorooxyalkylene group-containing polymer and having hydrolyzable groups at both ends and/or a partial hydrolytic condensate thereof, in which a mixed weight ratio of the component (A) and the component (B) is 20: 80 to 60: 40, and even when a cured coating of the fluorine-containing coating agent is thick as a thickness of 20 nm, a haze is suppressed, but since the coating agent contains the component (B), abrasion resistance may be reduced.

### PRIOR ART DOCUMENTS

### PATENT DOCUMENTS

Patent Document 1: JP-A 2008-534696
Patent Document 2: JP-A 2008-537557
Patent Document 3: JP-A 2012-072272
Patent Document 4: JP-A 2012-157856
Patent Document 5: JP-A 2013-136833
Patent Document 6: JP-A 2015-199906
Patent Document 7: JP-A 2013-136833
Patent Document 8: JP-A 2016-141699

### SUMMARY OF INVENTION

### TECHNICAL PROBLEM

An object of the invention, which has been made under the above-mentioned circumstances, is to provide a surface treatment agent containing a fluorooxyalkylene group-containing polymer and/or a partial hydrolytic condensate thereof capable of forming a cured coating having excellent surface slipperiness, excellent water falling property (small fall angle with water), further, low haze, and excellent abrasion resistance, an article having a surface treated with the surface treatment agent, and the like.

### SOLUTION TO PROBLEM

Making extensive investigations to attain the above object, the inventors have found that a surface treatment agent containing a fluorooxyalkylene group-containing polymer having at least one group of the following formula (1) at one or more ends of a molecule, preferably having a divalent polyfluorooxyalkylene structure (perfluoropolyether structure)-containing group in a main chain, and/or a partial hydrolytic condensate thereof, in which a molecular weight distribution (that is, the ratio of weight average molecular weight (Mw)/numerical average molecular weight (Mn)) of the fluorooxyalkylene group-containing polymer and/or the partial hydrolytic condensate thereof or a fluorooxyalkylene group-containing polymer mixture containing the fluorooxyalkylene group-containing polymer and/or the partial hydrolytic condensate thereof contained in the surface treatment agent is a relatively wide molecular weight distribution within a specific range (having a certain degree of molecular weight unevenness), can form a cured coating having excellent water/oil-repellent property and surface slipperiness, and particularly having a small water fall angle. Further, the inventors have found that the surface treatment agent in which the fluorooxyalkylene group-containing polymer has at least two groups of the formula (1) at one or more ends of the molecule and that provides a cured coating having a difference in haze value before and after preparation of the cured coating composed of a cured product of the surface treatment agent of 0.2 or less as measured by a method in accordance with JIS K 7136 can form a cured coating having a small haze and excellent abrasion resistance. The present invention is predicated on this finding.

Therefore, the present invention provides a surface treatment agent containing the fluorooxyalkylene group-containing polymer and/or the partial hydrolytic condensate thereof or a fluorooxyalkylene group-containing polymer mixture containing the fluorooxyalkylene group-containing polymer and/or the partial hydrolytic condensate thereof described below, an article having a cured coating of the surface treatment agent on its surface, and the like.
[1] A surface treatment agent comprising a fluorooxyalkylene group-containing polymer having at one or more ends of a molecule at least one group of the following formula (1): 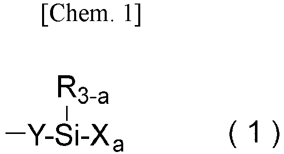 wherein Y is a single bond or a divalent hydrocarbon group which may contain one or two or more selected from a fluorine atom, a silicon atom, and a siloxane bond, R is a C₁-C₄ alkyl group or a phenyl group, X is a hydrolyzable group, and a is 2 or 3,
   and/or a partial hydrolytic condensate thereof,
   in which the molecular weight distribution of the fluorooxyalkylene group-containing polymer and/or the partial hydrolytic condensate thereof or a fluorooxyalkylene group-containing polymer mixture containing the fluorooxyalkylene group-containing polymer and/or the partial hydrolytic condensate thereof contained in the surface treatment agent is in the range of 1.2 to 1.8.
[2] The surface treatment agent according to [1], in which the numerical average molecular weight of the fluorooxyalkylene group-containing polymer and/or the partial hydrolytic condensate thereof or the fluorooxyalkylene group-containing polymer mixture containing the fluorooxyalkylene group-containing polymer and/or the partial hydrolytic condensate thereof is 1,000 to 20,000.
[3] The surface treatment agent according to [1] or [2], in which the fluorooxyalkylene group-containing polymer has a polyfluorooxyalkylene structure of -(C_{b}F_{2b}O)ₘ-(wherein b is independently for each unit an integer of 1 to 6 and m is an integer of 1 to 250, and each unit may be linear or branched) in the molecule.
[4] The surface treatment agent according to any one of [1] to [3], in which the fluorooxyalkylene group-containing polymer is one having the following formula (2), (4) or (7): 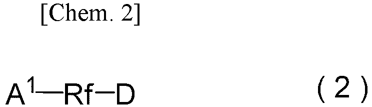 wherein Rf is a divalent polyfluorooxyalkylene structure-containing group of -C_{d}F_{2d}-O-(CF₂O)ₚ(C₂F₄O)_{q}(C₃F₆O)ᵣ(C₄F₈O)ₛ(C₅F₁₀O)ₜ(C₆F₁₂O)ᵤ-C_{d}F_{2d}- (wherein d is independently for each unit an integer of 0 to 5, p, q, r, s, t and u are each independently an integer of 0 to 150, the sum of p, q, r, s, t and u is an integer of 1 to 250, and each unit may be linear or branched, and individual repeating units within the parentheses with p, q, r, s, t and u may be randomly bonded), A¹ is a monovalent fluorine-containing hydrocarbon group having CF₃- or CF₂H- at the end, optionally containing an oxygen atom, or D, and D is a monovalent group having the following formula (3): 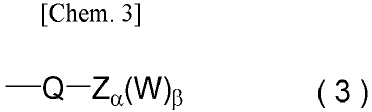 wherein Q is a single bond or a divalent organic group, Z is a di- to octa-valent group, α is 0 or 1, β is an integer of 1 to 7, and W is independently a monovalent hydrolyzable silyl group-containing group having the formula (1), 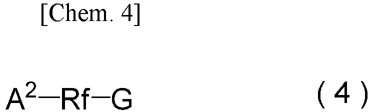 wherein Rf is the same as described above, A² is a monovalent fluorine-containing hydrocarbon group having CF₃- or CF₂H- at the end, optionally containing an oxygen atom, or G, and G is a monovalent group having the following formula (5): 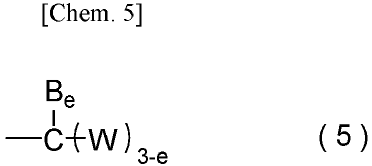 wherein W is the same as described above, B is independently a hydrogen atom or -OS, S is a hydrogen atom, a C₁-C₁₀ monovalent hydrocarbon group, or is a monovalent group having the following formula (6): 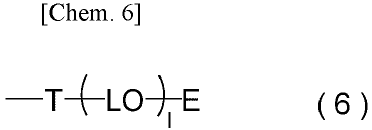 wherein T is a single bond or a di- to octa-valent group, L is independently a C₁-C₄ divalent hydrocarbon group, E is a C₁-C₆ monovalent hydrocarbon group or W, and l is an integer of 0 to 20, and
   e is 1 or 2, 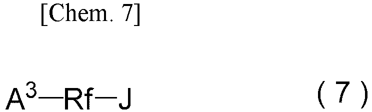 wherein Rf is the same as described above, A³ is a monovalent fluorine-containing hydrocarbon group having CF₃- or CF₂H- at the end, optionally containing an oxygen atom, or J, and J is a monovalent group having the following formula (8): 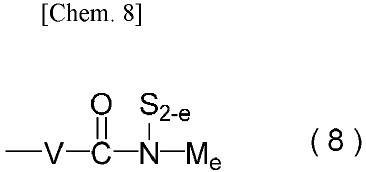 wherein S and e are the same as described above, V is a C₂-C₁₅ divalent hydrocarbon group optionally having a single bond or an ether bond, and M is a monovalent group having the following formula (9): 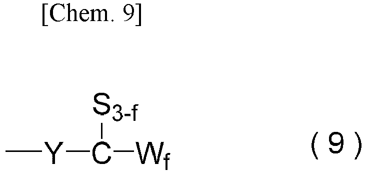 wherein Y, S, and W are the same as described above, and f is an integer of 1 to 3.
[5] The surface treatment agent according to [4], in which in formula (3), Q is an unsubstituted or substituted C₁-C₁₅ divalent hydrocarbon group which may contain one or more bonds selected from the group consisting of an amide bond, an ether bond, an ester bond, a sulfide bond, a urethane bond, a siloxane bond, a triazine bond, diorganosilylene groups, a silphenylene bond, and a silalkylene bond, and Z is a di- to octa-valent group selected from a silicon atom, a nitrogen atom, a silalkylene group, a silarylene group, and di- to octa-valent organopolysiloxane residues having a siloxane bond.
[6] The surface treatment agent according to [4], in which in formula (6), T is a single bond, or a silicon atom, a C₂-C₂₀ divalent hydrocarbon group which may contain at least one bond selected from the group consisting of a siloxane bond, a silalkylene bond, a silarylene bond, and diorganosilylene groups, a siloxane bond, a silalkylene group, or a diorganosilylene group.
[7] The surface treatment agent according to any one of [1] to [6], in which the fluorooxyalkylene group-containing polymer has at least two groups of the formula (1) at one or more ends of the molecule.
[8] The surface treatment agent according to [7], which provides a cured coating in which a difference in haze value measured by a method in accordance with JIS K 7136 between a substrate and one having the substrate and a cured coating composed of a cured product of the surface treatment agent formed thereon is 0.2 or less.
[9] The surface treatment agent according to any one of [1] to [8], further containing a fluorooxyalkylene group-containing polymer having the following formula (10): 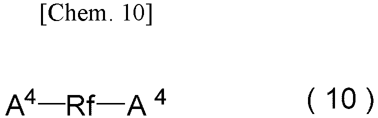 wherein Rf is a divalent polyfluorooxyalkylene structure-containing group of -C_{d}F_{2d}-O-(CF₂O)ₚ(C₂F₄O)_{q}(C₃F₆O)ᵣ(C₄F₈O)ₛ(C₅F₁₀O)ₜ(C₆F₁₂O)ᵤ-C_{d}F_{2d}- (wherein d is independently for each unit an integer of 0 to 5, p, q, r, s, t and u are each independently an integer of 0 to 150, the sum of p, q, r, s, t and u is an integer of 1 to 250, and each unit may be linear or branched, and individual repeating units within the parentheses with p, q, r, s, t and u may be randomly bonded), and A⁴ is independently a monovalent fluorine-containing hydrocarbon group having CF₃- or CF₂H- at the end, optionally containing an oxygen atom, -OR³, -COOR³ or -PO(OR³)₂ [wherein R³ is a hydrogen atom or a C₁-C₁₀ monovalent hydrocarbon group].
[10] The surface treatment agent according to any one of [1] to [9], further containing a fluorine-based solvent.
[11] An article having a cured product coating of the surface treatment agent according to any one of [1] to [10] on its surface.
[12] The article according to [11], which is any one selected from a glass plate, a hard coat film, a high hardness film, an antireflection film, a spectacle lens, an optical lens, and a quartz substrate.

### ADVANTAGEOUS EFFECTS OF INVENTION

A fluorooxyalkylene group-containing polymer containing at least one, preferably at least two, hydrolyzable silyl groups and/or a partial hydrolytic condensate thereof (hereinafter, in the present specification, these may be simply abbreviated as fluorooxyalkylene group-containing polymers) or a fluorooxyalkylene group-containing polymer mixture containing the fluorooxyalkylene group-containing polymers contained in the surface treatment agent of the present invention has a molecular weight distribution of larger than 1 to some extent, so that the surface slipperiness is improved, and even when the cured coating is thick, a low haze surface can be maintained, and durable abrasion resistance is also excellent. Thus, an article surface-treated with a surface treatment agent containing the fluorooxyalkylene group-containing polymers or the fluorooxyalkylene group-containing polymer mixture containing the fluorooxyalkylene group-containing polymers is excellent in water falling property, and can further impart performance of low haze and abrasion durability.

### DESCRIPTION OF EMBODIMENTS

Hereinafter, the present invention is described in detail.

The present invention is a surface treatment agent containing a fluorooxyalkylene group-containing polymer containing at least one, preferably at least two, hydrolyzable silyl groups at one or more ends of a molecule and/or a partial hydrolytic condensate thereof, in which the molecular weight distribution (that is, the ratio of weight average molecular weight (Mw)/numerical average molecular weight (Mn)) of the fluorooxyalkylene group-containing polymers (the fluorooxyalkylene group-containing polymer containing at least one, preferably at least two, hydrolyzable silyl groups and/or the partial hydrolytic condensate thereof) or a fluorooxyalkylene group-containing polymer mixture containing the fluorooxyalkylene group-containing polymers (a mixture of the fluorooxyalkylene group-containing polymer and a non-functional fluorooxyalkylene group-containing polymer described later (that is, a fluorooxyalkylene group-containing polymer composition)) contained in the surface treatment agent is in the range of 1.2 to 1.8. Preferably, the molecular weight distribution is in the range of 1.20 to 1.80, further 1.22 to 1.70, and particularly 1.25 to 1.65. If the molecular weight distribution is less than 1.2, aggregates are formed on the cured product coating, so that the water falling property of the cured product coating is deteriorated (the water fall angle is increased), and the haze of the cured product coating is increased, and if the molecular weight distribution exceeds 1.8, the physical property value of the cured product coating is not stabilized.

In order to set the molecular weight distribution within the above range, for fluorooxyalkylene group-containing polymers and/or a fluorooxyalkylene group-containing polymer mixture containing the fluorooxyalkylene group-containing polymers as a final product, a plurality of polymers having different molecular weights and molecular weight distributions and/or mixtures containing the polymers are appropriately blended, or for fluoropolyether group-containing polymers and/or a mixture containing the polymers as a starting material or an intermediate material before obtaining a final product, a plurality of polymers having different molecular weights and molecular weight distributions and/or a plurality of mixtures containing the polymers are appropriately blended to prepare the fluoropolyether group-containing polymers having a molecular weight distribution as a starting material or an intermediate material within the above range and/or a mixture containing the polymers, and the fluoropolyether group-containing polymers and/or the mixture containing the polymers as a starting material or an intermediate material are used to produce the fluorooxyalkylene group-containing polymers and/or the fluorooxyalkylene group-containing polymer mixture containing the fluorooxyalkylene group-containing polymers as a final product, so that the fluorooxyalkylene group-containing polymers and/or the fluorooxyalkylene group-containing polymer mixture containing the fluorooxyalkylene group-containing polymers controlled to have a molecular weight distribution within the above range can be prepared.

Moreover, in the present invention, in the surface treatment agent containing the fluorooxyalkylene group-containing polymer containing at least one, preferably at least two, hydrolyzable silyl groups and/or the partial hydrolytic condensate thereof, the numerical average molecular weight of the fluorooxyalkylene group-containing polymer and/or the partial hydrolytic condensate thereof, or a fluorooxyalkylene group-containing polymer mixture containing the fluorooxyalkylene group-containing polymer and/or the partial hydrolytic condensate thereof (a mixture of the fluorooxyalkylene group-containing polymer and a non-functional fluorooxyalkylene group-containing polymer described later (fluorooxyalkylene group-containing polymer composition)) contained in the surface treatment agent is preferably in the range of 1,000 to 20,000. The numerical average molecular weight is more preferably 2,000 to 10,000, further preferably 2,500 to 9,000, and particularly preferably 3,000 to 8,000.

In the present invention, the numerical average molecular weight (Mn) and the weight average molecular weight (Mw) used for measuring the molecular weight distribution (the ratio of weight average molecular weight (Mw)/numerical average molecular weight (Mn)) of the fluorooxyalkylene group-containing polymer and/or the partial hydrolytic condensate thereof or the fluorooxyalkylene group-containing polymer composition can be each determined as a polystyrene equivalent value in gel permeation chromatography (GPC) analysis using a fluorine-based solvent as a developing solvent.

Also, the numerical average molecular weight (Mn) of the fluorooxyalkylene group-containing polymer and/or the partial hydrolytic condensate thereof or the fluorooxyalkylene group-containing polymer composition can also be calculated from the characteristic peak intensity ratio of ¹⁹F-NMR analysis.

The fluorooxyalkylene group-containing polymer used in the surface treatment agent of the present invention has at one or more ends, preferably one to three ends of the molecule, at least 1, preferably 1 to 3 (that is, at least 1, preferably 1 to 9, more preferably 2 to 6 in a molecule) groups (hydrolyzable silyl group-containing groups) having the following formula (1): 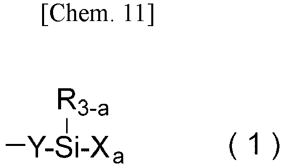 wherein Y is a single bond or a divalent hydrocarbon group optionally having one or two or more selected from a fluorine atom, a silicon atom and a siloxane bond, R is a C₁-C₄ alkyl group or a phenyl group, X is a hydrolyzable group, and a is 2 or 3,
and preferably has a polyfluorooxyalkylene structure of -(C_{b}F_{2b}O)ₘ- (wherein b is independently for each unit an integer of 1 to 6 and m is an integer of 1 to 250, and each unit may be linear or branched) in the molecule.

In order to impart performance of low haze and abrasion durability to an article surface-treated with the surface treatment agent containing the fluorooxyalkylene group-containing polymers of the present invention, it is preferable to use a fluorooxyalkylene group-containing polymer having at least 2, preferably 2 to 3 (that is, at least 2, preferably 2 to 9, and more preferably 2 to 6 in the molecule) groups having the formula (1) (hydrolyzable silyl group-containing groups).

In formula (1), Y is a single bond or a divalent hydrocarbon group optionally having one or two or more selected from a fluorine atom, a silicon atom, and a siloxane bond, and the divalent hydrocarbon group optionally having one or two or more selected from a fluorine atom, a silicon atom, and a siloxane bond is a group selected from the group consisting of C₁-C₁₀ alkylene groups, C₁-C₁₀ alkylene groups containing a fluorine atom, alkylene groups containing a C₆-C₈ arylene group (alkylene arylene groups), divalent groups having alkylene moieties bonded via a silalkylene structure or silarylene structure, and divalent groups having a C₂-C₁₀ alkylene moiety bonded to the valence bond of a divalent linear organopolysiloxane residue of 2 to 10 silicon atoms or divalent groups having a C₂-C₁₀ alkylene moiety bonded to the valence bond of a divalent branched or cyclic organopolysiloxane residue of 3 to 10 silicon atoms. Among them, a C₁-C₁₀, preferably C₂-C₅, and more preferably C₂ or C₃ alkylene group is preferable.

Y other than a single bond is specifically exemplified by those shown below. In the following structures, it is preferred that the right-side valence bond is bonded to Si.

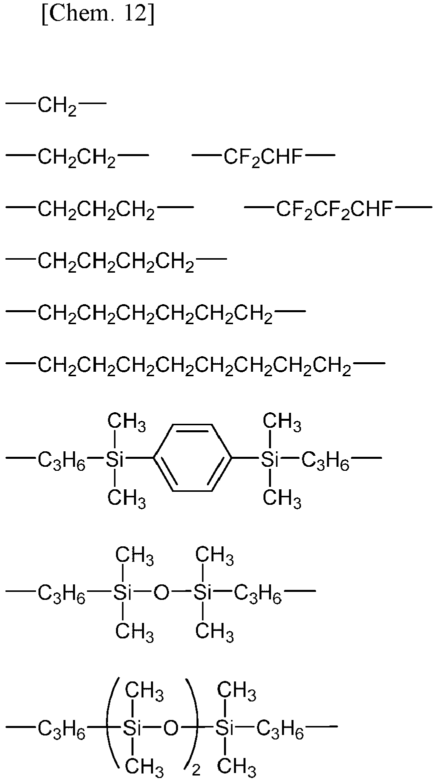

In formula (1), X is a hydrolyzable group which may be different from each other. Examples of such X include C₁-C₁₀ alkoxy groups such as methoxy, ethoxy, propoxy, isopropoxy, butoxy, isobutoxy, sec-butoxy, and tert-butoxy; C₂-C₁₀ alkoxy-substituted alkoxy groups such as methoxymethoxy, methoxyethoxy, ethoxymethoxy, and ethoxyethoxy; C₂-C₁₀ acyloxy groups such as acetoxy and propionoxy; C₂-C₁₀ alkenyloxy groups such as vinyloxy, allyloxy, propenoxy, and isopropenoxy; halogen groups such as chloro, a bromo, and iodo; and the like. Inter alia, methoxy, ethoxy, isopropenoxy and chloro are preferred.

In formula (1), R is a C₁-C₄ alkyl group such as methyl, ethyl, propyl or butyl, or a phenyl group. Inter alia, methyl and ethyl are preferred.

In formula (1), a is 2 or 3, and is preferably 3 from the viewpoint of reactivity and adhesion to the substrate.

Examples of the group having the formula (1) (hydrolyzable silyl group-containing group) include those shown below:

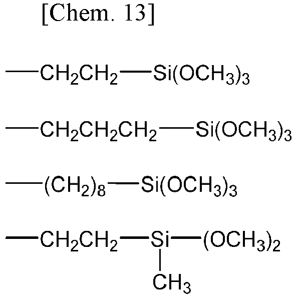

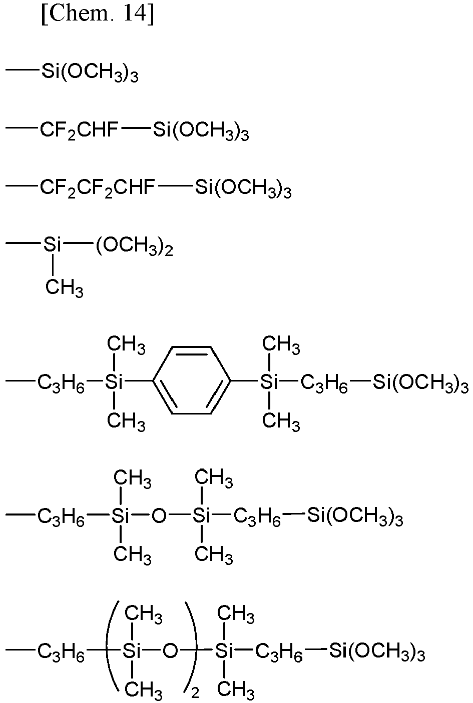

Also, in the polyfluorooxyalkylene structure of -(C_{b}F_{2b}O)ₘ-, b is independently for each unit an integer of 1 to 6, preferably an integer of 1 to 4, and m is an integer of 1 to 250, preferably an integer of 10 to 250, and more preferably an integer of 10 to 140. Each unit may be linear or branched.

Examples of the repeating unit of -C_{b}F_{2b}O- include units having the following formulae, and the like.

-CF₂O-,

-CF₂CF₂O-,

-CF₂CF₂CF₂O-,

-CF(CF₃)CF₂O-,

-CF₂CF₂CF₂CF₂O-,

-CF₂CF₂CF₂CF₂CF₂CF₂O-,

-C(CF₃)₂O-

Of these, repeating units having the following formulae are particularly preferred.

-CF₂O-,

-CF₂CF₂O-

The polyfluorooxyalkylene structure may be composed of one of the above repeating units, or may be composed of a combination of two or more thereof.

The fluorooxyalkylene group-containing polymer is preferably, for example, a fluorooxyalkylene group-containing polymer having the following formula (2), (4) or (7): 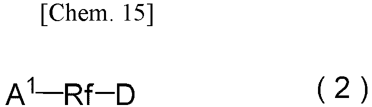 wherein Rf is independently a divalent polyfluorooxyalkylene structure-containing group of -C_{d}F_{2d}-O-(CF₂O)ₚ(C₂F₄O)_{q}(C₃F₆O)ᵣ(C₄F₈O)ₛ(C₅F₁₀O)ₜ(C₆F₁₂O)ᵤ-C_{d}F_{2d}- (here, d is independently for each unit an integer of 0 to 5, p, q, r, s, t and u are each independently an integer of 0 to 150, the sum of p, q, r, s, t and u is an integer of 1 to 250, and each unit may be linear or branched, and individual repeating units within the parentheses with p, q, r, s, t and u may be randomly bonded), A¹ is a monovalent fluorine-containing hydrocarbon group having CF₃- or CF₂H- at the end, optionally containing an oxygen atom, or D, and D is a monovalent group having the following formula (3): 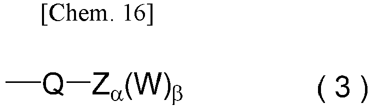 wherein Q is a single bond or a divalent organic group, Z is a di- to octa-valent group, α is 0 or 1, β is an integer of 1 to 7, and W is independently a monovalent hydrolyzable silyl group-containing group having the formula (1), 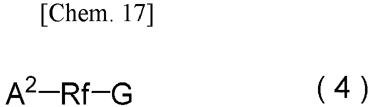 wherein Rf is the same as described above, A² is a monovalent fluorine-containing hydrocarbon group having CF₃- or CF₂H- at the end, optionally containing an oxygen atom, or G, and G is a monovalent group having the following formula (5): 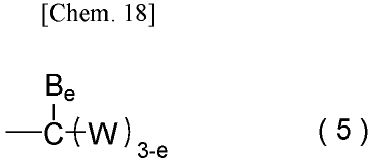 wherein W is the same as described above, B is independently a hydrogen atom or -OS, S is a hydrogen atom, a C₁-C₁₀ monovalent hydrocarbon group, or is a monovalent group having the following formula (6): 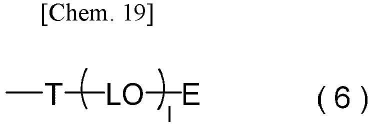 wherein T is a single bond or a di- to octa-valent group, L is independently a C₁-C₄ divalent hydrocarbon group, E is a C₁-C₆ monovalent hydrocarbon group or W, and l is an integer of 0 to 20, and
e is 1 or 2, 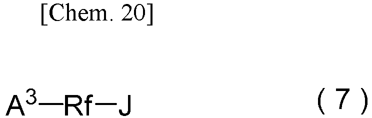 wherein Rf is the same as described above, A³ is a monovalent fluorine-containing hydrocarbon group having CF₃- or CF₂H- at the end, optionally containing an oxygen atom, or J, and J is a monovalent group having the following formula (8): 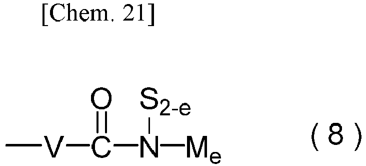 wherein S and e are the same as described above, V is a C₂-C₁₅ divalent hydrocarbon group optionally having a single bond or an ether bond, and M is a monovalent group having the following formula (9): 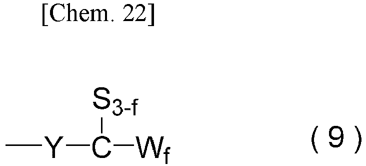 wherein Y, S, and W are the same as described above, and f is an integer of 1 to 3.

First, a fluorooxyalkylene group-containing polymer having the following formula (2) is described.

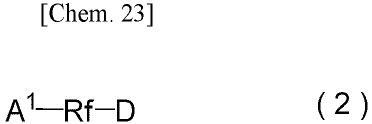

In formula (2), Rf is a divalent polyfluorooxyalkylene structure (perfluoropolyether structure)-containing group of -C_{d}F_{2d}-O-(CF₂O)ₚ(C₂F₄O)_{q}(C₃F₆O)ᵣ(C₄F₈O)ₛ(C₅F₁₀O)ₜ(C₆F₁₂O)ᵤ-C_{d}F_{2d}-, and d is independently for each unit an integer of 0 to 5, preferably an integer of 0 to 2, and more preferably 0 or 1. p, q, r, s, t and u are each independently an integer of 0 to 150, preferably an integer of 0 to 100, more preferably an integer of 0 to 80, further preferably an integer of 0 to 60, particularly preferably an integer of 0 to 40, and especially preferably an integer of 0 to 10, the sum of p, q, r, s, t and u is at least 1, preferably 3 or more, more preferably 7 or more, and particularly preferably 10 or more, and the sum of p, q, r, s, t and u is 250 or less, preferably 140 or less, and more preferably 70 or less. Each unit may be linear or branched. Note that, individual repeating units within the parentheses with p, q, r, s, t and u may be randomly bonded.

The divalent polyfluorooxyalkylene structure-containing group of Rf can be specifically represented by the following structures:

[Chem. 24] - C_{d'}F_{2d'}-O-(CF₂O)_{p'}(C₂F₄O)_{q'}-C_{d'}F_{2d'} - - C_{d'}F_{2d'}-O-(CF₂O)_{p'}(C₂F₄O)_{q'}C₃F₆O)_{r'}-C_{d'}F_{2d'} - - C_{d'}F_{2d'}-O-(CF₂O)_{p'}(C₂F₄O)_{q'}(C₄F₈O)_{s'}-C_{d'}F_{2d'} - - C_{d'}F_{2d'}-O-(CF₂O)_{p'}(C₂F₄O)_{q'}(C₃F₆O)_{r'}(C₄F₈O)_{s'}-C_{d'}F_{2d'} -

[Chem. 25] - C_{d'}F_{2d'}-O-(C₂F₄O)_{q'}-C_{d'}F_{2d'} - - C_{d'}F_{2d'}-O-(C₃F₆O)_{r'}-C_{d'}F_{2d'} - - C_{d'}F_{2d'}-O-(C₂F₄O)_{q'}(C₄F₈O)_{s'}-C_{d'}F_{2d'} - - C_{d'}F_{2d'}-O-(C₂F₄O)_{q'}(C₄F₈O)_{s'}(C₆F₁₂O)_{u'}-C_{d'}F_{2d'} - - C_{d'}F_{2d'}-O-(CF₂O)_{p'}(C₂F₄O)_{q'}(C₃F₆O)_{r'}(C₅F₁₀O)_{t'}-C_{d'}F_{2d'} - - C_{d'}F_{2d'}-O-(CF₂O)_{p'}(C₂F₄O)_{q'}(C₃F₆O)_{q'}(C₃F₆O)_{r'}(C₄F₈O)_{s'}(C₅F₁₀O)_{t'}(C₆F₁₂O)_{u'}-C_{d'}F_{2d'} -

wherein p', q', r', s', t' and u' are each independently an integer of 1 to 150, the sum of p', q', r', s', t' and u' is 12 to 250, individual repeating units within the parentheses with p', q', r', s', t' and u' may be randomly bonded, d' is independently an integer of 0 to 5, and each unit may be linear or branched.

In formula (2); A¹-Rf-D, A¹ is a monovalent fluorine-containing hydrocarbon group having CF₃- or CF₂H- at the end, optionally containing an oxygen atom, or D (that is, -Q-Z_{α}(W)_{β} having the following formula (3)), and the monovalent fluorine-containing hydrocarbon group having CF₃- or CF₂H- at the end, optionally containing an oxygen atom is preferably a C₁-C₆ fluoroalkyl group, and particularly preferably a fluoroalkyl group having CF₃- or CF₂H- at the end of the polymer.

Examples of such a monovalent fluorine-containing hydrocarbon group having CF₃- or CF₂H- at the end of A¹ optionally containing an oxygen atom include the following groups.

[Chem. 26] CF₂H- CF₃- C₂F₅- C₃F₇- C₄F₉- CF₂H- C₃F₇OCFHCF₂OCH₂- CF₃OCFHCF₂OCH₂- CF₃OC₃F₆OCFHCF₂OCH₂-

In formula (2); A¹-Rf-D, D is a monovalent group having the following formula (3).
[Chem. 27]

-Q-Z_{α}(W)_{β} (3)

In formula (3), Q is a single bond or a divalent organic group, and Q other than a single bond is an unsubstituted or substituted C₁-C₁₅, preferably C₂-C₁₅ divalent hydrocarbon group, optionally containing one or more bonds selected from the group consisting of an amide bond (for example, an unsubstituted amide bond, an N-methyl-substituted amide bond, or an N-phenyl-substituted amide bond), an ether bond, an ester bond, a sulfide bond, a urethane bond, a siloxane bond, a triazine bond, diorganosilylene groups (for example, dialkylsilylene groups such as a dimethylsilylene group), a silphenylene bond, and silalkylene bonds (for example, a silethylene bond), and preferably an unsubstituted or fluorine-substituted C₁-C₁₂, preferably C₂-C₁₂ divalent hydrocarbon group, optionally containing the bond.

Examples of such Q other than a single bond include the following groups. In the following structures, it is preferred that a left valence bond is bonded to Rf, and a right valence bond is bonded to Z (or W). 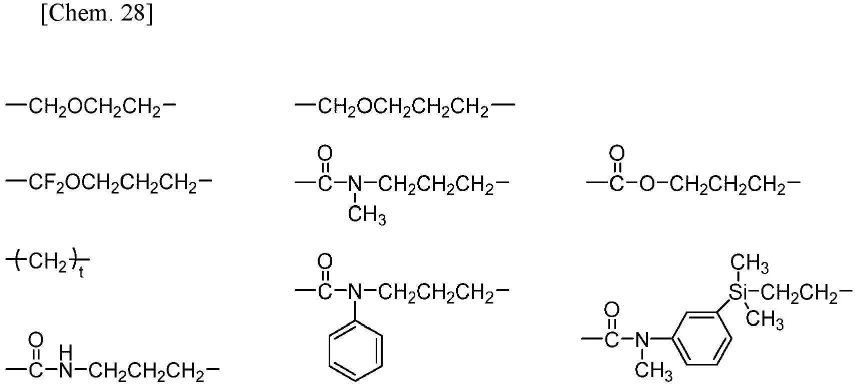 wherein t is an integer of 1 to 4, and preferably an integer of 2 to 4.

In formula (3); -Q-Z_{α}(W)_{β}, Z is a di- to octa-valent group, preferably a silicon atom, a nitrogen atom, a silalkylene group, a silarylene group, or a di- to octa-valent organopolysiloxane residue having a siloxane bond, more preferably a di- to octa-valent, preferably di- to tetra-valent group selected from a linear organopolysiloxane residue of 2 to 13 silicon atoms, particularly 2 to 5 silicon atoms, or a branched or cyclic organopolysiloxane residue of 3 to 13 silicon atoms, particularly 3 to 5 silicon atoms. In addition, Z optionally contains a silalkylene structure such as a silethylene structure in which two silicon atoms are bonded by an alkylene group such as an ethylene group, that is, Si-(CH₂)ₙ-Si (in the above formula, n is an integer of 2 to 6, preferably an integer of 2 to 4).

The silalkylene or silarylene group is exemplified by those shown below: 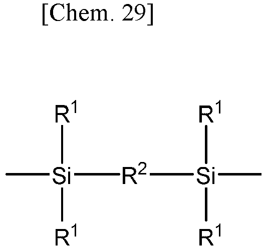 wherein R¹ is a C₁-C₈, more preferably C₁-C₄ alkyl group such as methyl, ethyl, propyl or butyl, or a C₆-C₁₀ aryl group such as phenyl, and R¹ may be the same or different; R² is a C₁-C₄ alkylene group such as methylene, ethylene or propylene (trimethylene, methylethylene), or a C₆-C₁₀ arylene group such as phenylene.

The di- to octa-valent organopolysiloxane residue having a siloxane bond is exemplified by those shown below: 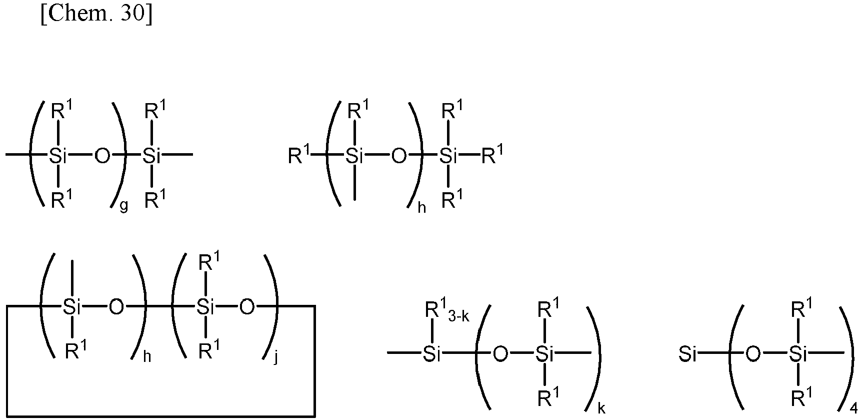 wherein R¹ is the same as described above; g is an integer of 1 to 12, preferably 1 to 4, h is an integer of 2 to 8, preferably 2 to 4, j is an integer of 0 to 8, preferably 0 or 1, h+j is an integer of 3 to 13, preferably 3 to 5, and k is an integer of 1 to 3, preferably 2 or 3.

Examples of such Z include those shown below.

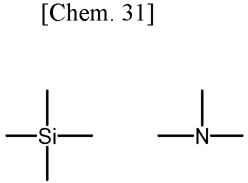

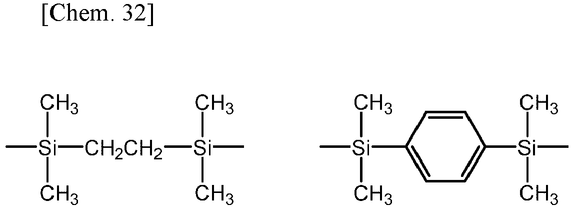

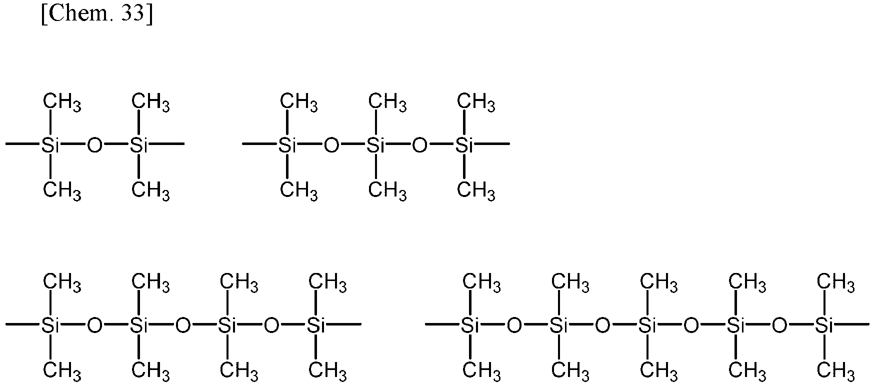

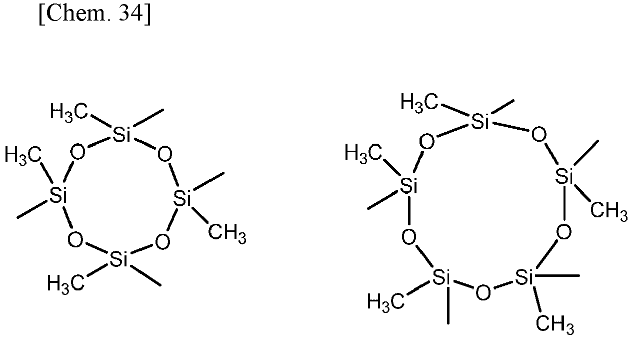

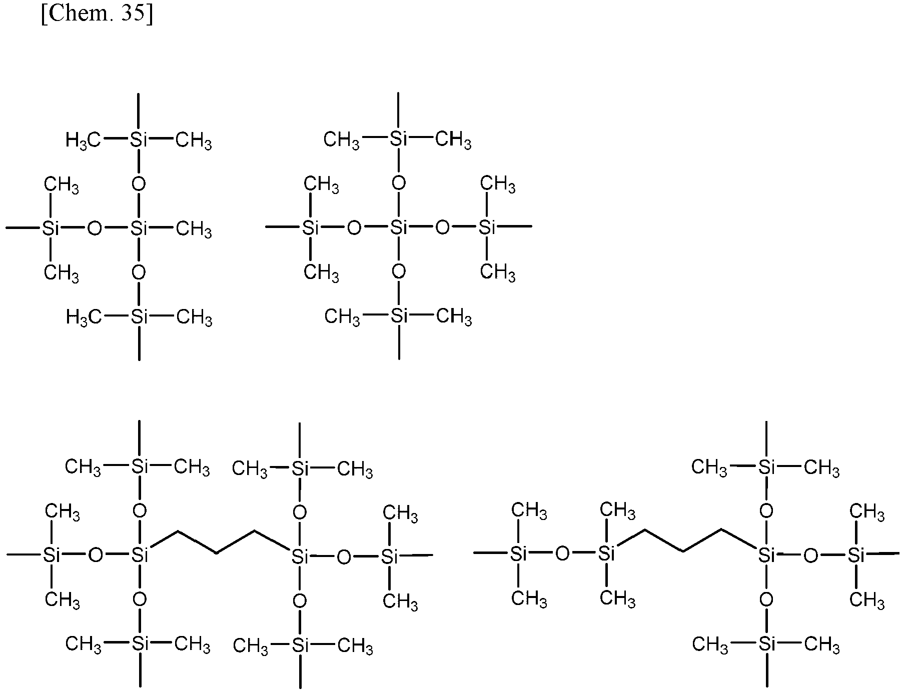

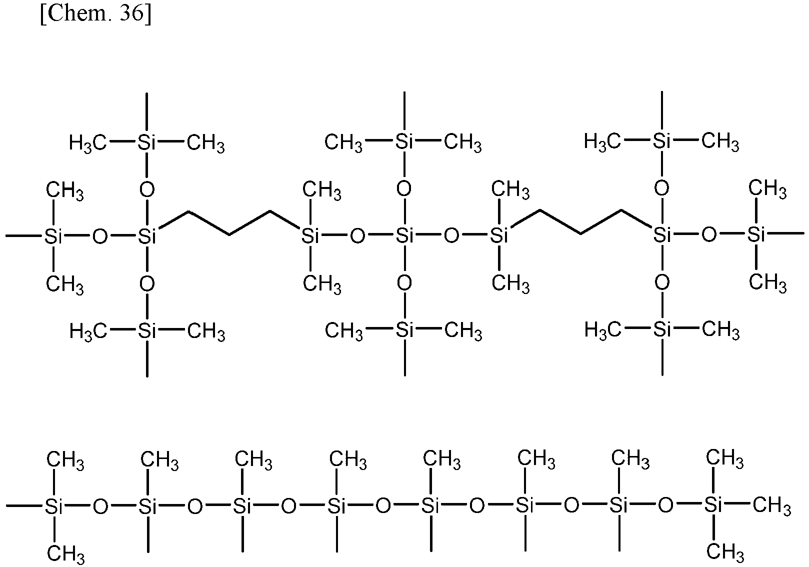

In formula (3); -Q-Z_{α}(W)_{β}, W is independently a monovalent hydrolyzable silyl group-containing group having the formula (1), and is exemplified by those similar to those exemplified in formula (1).

In formula (3); -Q-Z_{α}(W)_{β}, α is 0 or 1, β indicating the number of W is an integer of 1 to 7, preferably an integer of 2 to 7, and β is (valence of Z - 1).

Examples of the group in formula (3); -Q-Z_{α}(W)_{β} (that is, D in formula (2)) include those shown below.

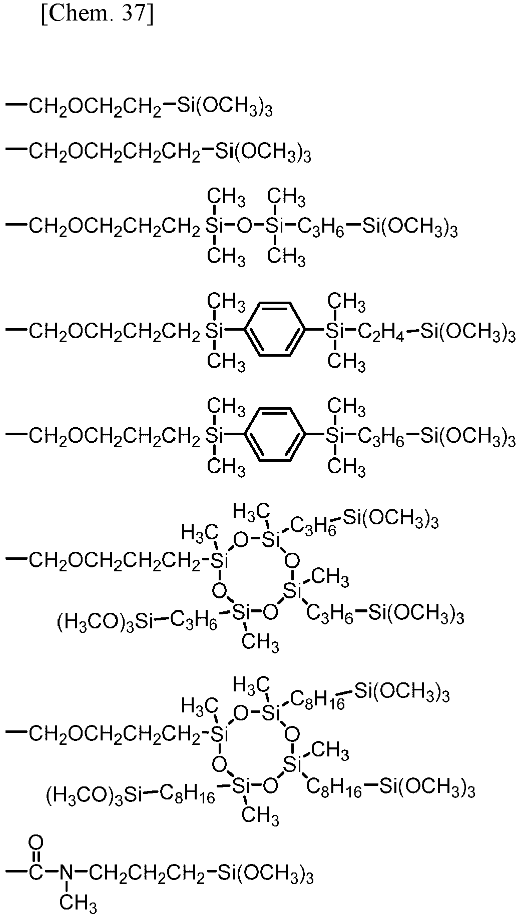

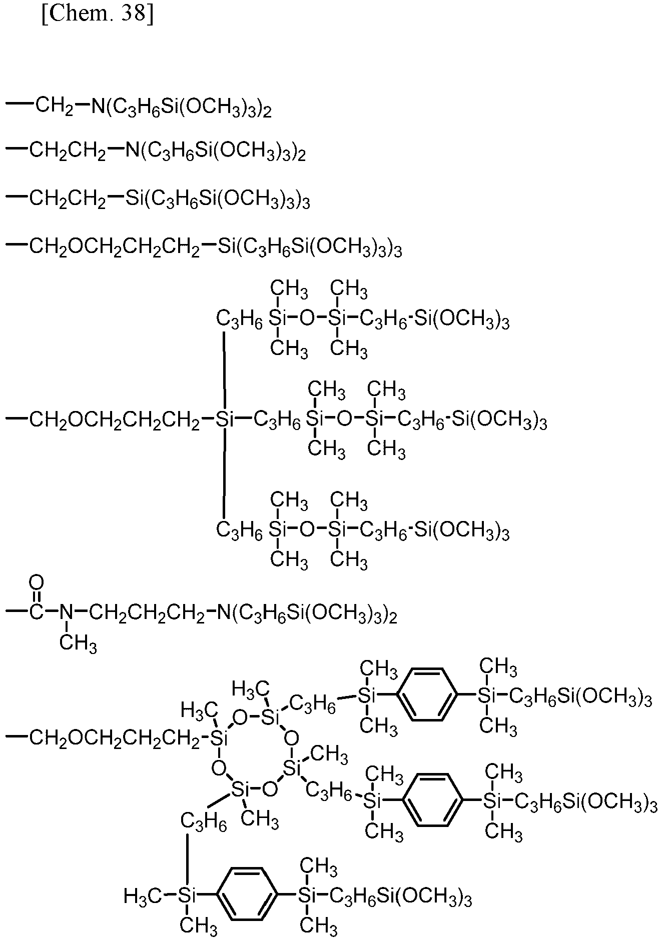

Examples of the fluorooxyalkylene group-containing polymer having the formula (2) include those shown below:

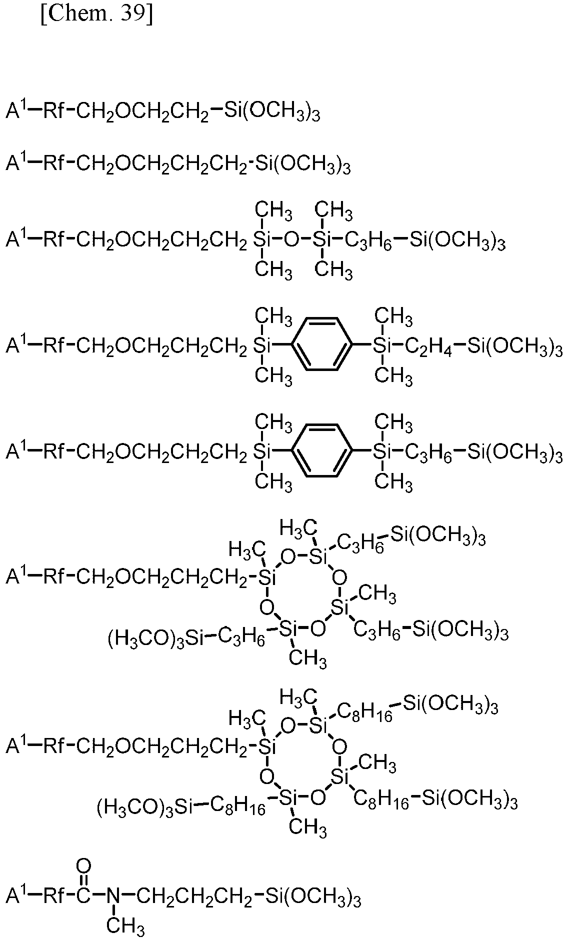

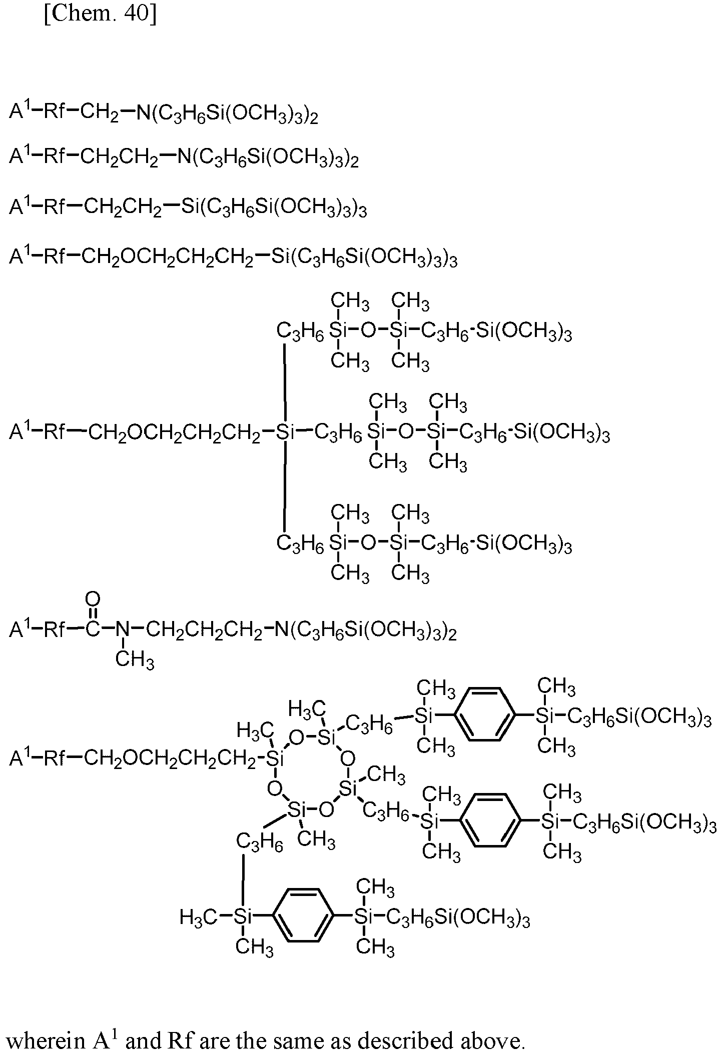

Next, a fluorooxyalkylene group-containing polymer having the following formula (4) is described.

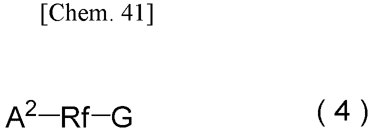

In formula (4), Rf is the same as described above, and is exemplified by those similar to those exemplified for Rf in formula (2).

In formula (4); A²-Rf-D, A² is a monovalent fluorine-containing hydrocarbon group having CF₃- or CF₂H- at the end, optionally containing an oxygen atom, or G (that is, a monovalent group having the following formula (5); -C(B)ₑ(W)₃₋ₑ), and the monovalent fluorine-containing hydrocarbon group having CF₃- or CF₂H- at the end, optionally containing an oxygen atom is preferably a C₁-C₆ fluoroalkyl group, and particularly preferably a fluoroalkyl group having CF₃- or CF₂H- at the end of the polymer.

Examples of such a monovalent fluorine-containing hydrocarbon group having CF₃- or CF₂H- at the end of A² optionally containing an oxygen atom include the following groups.

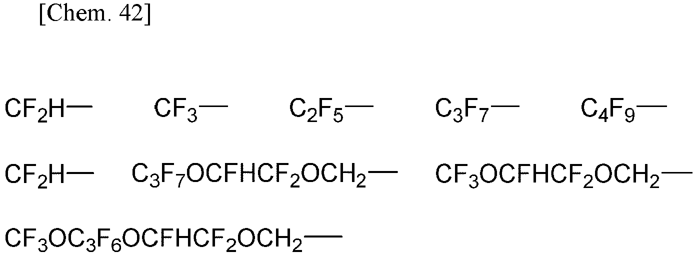

In formula (4); A²-Rf-G, G is a monovalent group having the following formula (5).

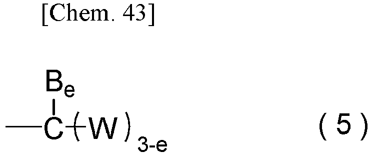

In formula (5), W is the same as described above, and is exemplified by those similar to those exemplified in formula (1).

In formula (5), e is 1 or 2, and preferably 1.

In formula (5); -C(B)ₑ(W)₃₋ₑ, B is independently a hydrogen atom or -OS, and S is a hydrogen atom, a C₁-C₁₀ monovalent hydrocarbon group, or a monovalent group having the following formula (6).

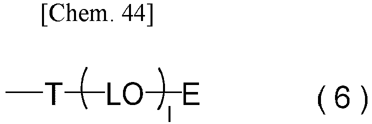

Here, examples of the C₁-C₁₀ monovalent hydrocarbon group of S include alkyl groups such as methyl, ethyl, propyl, butyl, pentyl, hexyl and octyl, alkenyl groups such as vinyl and allyl, aryl groups such as phenyl and tolyl, and aralkyl groups such as benzyl and phenylethyl, and C₁-C₃ alkyl groups and phenyl are preferred.

In formula (6); -T-(LO)ₗ-E, T is a single bond or a di- to octa-valent group, preferably a single bond, a silicon atom, or a C₂-C₂₀ divalent hydrocarbon group optionally containing one or more bonds selected from the group consisting of a siloxane bond, silalkylene bonds (for example, a silethylene bond, a silpropylene bond), silarylene bonds (for example, a silphenylene bond), and diorganosilylene groups (for example, dialkylsilylene groups such as a dimethylsilylene group, dialkoxysilylene groups such as a dimethoxysilylene group), a siloxane bond, a silalkylene group, or a diorganosilylene group, and T other than a single bond is specifically exemplified by those shown below. In the following structures, it is preferred that the right-side valence bond is bonded to L or E.

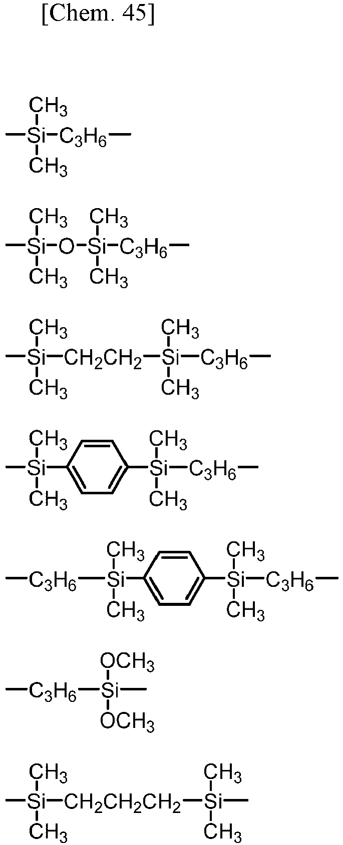

In formula (6); -T-(LO)ₗ-E, L is independently a C₁-C₄ divalent hydrocarbon group such as an alkylene group such as methylene, ethylene, propylene (trimethylene, methylethylene), or butylene (tetramethylene), and the number of carbon atoms may be single or mixed.

In formula (6); -T-(LO)ₗ-E, l is an integer of 0 to 20, preferably an integer of 0 to 10, and more preferably 0 or 6. In the case of having (LO), it is preferred that l is 1 or more, and particularly 2 or more.

In formula (6); -T-(LO)ₗ-E, E is a C₁-C₄ alkyl group such as methyl, ethyl, propyl or butyl, a C₁-C₆ monovalent hydrocarbon group such as phenyl, or W, and W is the same as described above, and is exemplified by those similar to those exemplified in formula (1).

Examples of the monovalent group having the formula (6); -T-(LO)ₗ-E include those shown below.

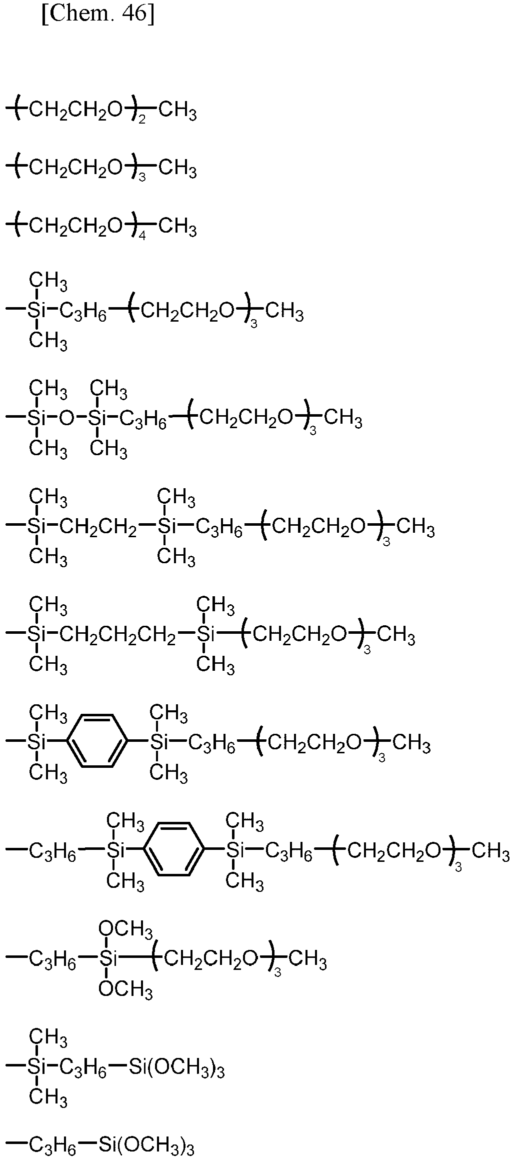

Examples of the monovalent group having the formula (5); -C(B)ₑ(W)₃₋ₑ (that is, G in formula (4)) include those shown below.

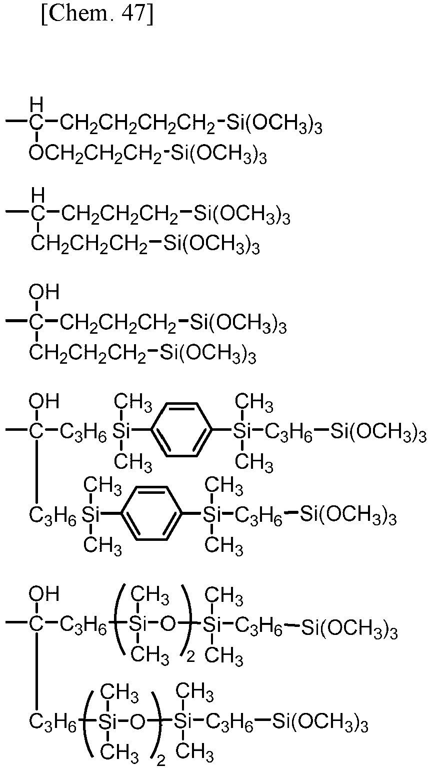

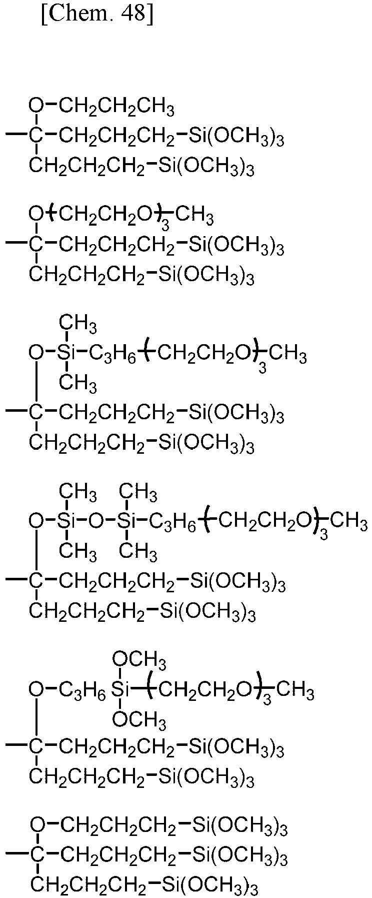

Examples of the fluorooxyalkylene group-containing polymer having the formula (4) include those shown below: 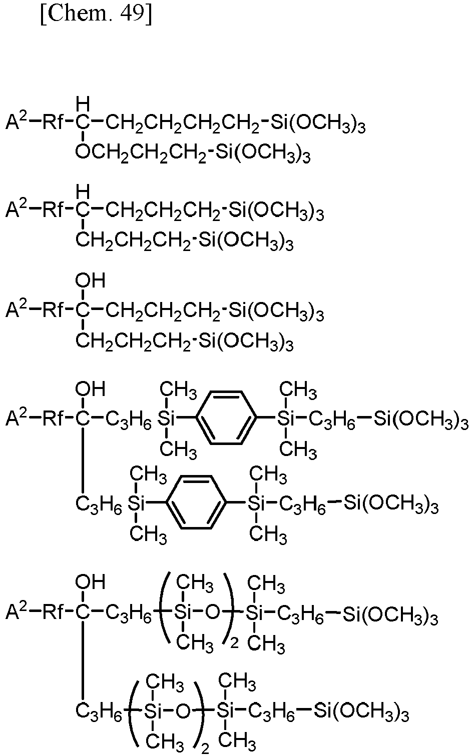 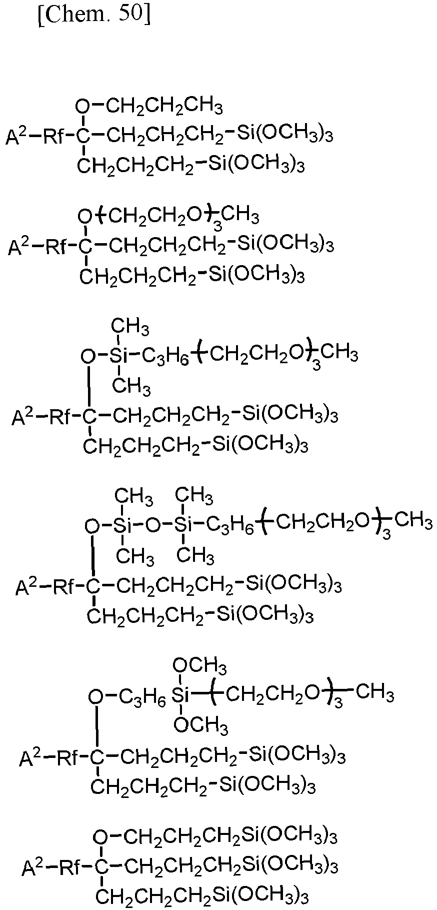 wherein A² and Rf are the same as described above.

Next, a fluorooxyalkylene group-containing polymer having the following formula (7) is described.

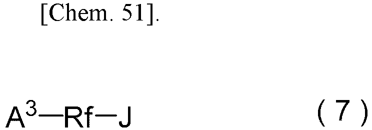

In formula (7), Rf is the same as described above, and is exemplified by those similar to those exemplified for Rf in formula (2).

In formula (7); A³-Rf-J, A³ is a monovalent fluorine-containing hydrocarbon group having CF₃- or CF₂H- at the end, optionally containing an oxygen atom, or J (that is, a monovalent group having the following formula (8); -V-C(=O)N(S)₂₋ₑ(M)ₑ), and the monovalent fluorine-containing hydrocarbon group having CF₃- or CF₂H- at the end, optionally containing an oxygen atom is preferably a C₁-C₆ fluoroalkyl group, and particularly preferably a fluoroalkyl group having CF₃- or CF₂H- at the end of the polymer.

Examples of such a monovalent fluorine-containing hydrocarbon group having CF₃- or CF₂H- at the end, optionally containing an oxygen atom include the following groups.

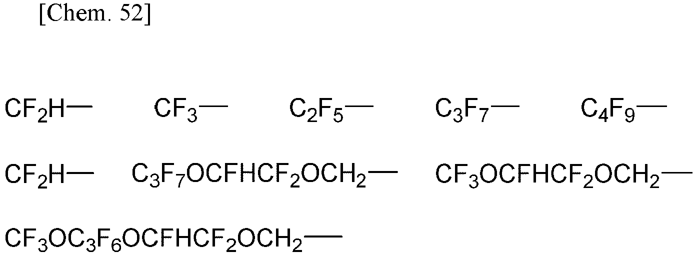

In formula (7); A³-Rf-J, J is a monovalent group having the following formula (8).

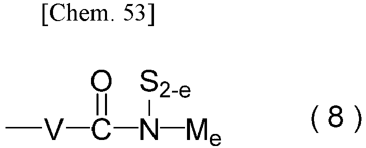

In formula (8), V is a C₂-C₁₅ divalent hydrocarbon group optionally having a single bond or an ether bond, and V other than a single bond is specifically exemplified by those shown below. In the following structures, it is preferred that the right-side valence bond is bonded to a carbon atom (-C(=O)-).

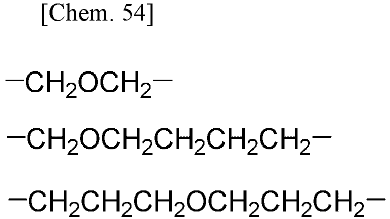

In formula (8), S is the same as described above, and is exemplified by those similar to those exemplified for S in formula (5).

In formula (8), e is 1 or 2, and is preferably 1, as e in formula (5).

In formula (8), M is a monovalent group having the following formula (9).

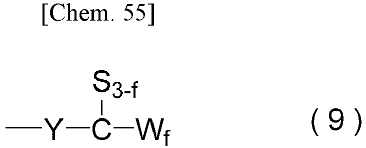

In formula (9), Y, S, and W are the same as described above, and are exemplified by those similar to those exemplified for Y in formula (1), S in formula (5), and those exemplified in formula (1).

In formula (9), f is an integer of 1 to 3.

Examples of the monovalent group having the formula (9); -Y-C(S)_{3-f}(W)_{f} (that is, M in formula (8)) include those shown below.

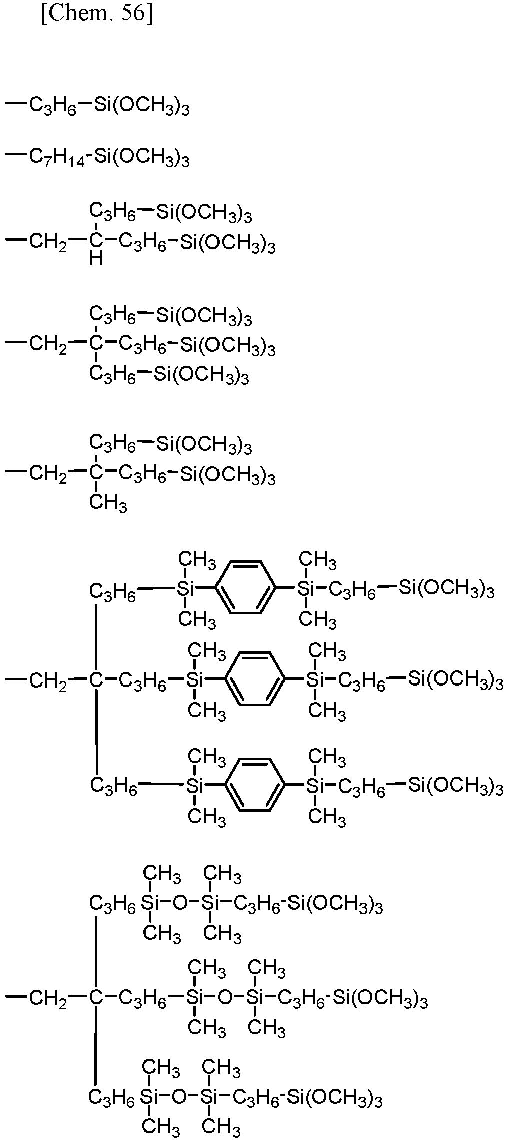

Examples of the monovalent group having the formula (8); -V-C(=O)N(S)₂₋ₑ(M)ₑ include those shown below.

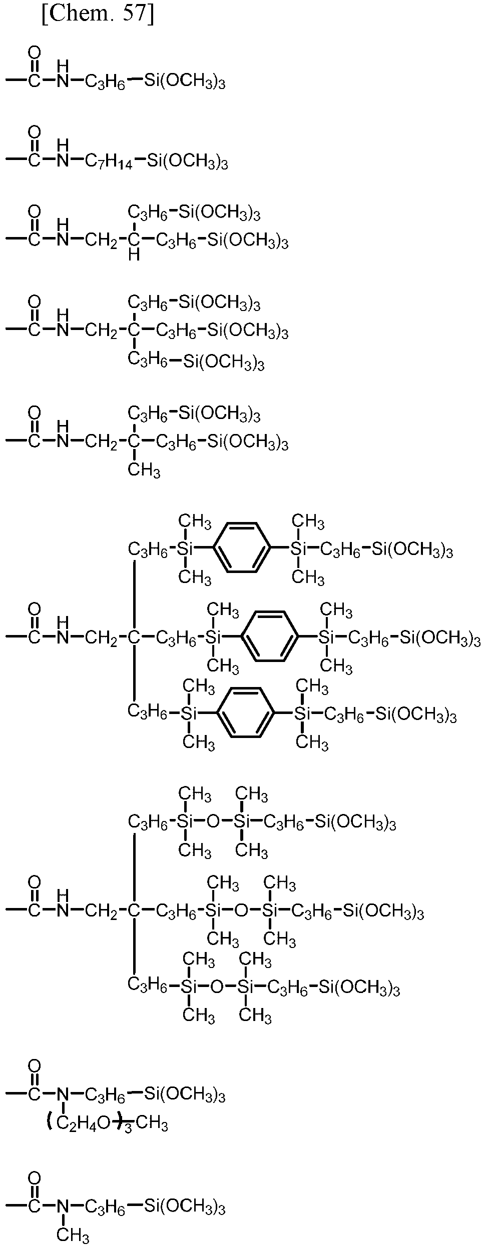

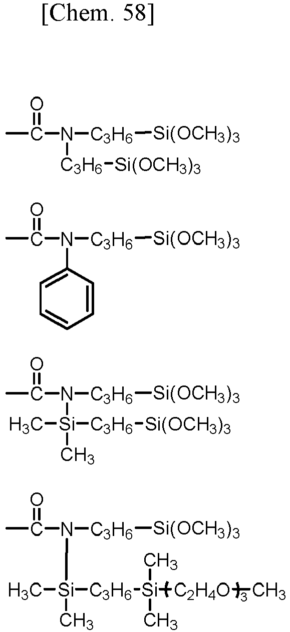

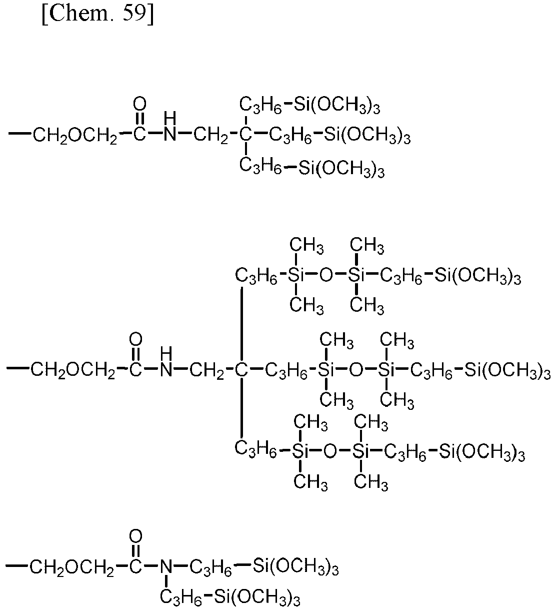

Examples of the fluorooxyalkylene group-containing polymer having the formula (7) include those shown below: 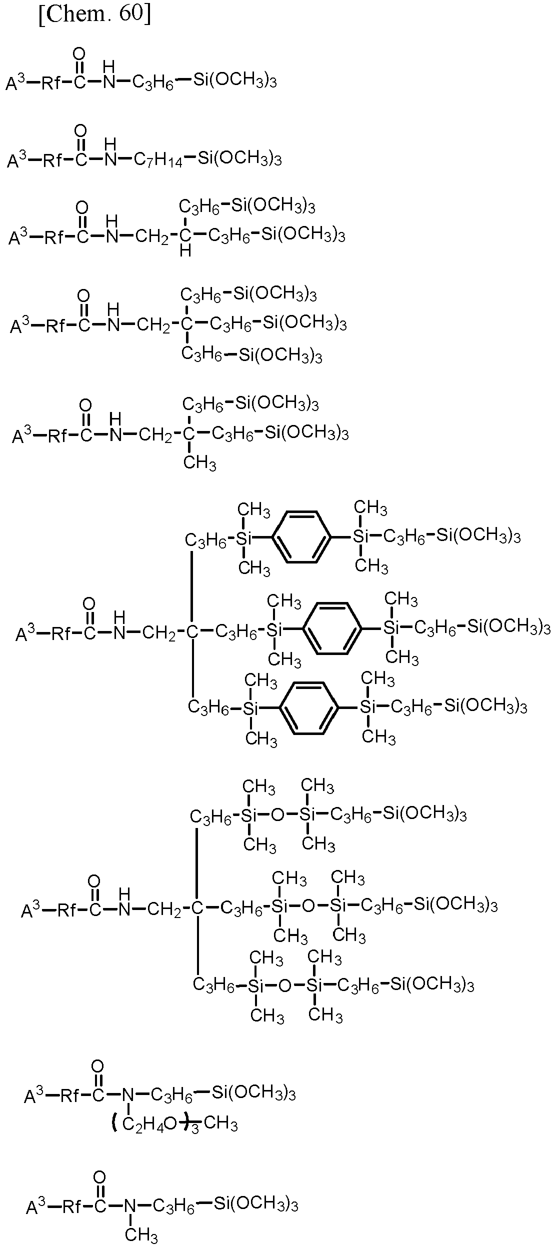 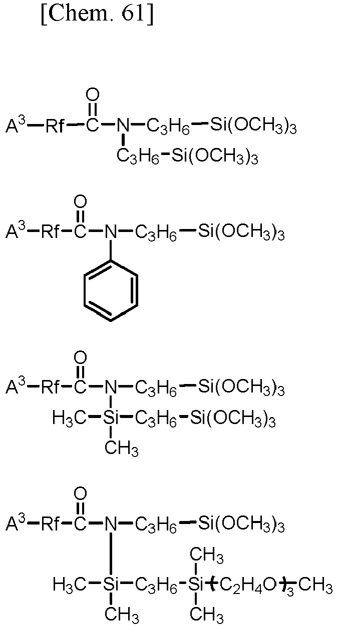 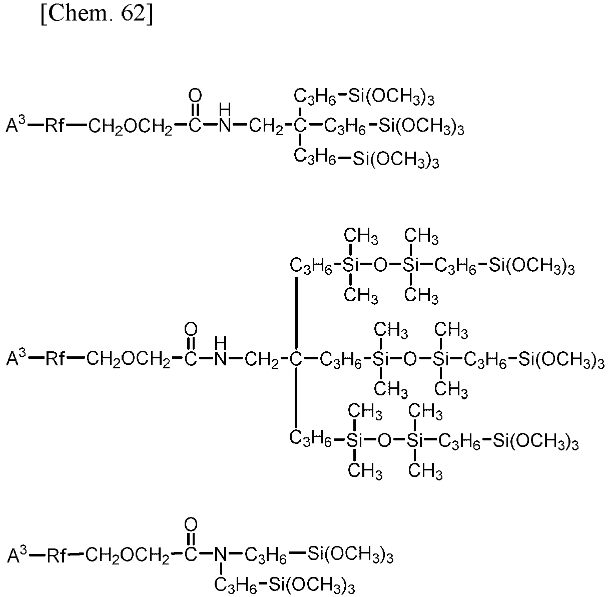 wherein A³ and Rf are the same as described above.

The surface treatment agent containing the fluorooxyalkylene group-containing polymers of the present invention may be a mixture further containing a fluorooxyalkylene group-containing polymer not containing a hydrolyzable silyl group having the following formula (10) (hereinafter, may be referred to as a polymer not containing a hydrolyzable silyl group or a non-functional polymer) in addition to the fluorooxyalkylene group-containing polymer containing at least one hydrolyzable silyl group and/or the partial hydrolytic condensate thereof described above (that is, a fluorooxyalkylene group-containing polymer composition). 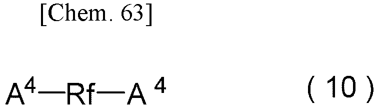 wherein Rf is the same as described above, and examples thereof may include those similar to those exemplified for Rf in formula (2), and A⁴ is independently a monovalent fluorine-containing hydrocarbon group having CF₃- or CF₂H- at the end, optionally containing an oxygen atom, -OR³, -COOR³ or -PO(OR³)₂ [wherein R³ is a hydrogen atom or a C₁-C₁₀ monovalent hydrocarbon group].

In formula (10), A⁴ is independently a monovalent fluorine-containing hydrocarbon group having CF₃- or CF₂H- at the end, optionally containing an oxygen atom, -OR³, -COOR³ or -PO(OR³)₂, and the monovalent fluorine-containing hydrocarbon group having CF₃- or CF₂H- at the end, optionally containing an oxygen atom is exemplified by those similar to those exemplified as the monovalent fluorine-containing hydrocarbon group having CF₃- or CF₂H- at the end of A¹ optionally containing an oxygen atom.

Here, R³ is a hydrogen atom or a C₁-C₁₀ monovalent hydrocarbon group, the monovalent hydrocarbon group is preferably a C₁-C₆ monovalent hydrocarbon group, and examples thereof include alkyl groups such as methyl, ethyl, propyl, butyl, pentyl, hexyl and octyl, alkenyl groups such as vinyl and allyl, aryl groups such as phenyl and tolyl, aralkyl groups such as benzyl and phenylethyl, and the like, and R³ is preferably a hydrogen atom, C₁-C₃ alkyl groups, and phenyl.

Examples of -OR³, -COOR³, -PO(OR³)₂ of A⁴ include -OH, -OCH₃, -OC₂H₅, -COOH, -COOCH₃, -COOC₂H₅, -PO(OH)₂, -PO(OCH₃)₂, and -PO(OC₂H₅)₂.

Examples of the polymer not containing a hydrolyzable silyl group having the formula (10) include the following polymers: 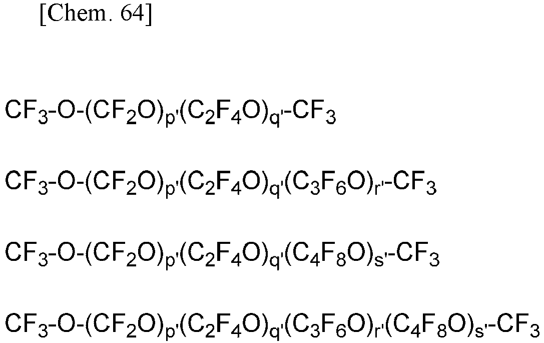 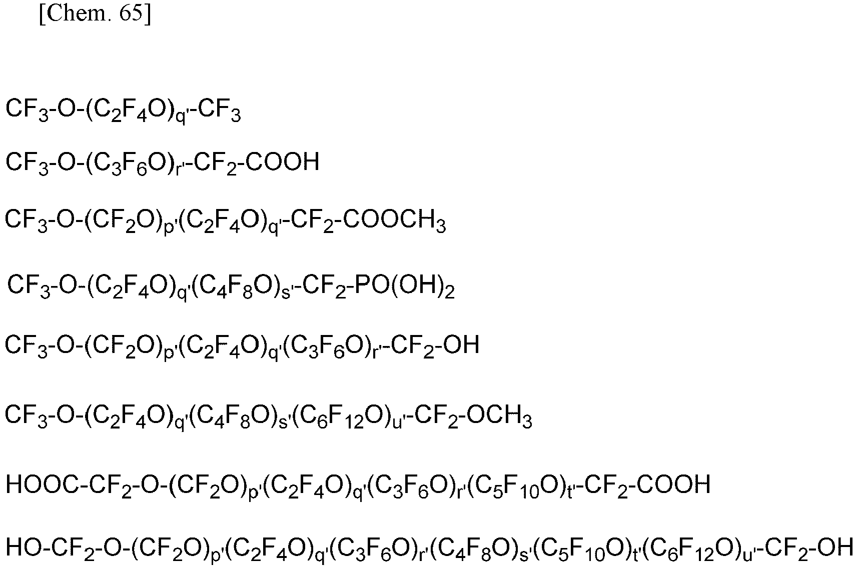 wherein p', q', r', s', t', u' and the sum of p', q', r', s', t' and u' are the same as above, each unit may be linear or branched, and individual repeating units within the parentheses with p', q', r', s', t' and u' may be randomly bonded.

The surface treatment agent of the present invention contains the fluorooxyalkylene group-containing polymer having at least one group having the following formula (1) at one or more ends of a molecule and/or the partial hydrolytic condensate thereof, or the fluorooxyalkylene group-containing polymer mixture containing the fluorooxyalkylene group-containing polymer and/or the partial hydrolytic condensate thereof, described above, and typically contains at least one fluorooxyalkylene group-containing polymer having at least one, preferably at least two, hydrolyzable silyl groups at an end of the molecular chain having the formula (2), (4), or (7) and/or a partial hydrolytic condensate thereof (one-terminal modified polymer), or at least one fluorooxyalkylene group-containing polymer having at least one, preferably at least two, hydrolyzable silyl groups at both ends of the molecular chain having the formula (2), (4), or (7), and/or a partial hydrolytic condensate thereof (both-terminal modified polymer), or a mixture containing at least one of the one-terminal modified polymers and at least one of the both-terminal modified polymers, or further contains a mixture containing a polymer not containing the hydrolyzable silyl group (a fluorooxyalkylene group-containing polymer composition) in any of these.

In the fluorooxyalkylene group-containing polymer mixture (fluorooxyalkylene group-containing polymer composition) contained in the surface treatment agent of the present invention, the mixing ratio of the one-terminal modified polymer and/or the both-terminal modified polymer and the polymer not containing a hydrolyzable silyl group is not particularly limited, but it is typically desirable that the ratio of the polymer not containing a hydrolyzable silyl group is 0 to 30 mol%, and particularly 0 to 10 mol%, per the entire fluorooxyalkylene group-containing polymer composition including the one-terminal modified polymer and/or the both-terminal modified polymer and the polymer not containing a hydrolyzable silyl group.

In the surface treatment agent of the present invention, the molecular weight distribution of the fluorooxyalkylene group-containing polymer and/or the partial hydrolytic condensate thereof or the fluorooxyalkylene group-containing polymer composition may be in the range of 1.2 to 1.8, preferably 1.20 to 1.80, more preferably 1.22 to 1.70, and further preferably 1.25 to 1.65.

In the surface treatment agent of the present invention, the numerical average molecular weight of the fluorooxyalkylene group-containing polymer and/or the partial hydrolytic condensate thereof or the fluorooxyalkylene group-containing polymer composition is preferably in the range of 1,000 to 20,000. The numerical average molecular weight is more preferably 2,000 to 10,000, further preferably 2,500 to 9,000, and particularly preferably 3,000 to 8,000, from the viewpoint of being capable of forming a film excellent in water/oil-repellent property and scratch resistance.

The fluorooxyalkylene group-containing polymer having the molecular weight distribution and/or the numerical average molecular weight and/or the partial hydrolytic condensate thereof or the fluorooxyalkylene group-containing polymer composition can be obtained by rectifying or molecular distilling a composition containing a mixture of the one-terminal modified polymer and/or the both-terminal modified polymer and the polymer not containing a hydrolyzable silyl group, and/or a partial hydrolytic condensate of these polymers.

The fluorooxyalkylene group-containing polymer having the molecular weight distribution and/or the numerical average molecular weight and/or the partial hydrolytic condensate thereof or the fluorooxyalkylene group-containing polymer composition can also be prepared by previously allowing the fluorine compound used in synthesizing the fluorooxyalkylene group-containing polymer to have the molecular weight distribution and/or the numerical average molecular weight.

To the surface treatment agent of the present invention, a hydrolytic condensation catalyst may be added if necessary. Examples of the hydrolytic condensation catalysts include organotin compounds such as dibutyltin dimethoxide and dibutyltin dilaurate, organotitanium compounds such as tetra-n-butyl titanate, organic acids such as acetic acid, methanesulfonic acid, and fluorine modified carboxylic acids, and inorganic acids such as hydrochloric acid and sulfuric acid. Of these, acetic acid, tetra-n-butyl titanate, dibutyltin dilaurate, and fluorine-modified carboxylic acids are desirable. The amount added is a catalytic amount, and is typically 0.01 to 5 parts by weight, and particularly 0.1 to 1 weight by weight, per 100 parts by weight of the fluorooxyalkylene group-containing polymer containing at least one hydrolyzable silyl group and/or the partial hydrolytic condensate thereof.

Moreover, the surface treatment agent of the present invention may contain a solvent. The solvent is preferably a fluorine-modified aliphatic hydrocarbon solvent such as perfluoroheptane or perfluorooctane, a fluorine-modified olefin solvent such as methoxyperfluoroheptene, a fluorine-modified aromatic hydrocarbon solvent such as m-xylene hexafluoride, benzotrifluoride, or 1,3-trifluoromethylbenzene, a fluorine-modified ether solvent such as methyl perfluorobutyl ether, ethyl perfluorobutyl ether, or perfluoro(2-butyltetrahydrofuran), a fluorine-modified alkylamine solvent such as perfluorotributylamine or perfluorotripentylamine, a hydrocarbon solvent such as petroleum benzine, toluene, or xylene, a ketone solvent such as acetone, methyl ethyl ketone, or methyl isobutyl ketone. Among them, fluorine-modified solvents (referred to as fluorine-based solvents) are desirable for solubility and wettability, and 1,3-trifluoromethylbenzene, m-xylene hexafluoride, perfluoro(2-butyltetrahydrofuran), perfluorotributylamine, and ethyl perfluorobutyl ether are particularly preferable.

The solvents may be used in admixture of two or more, and it is preferred that the fluorooxyalkylene group-containing polymer and/or the partial hydrolytic condensate thereof be uniformly dissolved in the solvent. The optimum concentration of the fluorooxyalkylene group-containing polymer and/or the partial hydrolytic condensate thereof to be dissolved in the solvent may be appropriately selected according to the method of using the surface treatment agent, and is not limited. It is dissolved to be typically, 0.01 to 30 wt%, preferably 0.02 to 25 wt%, and more preferably 0.05 to 20 wt%.

The surface treatment agent may be applied to a substrate by any well-known techniques such as brush coating, dipping, spraying and evaporation. In the case of evaporation, the heating mode may be either resistance heating or EB heating and is not particularly limited. The curing temperature varies with a particular curing technique. For example, in the case of direct coating (brush coating, dipping or spraying), suitable curing conditions include a temperature of 25 to 150°C, particularly 25 to 120°C for 0.5 to 48 hours, particularly 12 to 24 hours. Also, when the agent is applied by evaporation, the curing temperature is preferably 25 to 150°C, particularly 25 to 120°C, for 0.5 to 48 hours, particularly 12 to 24 hours. Humid curing conditions are also useful.

The cured coating typically has a thickness of 5 to 30 nm, particularly 8 to 20 nm although the thickness depends on the type of substrate.

The substrate to be treated with the surface treatment agent is not particularly limited, and may be made of any desired materials including paper, fabric, metals, metal oxides, glass plates, plastics, ceramics, and quartz. The surface treatment agent of the present invention can impart water/oil-repellent property, surface slipperiness, low dynamic friction property, and scratch resistance to the substrate. In particular, the surface treatment agent is advantageously used for the treatment of SiO₂-deposited glass or quartz substrate.

In the present invention, a difference in haze value measured by a method in accordance with JIS K 7136 between a substrate and one having the substrate and a cured coating composed of a cured product of the surface treatment agent of the present invention formed thereon (that is, a value obtained by subtracting the haze value of only the substrate from the haze value of the substrate surface-treated with the cured coating composed of the cured product of the surface treatment agent of the present invention) is preferably 0.2 or less, and particularly preferably 0.15 or less. When the difference in haze value is 0.2 or less, a cured coating having good visibility and excellent abrasion resistance can be formed. The difference in haze value can be set to 0.2 or less by forming a cured coating using a fluorooxyalkylene group-containing polymer having at least two groups having the formula (1) at one or more ends of the molecule as the fluorooxyalkylene group-containing polymer used in the surface treatment agent of the present invention, and further using a surface treatment agent in which the molecular weight distribution of the fluorooxyalkylene group-containing polymer is a relatively wide molecular weight distribution within a specific range.

Examples of the article to be treated with the surface treatment agent of the present invention include glass, hard coat films, high hardness films, antireflection films, spectacle lenses, optical lenses, quartz substrates, and the like. In particular, it is useful as a treatment agent for forming a water/oil-repellent layer on the surface of tempered glass and glass subjected to antireflection treatment.

### EXAMPLES

Hereinafter, the present invention is described more specifically with reference to Synthesis Examples, Examples and Comparative Examples, but the present invention is not limited to the following Examples.

### [Method of measuring molecular weight distribution]

The fluorooxyalkylene group-containing polymer or fluorooxyalkylene group-containing polymer composition was measured using gel permeation chromatography (GPC), and the molecular weight distribution (the ratio of weight average molecular weight (Mw)/numerical average molecular weight (Mn)) was calculated. The measurement conditions are as follows.

### Measurement conditions

| | |
|---|---|
| Developing solvent: | hydrochlorofluorocarbon (HCFC)-225 |
| Flow rate: | 1 mL/min |
| Detector: | evaporative light scattering detector |
| Column: | TSKgel Multipore HXL-M manufactured by Tosoh Corporation Two columns of 7.8 mmϕ × 30 cm |
| Column temperature: | 35°C |
| Sample injection amount: | 100 µL (solution having a concentration of 0.1 wt%) |

### [Method of calculating numerical average molecular weight]

For the fluorooxyalkylene group-containing polymers or the fluorooxyalkylene group-containing polymer composition, the numerical average molecular weight (Mn) was calculated from the characteristic peak intensity ratio of ¹⁹F-NMR analysis.

### [Example 1-1]

A compound having the following formula (1a) and having a numerical average molecular weight of 4,000 and a molecular weight distribution of 1.32 (starting material) was used for the following synthesis.

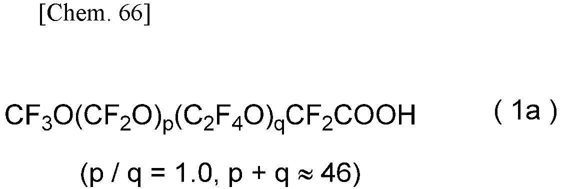

50 g of the compound having the formula (1a) as the starting material was dissolved in a mixed solvent of 5 g of 1,3-trifluoromethylbenzene and 20 g of methanol. After stirring the solution at 60°C for 4 hours, the lower layer was taken out, and the solvent was distilled off under reduced pressure to obtain 40 g of a liquid product. The obtained product was confirmed to be a compound having the following formula (1b) by ¹⁹F-NMR.

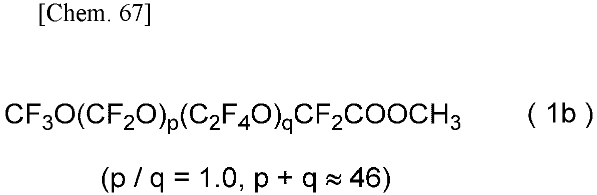

A reactor was charged with 40 g of the compound having the formula (1b), 36 g of allylmagnesium chloride, and 30 g of ASAHIKLIN AC6000 (manufactured by AGC Inc.), and the mixture was stirred at 60°C for 2 hours. Thereafter, an appropriate amount of hydrochloric acid was added thereto, and the mixture was stirred and then sufficiently washed with water. Further, the lower layer was taken out, and the solvent was distilled off under reduced pressure to obtain 30 g of a liquid product. The obtained product was confirmed to be a compound having the following formula (1c) by ¹⁹F-NMR and ¹H-NMR.

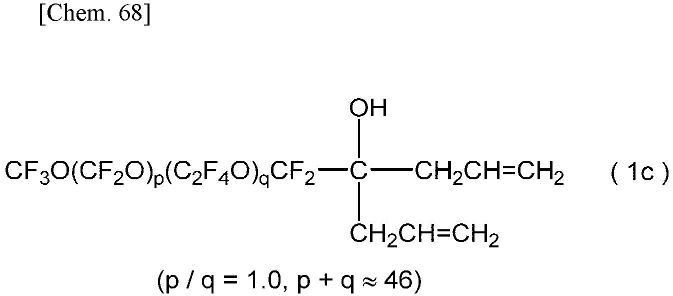

A reactor was charged with 30 g of the compound having the formula (1c), 15 g of 1,3-trifluoromethylbenzene, 2.4 g of trimethoxysilane, and 0.015 g of a toluene solution of chloroplatinic acid/vinylsiloxane complex (containing 4.5×10⁻⁸ mol as Pt alone), and the mixture was stirred at 80°C for 3 hours. Thereafter, the solvent and unreacted reactants were distilled off in vacuum, obtaining 25 g of a liquid product. The obtained product was confirmed to be a compound having the following formula (1d) by ¹H-NMR. The compound having the formula (1d) had a numerical average molecular weight of 4,400 and a molecular weight distribution of 1.32.

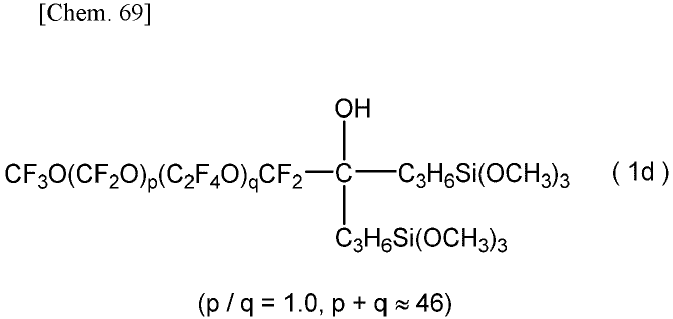

The product obtained above (fluoropolyether group-containing polymer) was dissolved in Novec 7200 (ethyl perfluorobutyl ether manufactured by 3M) so as to have a concentration of 20 wt%, thereby preparing surface treatment agent 1-1.

### [Example 1-2]

A mixture which was composed of 80 mol% of a compound having the following formula (2a-1) and 20 mol% of a compound having the following formula (2a-2) and had a numerical average molecular weight of 4,000 and a molecular weight distribution of 1.35 (starting material) was used for the following synthesis.

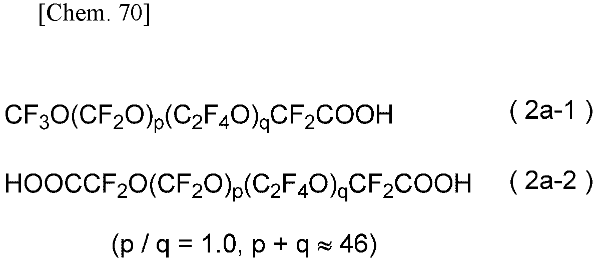

50 g of the mixture composed of 80 mol% of the compound having the formula (2a-1) and 20 mol% of the compound having the formula (2a-2) as the starting material was dissolved in a mixed solvent of 5 g of 1,3-trifluoromethylbenzene and 20 g of methanol. After stirring the solution at 60°C for 4 hours, the lower layer was taken out, and the solvent was distilled off under reduced pressure to obtain 40 g of a liquid product. The obtained product was confirmed to be a mixture composed of 80 mol% of a compound having the following formula (2b-1) and 20 mol% of a compound having the following formula (2b-2) by ¹⁹F-NMR.

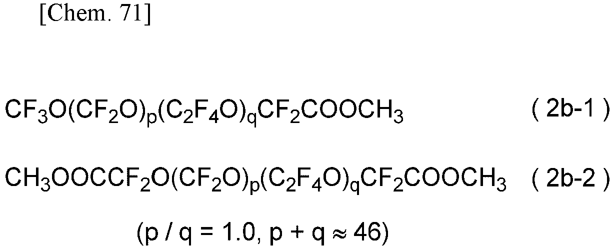

A reactor was charged with 40 g of the mixture composed of 80 mol% of the compound having the formula (2b-1) and 20 mol% of the compound having the formula (2b-2), 36 g of allylmagnesium chloride, and 30 g of AC6000, and the mixture was stirred at 60°C for 2 hours. Thereafter, an appropriate amount of hydrochloric acid was added thereto, and the mixture was stirred and then sufficiently washed with water. Further, the lower layer was taken out, and the solvent was distilled off under reduced pressure to obtain 30 g of a liquid product. The obtained product was confirmed to be a mixture composed of 80 mol% of a compound having the following formula (2c-1) and 20 mol% of a compound having the following formula (2c-2) by ¹⁹F-NMR and ¹H-NMR.

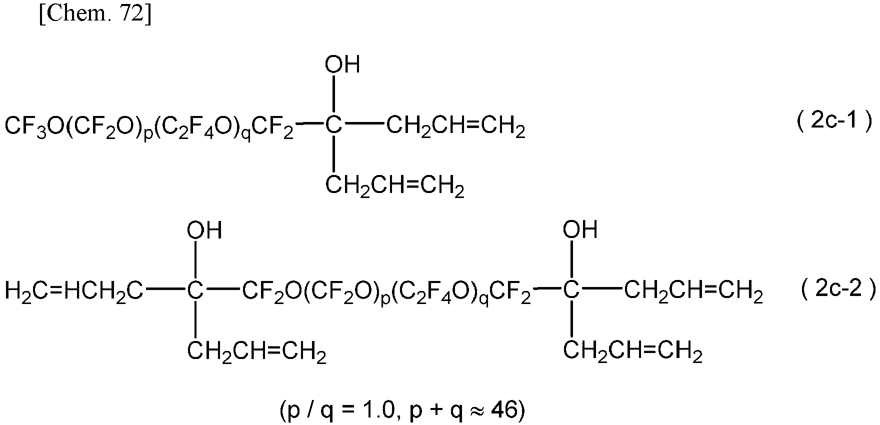

In a reactor, 30 g of the mixture composed of 80 mol% of the compound having the formula (2c-1) and 20 mol% of the compound having the formula (2c-2), 15 g of 1,3-trifluoromethylbenzene, 2.4 g of trimethoxysilane, and 0.015 g of a toluene solution of chloroplatinic acid/vinylsiloxane complex (containing 4.5×10⁻⁸ mol as Pt alone) were mixed, and the mixture was stirred at 80°C for 3 hours. Thereafter, the solvent and unreacted reactants were distilled off in vacuum, obtaining 25 g of a liquid product. The obtained product was confirmed to be a mixture composed of 80 mol% of a compound having the following formula (2d-1) and 20 mol% of a compound having the following formula (2d-2) by ¹H-NMR. The mixture composed of 80 mol% of the compound having the formula (2d-1) and 20 mol% of the compound having the formula (2d-2) had a numerical average molecular weight of 4,500 and a molecular weight distribution of 1.35.

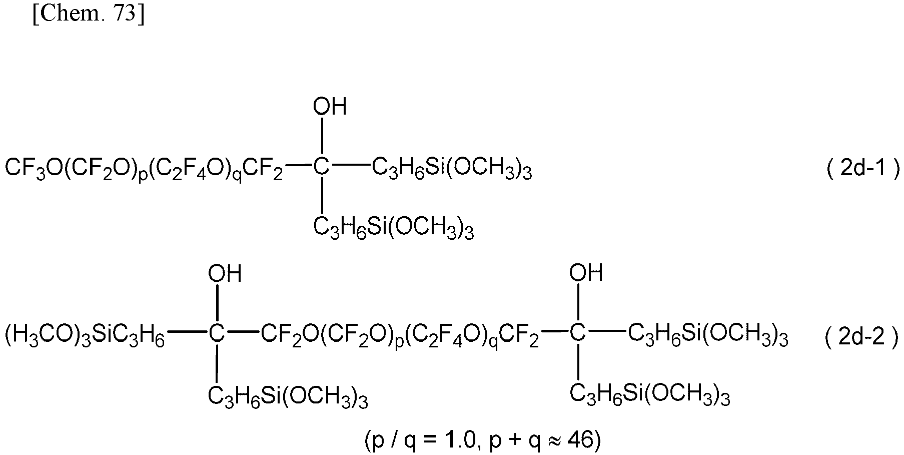

The mixture obtained above (fluoropolyether group-containing polymer) was dissolved in Novec 7200 so as to have a concentration of 20 wt%, thereby preparing surface treatment agent 1-2.

### [Example 1-3]

A mixture which was composed of 76 mol% of a compound having the following formula (3a-1), 19 mol% of a compound having the following formula (3a-2) and 5 mol% of a compound having the following formula (3a-3) and had a numerical average molecular weight of 4,000 and a molecular weight distribution of 1.37 (starting material) was used for the following synthesis.

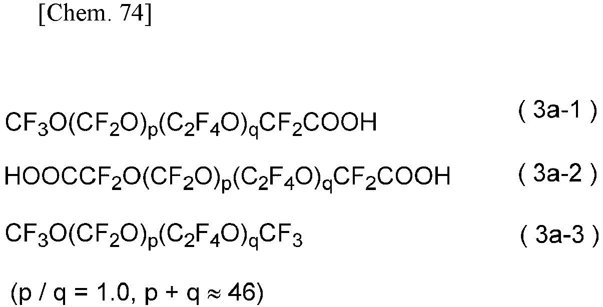

50 g of the mixture composed of 76 mol% of the compound having the formula (3a-1), 19 mol% of the compound having the formula (3a-2) and 5 mol% of the compound having the formula (3a-3) as the starting material was dissolved in a mixed solvent of 5 g of 1,3-trifluoromethylbenzene and 20 g of methanol. After stirring the solution at 60°C for 4 hours, the lower layer was taken out, and the solvent was distilled off under reduced pressure to obtain 40 g of a liquid product. The obtained product was confirmed to be a mixture composed of 76 mol% of a compound having the following formula (3b-1), 19 mol% of a compound having the following formula (3b-2) and 5 mol% of a compound having the following formula (3b-3) by ¹⁹F-NMR.

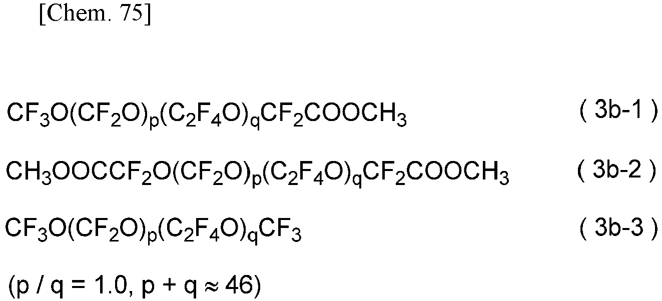

A reactor was charged with 40 g of the mixture composed of 76 mol% of the compound having the formula (3b-1), 19 mol% of the compound having the formula (3b-2) and 5 mol% of the compound having the formula (3b-3), 36 g of allylmagnesium chloride and 30 g of AC6000, and the mixture was stirred at 60°C for 2 hours. Thereafter, an appropriate amount of hydrochloric acid was added thereto, and the mixture was stirred and then sufficiently washed with water. Further, the lower layer was taken out, and the solvent was distilled off under reduced pressure to obtain 30 g of a liquid product. The obtained product was confirmed to be a mixture composed of 76 mol% of a compound having the following formula (3c-1), 19 mol% of a compound having the following formula (3c-2) and 5 mol% of a compound having the following formula (3c-3) by ¹⁹F-NMR and ¹H-NMR.

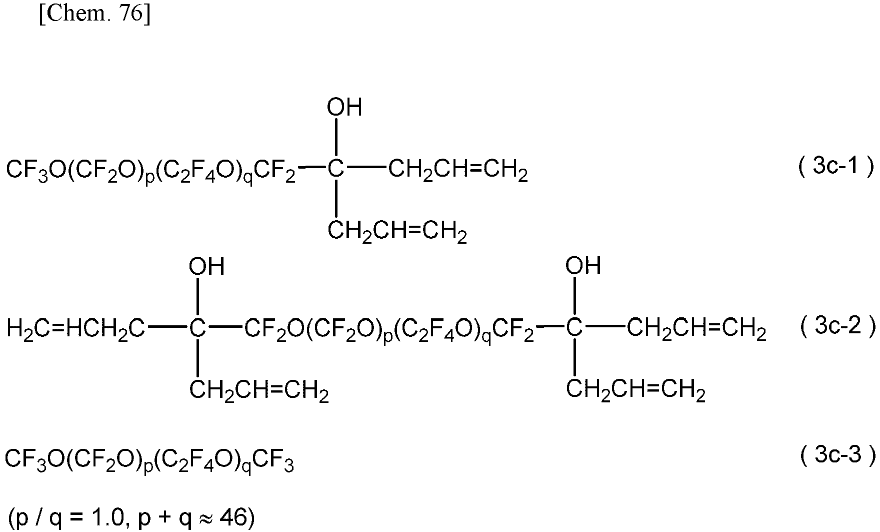

In a reactor, 30 g of the mixture composed of 76 mol% of the compound having the formula (3c-1), 19 mol% of the compound having the formula (3c-2) and 5 mol% of the compound having the formula (3c-3), 15 g of 1,3-trifluoromethylbenzene, 2.4 g of trimethoxysilane, and 0.015 g of a toluene solution of chloroplatinic acid/vinylsiloxane complex (containing 4.5×10⁻⁸ mol as Pt alone) were mixed, and the mixture was stirred at 80°C for 3 hours. Thereafter, the solvent and unreacted reactants were distilled off in vacuum, obtaining 25 g of a liquid product. The obtained product was confirmed to be a mixture composed of 76 mol% of a compound having the following formula (3d-1), 19 mol% of a compound having the following formula (3d-2) and 5 mol% of a compound having the following formula (3d-3) by ¹H-NMR. The mixture composed of 76 mol% of the compound having the formula (3d-1), 19 mol% of the compound having the formula (3d-2) and 5 mol% of the compound having the formula (3d-3) had a numerical average molecular weight of 4,400 and a molecular weight distribution of 1.37.

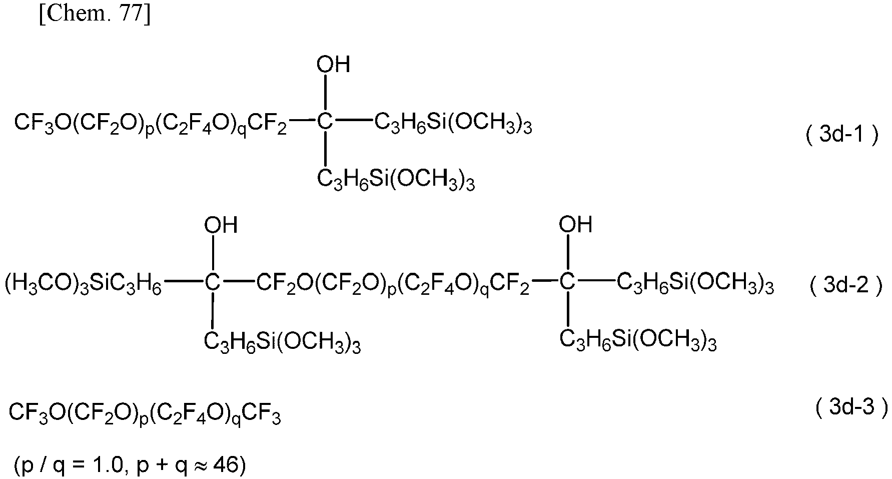

The mixture obtained above (fluoropolyether group-containing polymer) was dissolved in Novec 7200 so as to have a concentration of 20 wt%, thereby preparing surface treatment agent 1-3.

### [Example 1-4]

30 g of the compound having the formula (1c) in Example 1-1, 30 g of 1,3-trifluoromethylbenzene, 2.7 g of allyl bromide, and 0.06 g of tetrabutyl ammonium iodide were mixed. Subsequently, 2.4 g of potassium hydroxide was added thereto, and then the mixture was stirred at 60°C for 11 hours. Thereafter, an appropriate amount of hydrochloric acid was added thereto, and the mixture was stirred and then sufficiently washed with water. Further, the lower layer was taken out, and the solvent was distilled off to obtain 28 g of a liquid product. The obtained product was confirmed to be a compound having the following formula (4a) by ¹⁹F-NMR and ¹H-NMR.

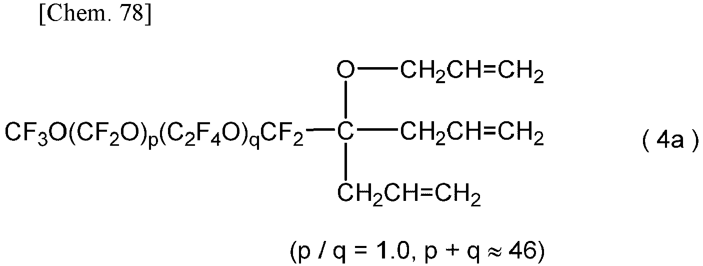

25 g of the compound having the formula (4a), 15 g of 1,3-trifluoromethylbenzene, 3.6 g of trimethoxysilane, and 0.023 g of a toluene solution of chloroplatinic acid/vinylsiloxane complex (containing 4.5 × 10⁻⁸ mol as Pt alone) were mixed, and the mixture was stirred at 80°C for 3 hours. Thereafter, the solvent and unreacted reactants were distilled off in vacuum, obtaining 23 g of a liquid product. The obtained product was confirmed to be a compound having the following formula (4b) by ¹H-NMR. The compound having the formula (4b) had a numerical average molecular weight of 4,500 and a molecular weight distribution of 1.32.

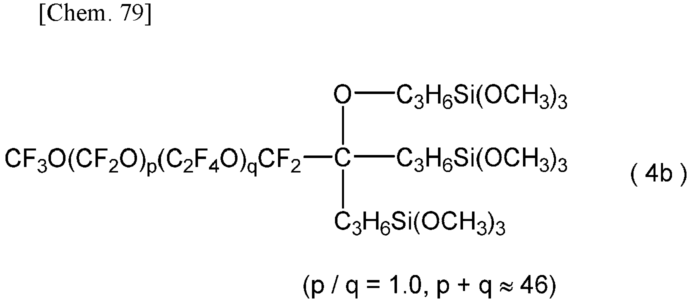

The product obtained above (fluoropolyether group-containing polymer) was dissolved in Novec 7200 so as to have a concentration of 20 wt%, thereby preparing surface treatment agent 1-4.

### [Example 1-5]

30 g of the compound having the formula (1c) in Example 1-1, 30 g of 1,3-trifluoromethylbenzene, 7.8 g of diethylene glycol 2-bromoethyl methyl ether, and 0.07 g of tetrabutylammonium iodide were mixed. Subsequently, 6.2 g of potassium hydroxide was added thereto, and then the mixture was aged at 60°C for 11 hours. Thereafter, an appropriate amount of hydrochloric acid was added thereto, and the mixture was stirred and then sufficiently washed with water. Further, the lower layer was taken out, and the solvent was distilled off under reduced pressure to obtain 28 g of a liquid product. The obtained product was confirmed to be a compound having the following formula (5a) by ¹⁹F-NMR and ¹H-NMR.

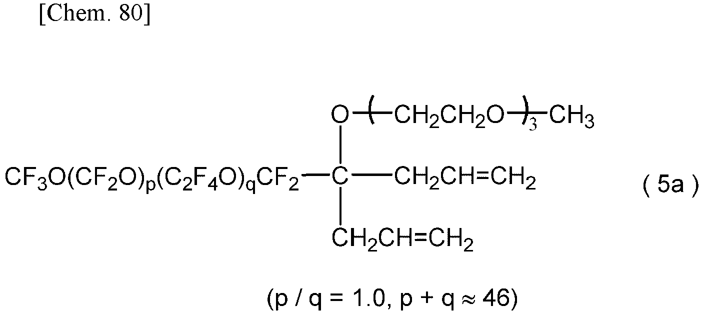

25 g of the compound having the formula (5a), 15 g of 1,3-trifluoromethylbenzene, 2.4 g of trimethoxysilane, and 0.015 g of a toluene solution of chloroplatinic acid/vinylsiloxane complex (containing 2.5×10⁻⁸ mol as Pt alone) were mixed, and the mixture was stirred at 80°C for 3 hours. Thereafter, the solvent and unreacted reactants were distilled off in vacuum, obtaining 23 g of a liquid product. The obtained product was confirmed to be a compound having the following formula (5b) by ¹H-NMR. The compound having the formula (5b) had a numerical average molecular weight of 4,400 and a molecular weight distribution of 1.32.

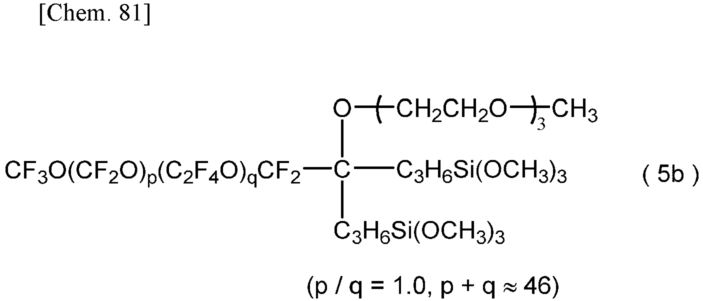

The product obtained above (fluoropolyether group-containing polymer) was dissolved in Novec 7200 so as to have a concentration of 20 wt%, thereby preparing surface treatment agent 1-5.

### [Example 1-6]

A compound having the following formula (6a) and having a numerical average molecular weight of 6,000 and a molecular weight distribution of 1.45 (starting material) was used for the following synthesis.

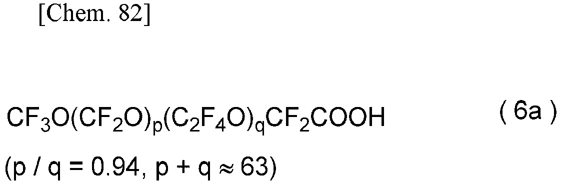

50 g of the compound having the formula (6a) as the starting material was dissolved in a mixed solvent of 40 g of AC6000 and 20 g of methanol. After stirring the solution at 60°C for 11 hours, the lower layer was taken out, and the solvent was distilled off under reduced pressure to obtain 40 g of a liquid product. The obtained product was confirmed to be a compound having the following formula (6b) by ¹⁹F-NMR.

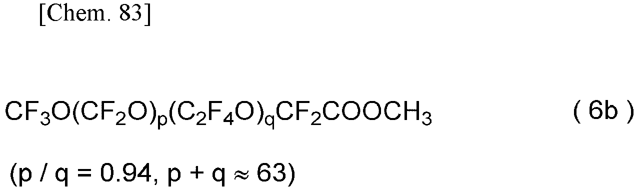

A reactor was charged with 40 g of the compound having the formula (6b), 40 g of allylmagnesium chloride, 41 g of AC6000, and 54 g of PF5060 (manufactured by 3M), and the mixture was stirred at 50°C for 2 hours. Thereafter, an appropriate amount of hydrochloric acid was added thereto, and the mixture was stirred and then sufficiently washed with water. Further, the lower layer was taken out, and the solvent was distilled off under reduced pressure to obtain 30 g of a liquid product. The obtained product was confirmed to be a compound having the following formula (6c) by ¹⁹F-NMR and ¹H-NMR.

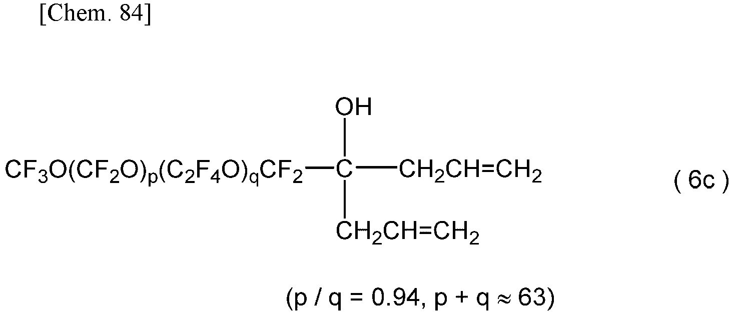

30 g of the compound having the formula (6c), 15 g of AC6000, 2.4 g of trimethoxysilane, and 0.015 g of a toluene solution of chloroplatinic acid/vinylsiloxane complex (containing 4.5 × 10⁻⁸ mol as Pt alone) were mixed, and the mixture was stirred at 80°C for 3 hours. Thereafter, the solvent and unreacted reactants were distilled off in vacuum, obtaining 25 g of a liquid product. The obtained product was confirmed to be a compound having the following formula (6d) by ¹H-NMR. The compound having the formula (6d) had a numerical average molecular weight of 6,400 and a molecular weight distribution of 1.45.

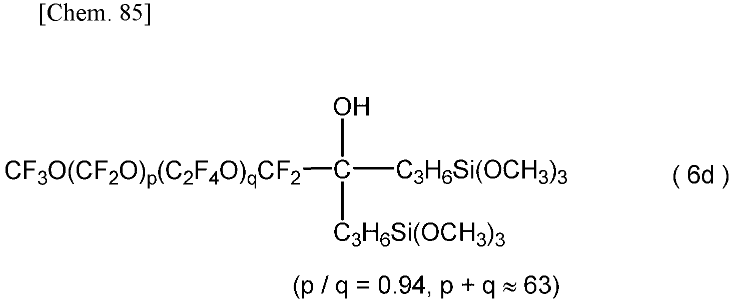

The product obtained above (fluoropolyether group-containing polymer) was dissolved in Novec 7200 so as to have a concentration of 20 wt%, thereby preparing surface treatment agent 1-6.

### [Example 1-7]

A compound having the following formula (7a) and having a numerical average molecular weight of 9,000 and a molecular weight distribution of 1.53 (starting material) was used for the following synthesis.

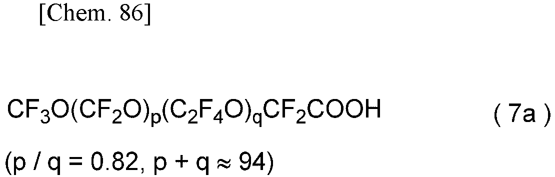

50 g of the compound having the formula (7a) as the starting material was dissolved in a mixed solvent of 40 g of AC6000 and 20 g of methanol. After stirring the solution at 60°C for 11 hours, the lower layer was taken out, and the solvent was distilled off under reduced pressure to obtain 40 g of a liquid product. The obtained product was confirmed to be a compound having the following formula (7b) by ¹⁹F-NMR.

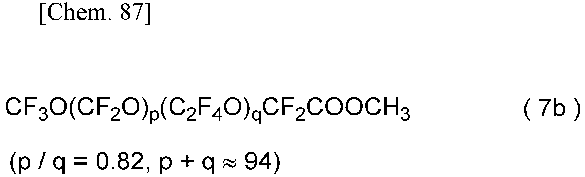

A reactor was charged with 40 g of the compound having the formula (7b), 40 g of allylmagnesium chloride, 41 g of AC6000, and 54 g of PF5060, and the mixture was stirred at 50°C for 2 hours. Thereafter, an appropriate amount of hydrochloric acid was added thereto, and the mixture was stirred and then sufficiently washed with water. Further, the lower layer was taken out, and the solvent was distilled off under reduced pressure to obtain 30 g of a liquid product. The obtained product was confirmed to be a compound having the following formula (7c) by ¹⁹F-NMR and ¹H-NMR.

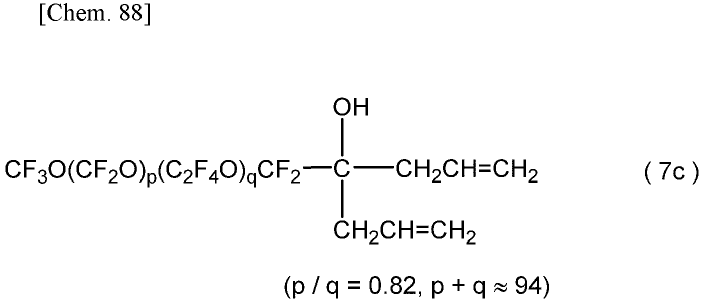

30 g of the compound having the formula (7c), 15 g of AC6000, 2.4 g of trimethoxysilane, and 0.015 g of a toluene solution of chloroplatinic acid/vinylsiloxane complex (containing 4.5 × 10⁻⁸ mol as Pt alone) were mixed, and the mixture was stirred at 80°C for 3 hours. Thereafter, the solvent and unreacted reactants were distilled off in vacuum, obtaining 25 g of a liquid product. The obtained product was confirmed to be a compound having the following formula (7d) by ¹H-NMR. The compound having the formula (7d) had a numerical average molecular weight of 9,400 and a molecular weight distribution of 1.53.

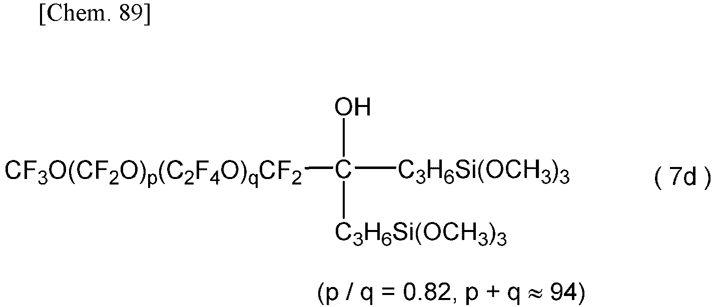

The product obtained above (fluoropolyether group-containing polymer) was dissolved in Novec 7200 so as to have a concentration of 20 wt%, thereby preparing surface treatment agent 1-7.

### [Example 1-8]

A compound having the following formula (8a) and having a numerical average molecular weight of 4,000 and a molecular weight distribution of 1.32 (starting material) was used for the following synthesis.

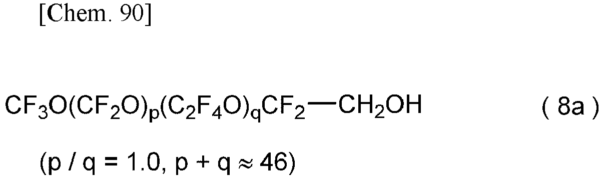

A reactor was charged with 50 g of the compound having the formula (8a) as the starting material, 8.5 g of allyl bromide, 1.0 g of tetrabutylammonium hydrogen sulfate, and 7.0 g of a 30 wt% aqueous sodium hydroxide solution, and the mixture was stirred at 60°C for 11 hours. Thereafter, an appropriate amount of hydrochloric acid was added thereto, and the mixture was stirred and then sufficiently washed. Further, the lower layer was taken out, and the solvent was distilled off under reduced pressure to obtain 40 g of a liquid product. The obtained product was confirmed to be a compound having the following formula (8b) by ¹⁹F-NMR and ¹H-NMR.

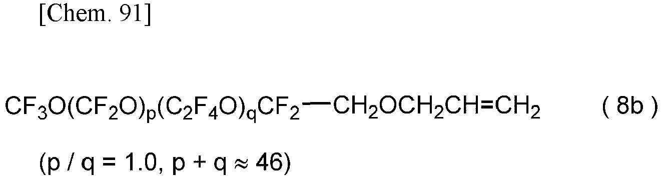

40 g of the compound having the formula (8b), 8 g of 1,3-trifluoromethylbenzene, 7.0 g of 1,4-phenylenebisdimethylsilane, and 0.015 g of a toluene solution of chloroplatinic acid/vinylsiloxane complex (containing 4.5×10⁻⁸ mol as Pt alone) were mixed, and the mixture was stirred at 80°C for 5 hours. Thereafter, the solvent and unreacted reactants were distilled off in vacuum, obtaining 35 g of a liquid product. The obtained product was confirmed to be a compound having the following formula (8c) by ¹H-NMR.

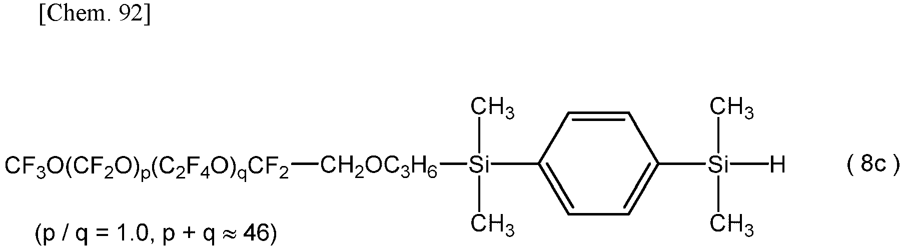

30 g of the compound having the formula (8c), 8 g of 1,3-trifluoromethylbenzene, 1.8 g of vinyltrimethoxysilane and 0.015 g of a toluene solution of chloroplatinic acid/vinylsiloxane complex (containing 4.5×10⁻⁸ mol as Pt alone) were stirred at 80°C for 5 hours. Thereafter, the solvent and unreacted reactants were distilled off in vacuum, obtaining 25 g of a liquid product. The obtained product was confirmed to be a compound having the following formula (8d) by 1H-NMR. The compound having the formula (8d) had a numerical average molecular weight of 4,400 and a molecular weight distribution of 1.32.

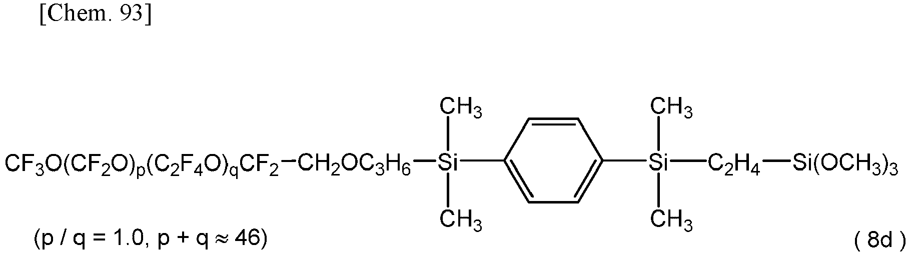

The product obtained above (fluoropolyether group-containing polymer) was dissolved in Novec 7200 so as to have a concentration of 20 wt%, thereby preparing surface treatment agent 1-8.

### [Example 1-9]

30 g of the compound having the formula (1b) in Example 1-1, 10 g of 1,3-trifluoromethylbenzene and 6.0 g of 2,2-diallyl-4-penten-1-amine were stirred at 50°C for 5 hours. Thereafter, the solvent and unreacted reactants were distilled off in vacuum, obtaining 25 g of a liquid product. The obtained product was confirmed to be a compound having the following formula (9a) by ¹H-NMR.

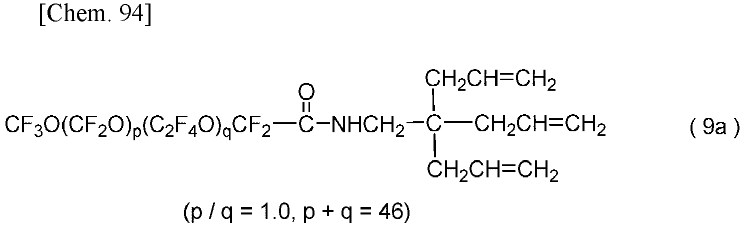

25 g of the compound having the formula (9a), 10 g of 1,3-trifluoromethylbenzene, 2.0 g of trimethoxysilane, and 0.015 g of a toluene solution of chloroplatinic acid/vinylsiloxane complex (containing 4.5×10⁻⁸ mol as Pt alone) were mixed, and the mixture was aged at 80°C for 3 hours. Thereafter, the solvent and unreacted reactants were distilled off in vacuum, obtaining 25 g of a liquid product. The obtained product was confirmed to be a compound having the following formula (9b) by ¹H-NMR. The compound having the formula (9b) had a numerical average molecular weight of 4,600 and a molecular weight distribution of 1.32.

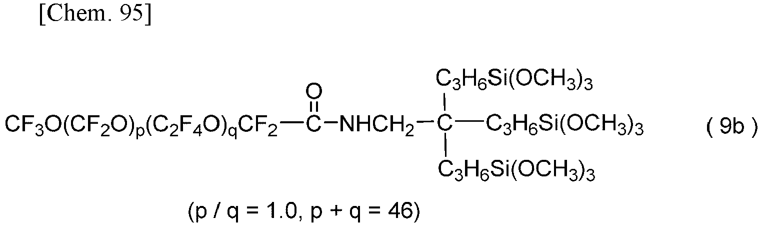

The product obtained above (fluoropolyether group-containing polymer) was dissolved in Novec 7200 so as to have a concentration of 20 wt%, thereby preparing surface treatment agent 1-9.

### [Comparative Example 1-1]

The same procedure as in Example 1-1 was carried out except for using a compound having the formula (1a) and having a numerical average molecular weight of 4,000 and a molecular weight distribution of 1.02 as a starting material in place of the compound having the formula (1a) and having a numerical average molecular weight of 4,000 and a molecular weight distribution of 1.32 as the starting material in Example 1-1 to produce a compound composed only of a compound having the following formula (10a) and having a numerical average molecular weight of 4,400 and a molecular weight distribution of 1.02, and the compound was dissolved in Novec 7200 so as to have a concentration of 20 wt%, thereby preparing surface treatment agent 1-10.

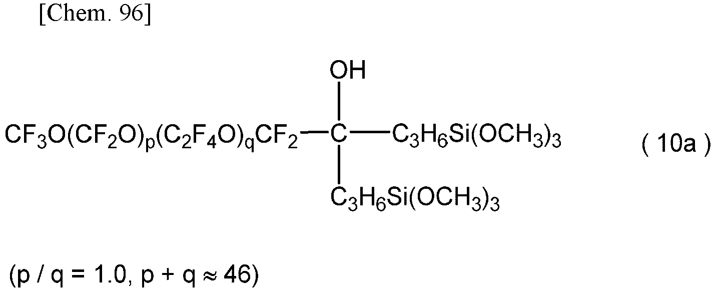

### [Comparative Example 1-2]

The same procedure as in Example 1-2 was carried out except for using a mixture composed of 80 mol% of the compound having the formula (2a-1) and 20 mol% of the compound having the formula (2a-2) and having a numerical average molecular weight of 4,000 and a molecular weight distribution of 1.05 as a starting material in place of the mixture composed of 80 mol% of the compound having the formula (2a-1) and 20 mol% of the compound having the formula (2a-2) and having a numerical average molecular weight of 4,000 and a molecular weight distribution of 1.35 as the starting material in Example 1-2 to produce a mixture composed of 80 mol% of the compound having the following formula (11a-1) and 20 mol% of the compound having the following formula (1 1a-2) and having a numerical average molecular weight of 4,500 and a molecular weight distribution of 1.05, and the mixture was dissolved in Novec 7200 so as to have a concentration of 20 wt%, thereby preparing surface treatment agent 1-11.

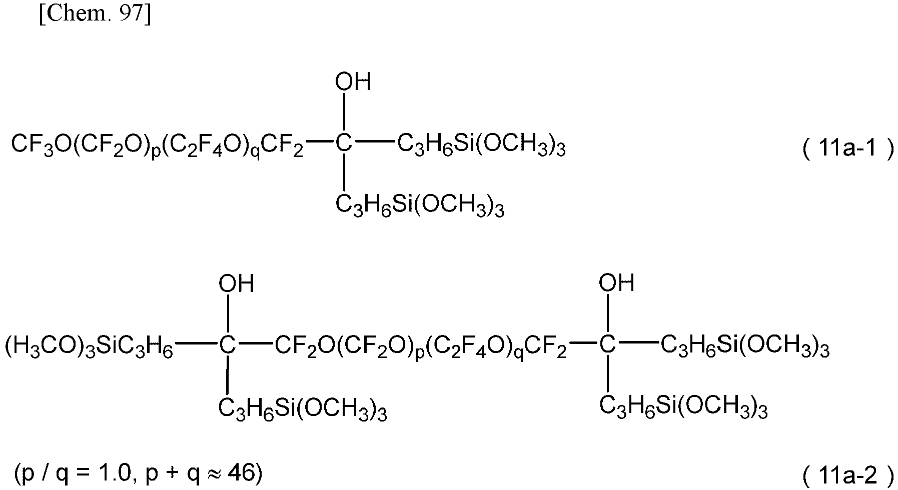

### [Comparative Example 1-3]

The same procedure as in Example 1-1 was carried out except for using a compound having the formula (1a) and having a numerical average molecular weight of 4,000 and a molecular weight distribution of 1.07 as a starting material in place of the compound having the formula (1a) and having a numerical average molecular weight of 4,000 and a molecular weight distribution of 1.32 as the starting material in Example 1-1 to prepare a compound having the formula (1c), the same procedure as in Example 1-5 was carried out except for using the compound as an intermediate material to produce a compound composed only of a compound having the following formula (12a) and having a numerical average molecular weight of 4,400 and a molecular weight distribution of 1.07, and the compound was dissolved in Novec 7200 so as to have a concentration of 20 wt%, thereby preparing surface treatment agent 1-12.

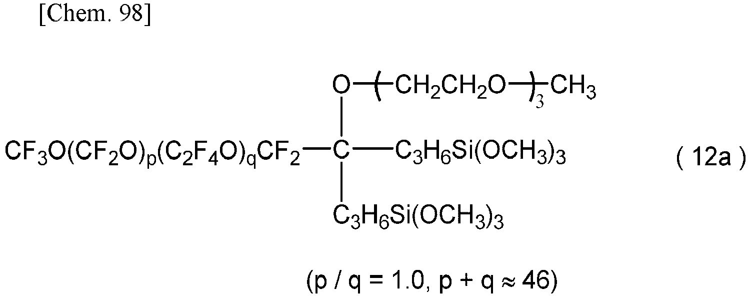

### [Comparative Example 1-4]

The same procedure as in Example 1-6 was carried out except for using a compound having the formula (6a) and having a numerical average molecular weight of 6,000 and a molecular weight distribution of 1.07 as a starting material in place of the compound having the formula (6a) and having a numerical average molecular weight of 6,000 and a molecular weight distribution of 1.45 as the starting material in Example 1-6 to produce a compound composed only of a compound having the following formula (13a) and having a numerical average molecular weight of 6,400 and a molecular weight distribution of 1.07, and the compound was dissolved in Novec 7200 so as to have a concentration of 20 wt%, thereby preparing surface treatment agent 1-13.

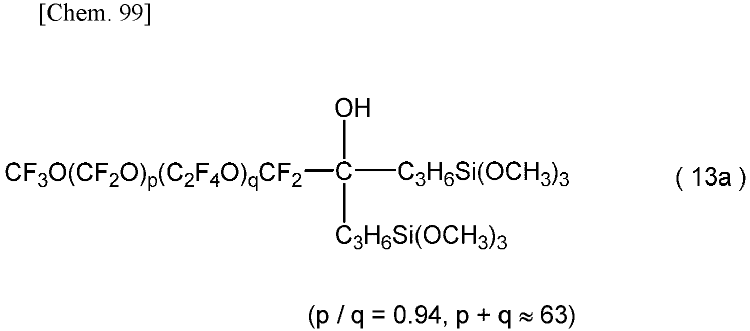

### [Preparation of cured film]

Onto a chemically strengthened glass (50 mm×100 mm) (Gorilla 5 manufactured by Corning) having an outermost surface evaporated with SiO₂ of 10 to 12 nm, 5 µl of each surface treatment agent was deposited by vacuum evaporation under conditions including pressure 2.0×10⁻² Pa and heating temperature 700°C. The deposit was cured in an atmosphere of 80°C and humidity of 80% for 12 hours, obtaining a cured coating of 10 nm thick.

For each of the obtained cured coatings, water fall angle was measured by the following method. The results are shown in Table 1.

### [Measurement of water fall angle]

Using a contact angle meter Drop Master (Kyowa Interface Science Co., Ltd.), the cured coating on glass was measured for a fall angle with water as an index of water repellency (droplet 20 µl, temperature 25°C, humidity 40%).

**[Table 1]**

| | | Molecular weight distribution | Numerical average molecular weight | Water fall angle (°) |
|---|---|---|---|---|
| Example 1-1 | Surface treatment agent 1-1 | 1.32 | 4,400 | 7 |
| Example 1-2 | Surface treatment agent 1-2 | 1.35 | 4,500 | 6 |
| Example 1-3 | Surface treatment agent 1-3 | 1.37 | 4,400 | 5 |
| Example 1-4 | Surface treatment agent 1-4 | 1.32 | 4,500 | 10 |
| Example 1-5 | Surface treatment agent 1-5 | 1.32 | 4,400 | 12 |
| Example 1-6 | Surface treatment agent 1-6 | 1.45 | 6,400 | 5 |
| Example 1-7 | Surface treatment agent 1-7 | 1.53 | 9,400 | 5 |
| Example 1-8 | Surface treatment agent 1-8 | 1.32 | 4,400 | 9 |
| Example 1-9 | Surface treatment agent 1-9 | 1.32 | 4,600 | 12 |
| Comparative Example 1-1 | Surface treatment agent 1-10 | 1.02 | 4,400 | 23 |
| Comparative Example 1-2 | Surface treatment agent 1-11 | 1.05 | 4,500 | 28 |
| Comparative Example 1-3 | Surface treatment agent 1-12 | 1.07 | 4,400 | 35 |
| Comparative Example 1-4 | Surface treatment agent 1-13 | 1.07 | 6,400 | 24 |

The surface treatment agents of Examples 1-1 to 1-9 containing the fluoropolyether group-containing polymer having a relatively wide molecular weight distribution in the specific range of the present invention had a molecular weight distribution wider than that of the fluoropolyether group-containing polymer contained in the surface treatment agents of Comparative Examples 1-1 to 1-4, so that the water fall angle was reduced.

### [Synthesis Example 1]

A compound having the following formula (1A) and having a numerical average molecular weight of 4,000 and a molecular weight distribution of 1.02 (starting material) was used for the following synthesis.

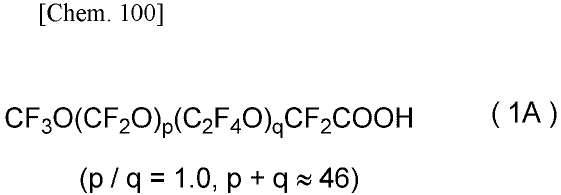

50 g of the compound having the formula (1A) as the starting material was dissolved in a mixed solvent of 5 g of 1,3-trifluoromethylbenzene and 20 g of methanol. After stirring the solution at 60°C for 4 hours, the lower layer was taken out, and the solvent was distilled off under reduced pressure to obtain 40 g of a liquid product. The obtained product was confirmed to be a compound having the following formula (1B) by ¹⁹F-NMR.

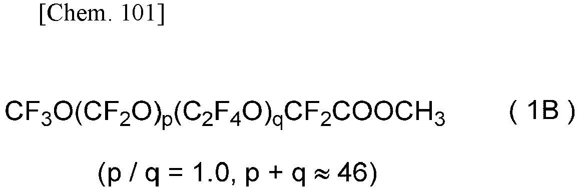

A reactor was charged with 40 g of the compound having the formula (1B), 36 g of allylmagnesium chloride, and 30 g of ASAHIKLIN AC6000 (manufactured by AGC Inc.), and the mixture was stirred at 60°C for 2 hours. Thereafter, an appropriate amount of hydrochloric acid was added thereto, and the mixture was stirred and then sufficiently washed with water. Further, the lower layer was taken out, and the solvent was distilled off under reduced pressure to obtain 30 g of a liquid product. The obtained product was confirmed to be a compound having the following formula (1C) by ¹⁹F-NMR and ¹H-NMR.

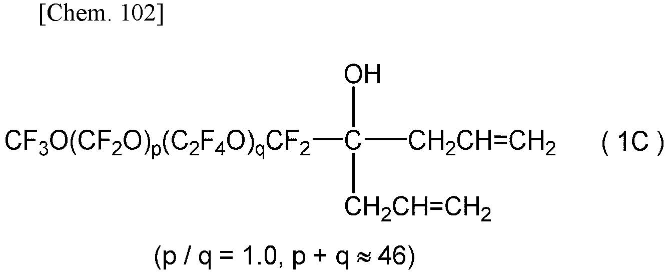

A reactor was charged with 30 g of the compound having the formula (1C), 15 g of 1,3-trifluoromethylbenzene, 2.4 g of trimethoxysilane, and 0.015 g of a toluene solution of chloroplatinic acid/vinylsiloxane complex (containing 4.5×10⁻⁸ mol as Pt alone), and the mixture was stirred at 80°C for 3 hours. Thereafter, the solvent and unreacted reactants were distilled off in vacuum, obtaining 25 g of a liquid product. The obtained product was confirmed to be a compound having the following formula (1D) by ¹H-NMR. The compound having the formula (1D) had a numerical average molecular weight of 4,400 and a molecular weight distribution of 1.02.

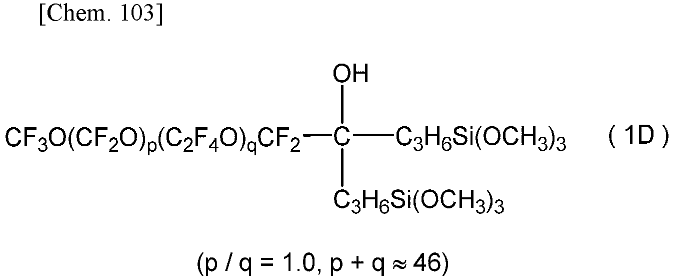

### [Synthesis Example 2]

A compound having the following formula (2A) and having a numerical average molecular weight of 4,000 and a molecular weight distribution of 1.32 (starting material) was used for the following synthesis.

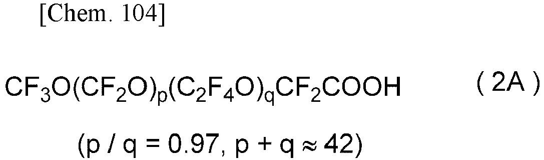

50 g of the compound having the formula (2A) as the starting material was dissolved in a mixed solvent of 5 g of 1,3-trifluoromethylbenzene and 20 g of methanol. After stirring the solution at 60°C for 4 hours, the lower layer was taken out, and the solvent was distilled off under reduced pressure to obtain 40 g of a liquid product. The obtained product was confirmed to be a compound having the following formula (2B) by ¹⁹F-NMR.

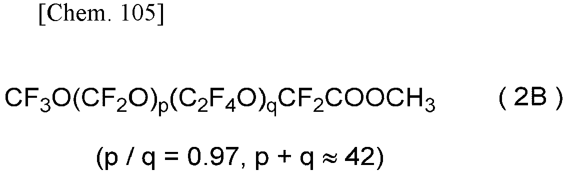

A reactor was charged with 40 g of the compound having the formula (2B), 36 g of allylmagnesium chloride, and 30 g of AC6000, and the mixture was stirred at 60°C for 2 hours. Thereafter, an appropriate amount of hydrochloric acid was added thereto, and the mixture was stirred and then sufficiently washed with water. Further, the lower layer was taken out, and the solvent was distilled off under reduced pressure to obtain 30 g of a liquid product. The obtained product was confirmed to be a compound having the following formula (2C) by ¹⁹F-NMR and ¹H-NMR.

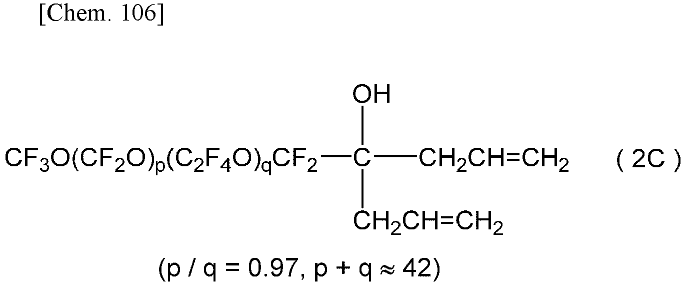

A reactor was charged with 30 g of the compound having the formula (2C), 15 g of 1,3-trifluoromethylbenzene, 2.4 g of trimethoxysilane, and 0.015 g of a toluene solution of chloroplatinic acid/vinylsiloxane complex (containing 4.5×10⁻⁸ mol as Pt alone), and the mixture was stirred at 80°C for 3 hours. Thereafter, the solvent and unreacted reactants were distilled off in vacuum, obtaining 25 g of a liquid product. The obtained product was confirmed to be a compound having the following formula (2D) by ¹H-NMR. The compound having the formula (2D) had a numerical average molecular weight of 4,400 and a molecular weight distribution of 1.32.

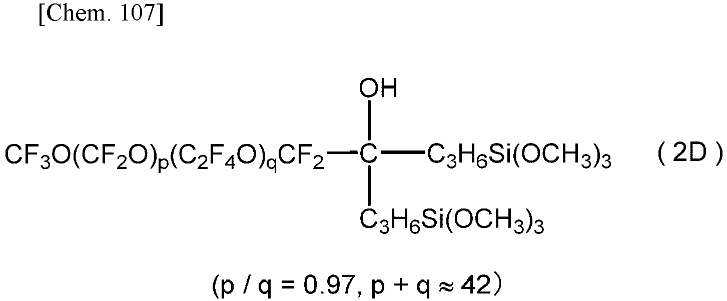

### [Synthesis Example 3]

A compound having the following formula (3A) and having a numerical average molecular weight of 8,000 and a molecular weight distribution of 1.50 (starting material) was used for the following synthesis.

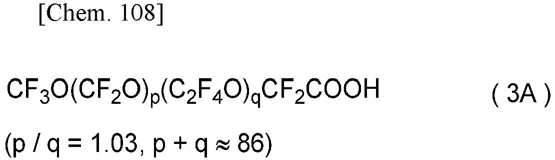

50 g of the compound having the formula (3A) as the starting material was dissolved in a mixed solvent of 40 g of AC6000 and 20 g of methanol. After stirring the solution at 60°C for 11 hours, the lower layer was taken out, and the solvent was distilled off under reduced pressure to obtain 40 g of a liquid product. The obtained product was confirmed to be a compound having the following formula (3B) by ¹⁹F-NMR.

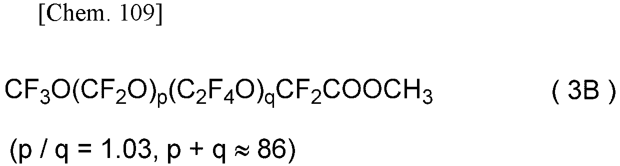

A reactor was charged with 40 g of the compound having the formula (3B), 40 g of allylmagnesium chloride, 41 g of AC6000, and 54 g of PF5060, and the mixture was stirred at 50°C for 2 hours. Thereafter, an appropriate amount of hydrochloric acid was added thereto, and the mixture was stirred and then sufficiently washed with water. Further, the lower layer was taken out, and the solvent was distilled off under reduced pressure to obtain 30 g of a liquid product. The obtained product was confirmed to be a compound having the following formula (3C) by ¹⁹F-NMR and ¹H-NMR.

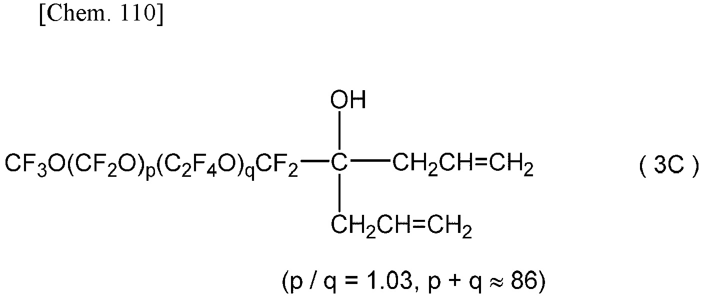

30 g of the compound having the formula (3C), 15 g of AC6000, 2.4 g of trimethoxysilane, and 0.015 g of a toluene solution of chloroplatinic acid/vinylsiloxane complex (containing 4.5×10⁻⁸ mol as Pt alone) were mixed, and the mixture was stirred at 80°C for 3 hours. Thereafter, the solvent and unreacted reactants were distilled off in vacuum, obtaining 25 g of a liquid product. The obtained product was confirmed to be a compound having the following formula (3D) by ¹H-NMR. The compound having the formula (3D) had a numerical average molecular weight of 8,400 and a molecular weight distribution of 1.50.

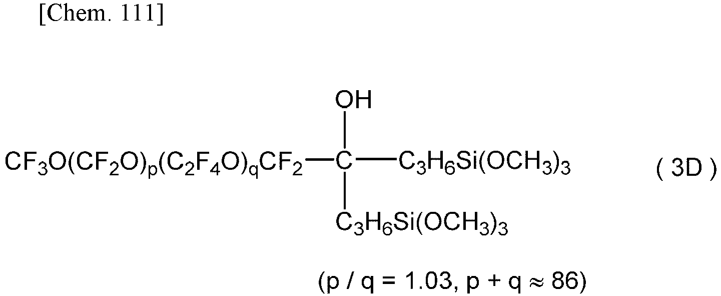

### [Synthesis Example 4]

30 g of the compound having the formula (2C) in Synthesis Example 2, 30 g of 1,3-trifluoromethylbenzene, 7.8 g of diethylene glycol 2-bromoethyl methyl ether, and 0.07 g of tetrabutylammonium iodide were mixed. Subsequently, 6.2 g of potassium hydroxide was added thereto, and then the mixture was aged at 60°C for 11 hours. Thereafter, an appropriate amount of hydrochloric acid was added thereto, and the mixture was stirred and then sufficiently washed with water. Further, the lower layer was taken out, and the solvent was distilled off under reduced pressure to obtain 28 g of a liquid product. The obtained product was confirmed to be a compound having the following formula (4A) by ¹⁹F-NMR and ¹H-NMR.

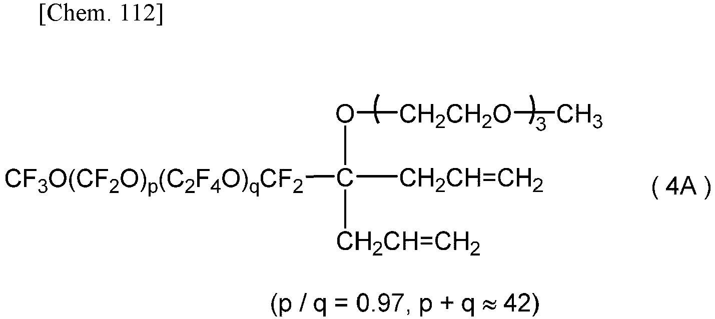

25 g of the compound having the formula (4A), 15 g of 1,3-trifluoromethylbenzene, 2.4 g of trimethoxysilane, and 0.015 g of a toluene solution of chloroplatinic acid/vinylsiloxane complex (containing 2.5×10⁻⁸ mol as Pt alone) were mixed, and the mixture was stirred at 80°C for 3 hours. Thereafter, the solvent and unreacted reactants were distilled off in vacuum, obtaining 23 g of a liquid product. The obtained product was confirmed to be a compound having the following formula (4B) by ¹H-NMR. The compound having the formula (4B) had a numerical average molecular weight of 4,400 and a molecular weight distribution of 1.32.

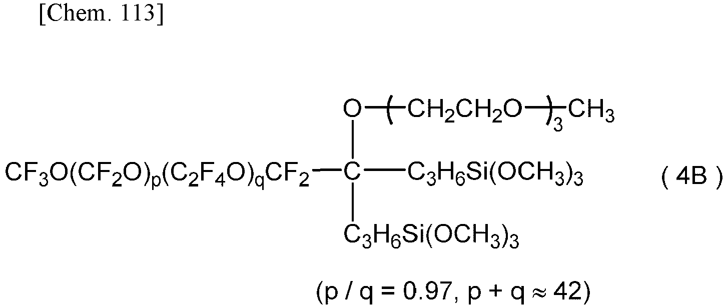

### [Synthesis Example 5]

30 g of the compound having the formula (2C) in Synthesis Example 2, 30 g of 1,3-trifluoromethylbenzene, 2.7 g of allyl bromide, and 0.06 g of tetrabutyl ammonium iodide were mixed. Subsequently, 2.4 g of potassium hydroxide was added thereto, and then the mixture was stirred at 60°C for 11 hours. Thereafter, an appropriate amount of hydrochloric acid was added thereto, and the mixture was stirred and then sufficiently washed with water. Further, the lower layer was taken out, and the solvent was distilled off to obtain 28 g of a liquid product. The obtained product was confirmed to be a compound having the following formula (5A) by ¹⁹F-NMR and ¹H-NMR.

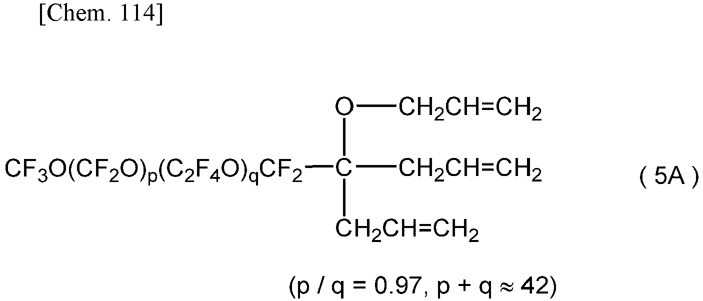

25 g of the compound having the formula (5A), 15 g of 1,3-trifluoromethylbenzene, 3.6 g of trimethoxysilane, and 0.023 g of a toluene solution of chloroplatinic acid/vinylsiloxane complex (containing 4.5×10⁻⁸ mol as Pt alone) were mixed, and the mixture was stirred at 80°C for 3 hours. Thereafter, the solvent and unreacted reactants were distilled off in vacuum, obtaining 23 g of a liquid product. The obtained product was confirmed to be a compound having the following formula (5B) by ¹H-NMR. The compound having the formula (5B) had a numerical average molecular weight of 4,500 and a molecular weight distribution of 1.32.

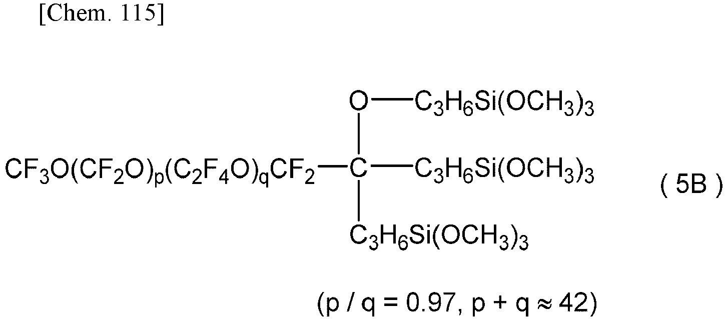

### [Synthesis Example 6]

A compound having the following formula (6A) and having a numerical average molecular weight of 4,000 and a molecular weight distribution of 1.32 (starting material) was used for the following synthesis.

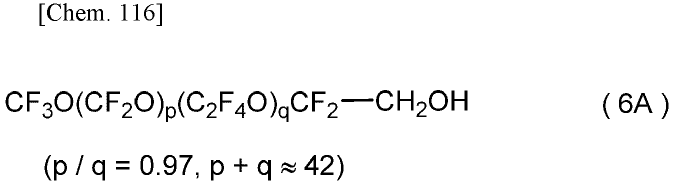

A reactor was charged with 50 g of the compound having the formula (6A) as the starting material, 4.2 g of allyl bromide, 1.0 g of tetrabutylammonium hydrogen sulfate, and 6.0 g of a 30 wt% aqueous sodium hydroxide solution, and the mixture was stirred at 60°C for 11 hours. Thereafter, an appropriate amount of hydrochloric acid was added thereto, and the mixture was stirred and then sufficiently washed. Further, the lower layer was taken out, and the solvent was distilled off under reduced pressure to obtain 40 g of a liquid product. The obtained product was confirmed to be a compound having the following formula (6B) by ¹⁹F-NMR and ¹H-NMR.

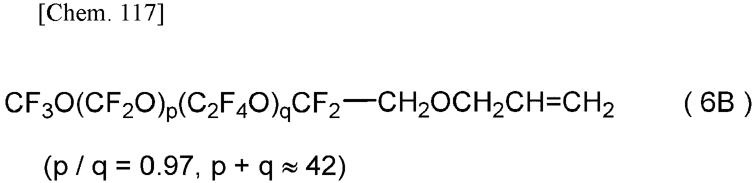

40 g of the compound having the formula (6B), 40 g of 1,3-trifluoromethylbenzene, 0.2 g of triacetoxymethylsilane, 3.8 g of trichlorosilane, and 0.015 g of a toluene solution of chloroplatinic acid/vinylsiloxane complex (containing 4.5×10⁻⁸ mol as Pt alone) were mixed, and the mixture was stirred at 60°C for 5 hours. Thereafter, the solvent and unreacted reactants were distilled off in vacuum, obtaining 36 g of a liquid product. The obtained product was confirmed to be a compound having the following formula (6C) by ¹⁹F-NMR and ¹H-NMR.

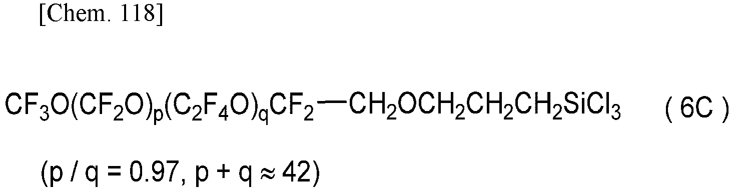

A reactor was charged with 36 g of the compound having the formula (6C), 40 g of 1,3-trifluoromethylbenzene, and 6.0 g of allylmagnesium bromide, and the mixture was stirred at 25°C for 10 hours. Thereafter, an appropriate amount of methanol was added thereto, and the mixture was stirred and then sufficiently washed. Further, the lower layer was taken out, and the solvent was distilled off under reduced pressure to obtain 34 g of a liquid product. The obtained product was confirmed to be a compound having the following formula (6D) by ¹⁹F-NMR and ¹H-NMR.

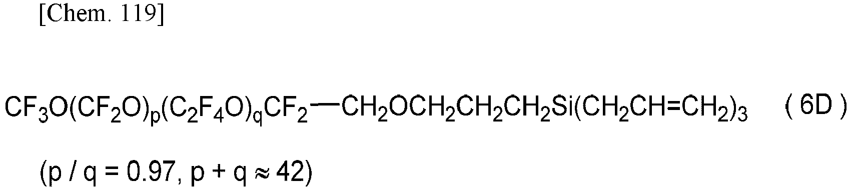

34 g of the compound having the formula (6D), 35 g of 1,3-trifluoromethylbenzene, 0.15 g of triacetoxymethylsilane, 6.5 g of trichlorosilane, and 0.015 g of a toluene solution of chloroplatinic acid/vinylsiloxane complex (containing 4.5×10⁻⁸ mol as Pt alone) were mixed, and the mixture was stirred at 60°C for 5 hours. Thereafter, the solvent and unreacted reactants were distilled off in vacuum, obtaining 36 g of a liquid product. The obtained product was confirmed to be a compound having the following formula (6E) by ¹⁹F-NMR and ¹H-NMR.

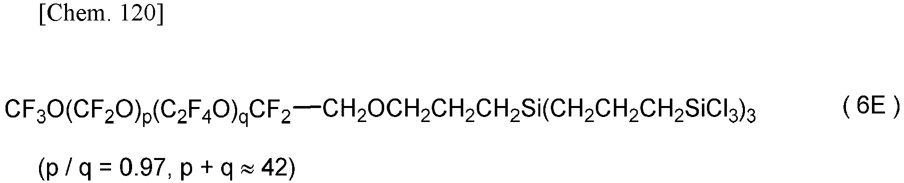

36 g of the compound having the formula (6E), 35 g of 1,3-trifluoromethylbenzene, 2.0 g of methanol, and 10 g of trimethyl orthoformate were mixed, and the mixture was stirred at 65°C for 3 hours. Thereafter, the solvent and unreacted reactants were distilled off in vacuum, obtaining 33 g of a liquid product. The obtained product was confirmed to be a compound having the following formula (6F) by ¹H-NMR. The compound having the formula (6F) had a numerical average molecular weight of 4,600 and a molecular weight distribution of 1.32.

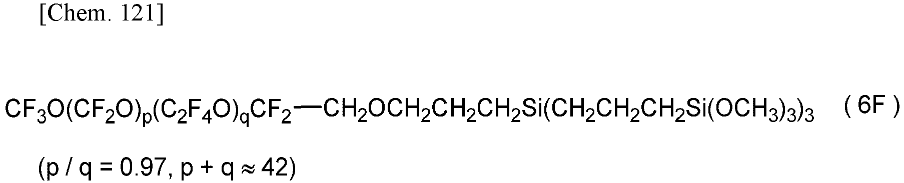

### [Synthesis Example 7]

A compound having the following formula (7A) and having a numerical average molecular weight of 8,000 and a molecular weight distribution of 1.50 (starting material) was used for the following synthesis.

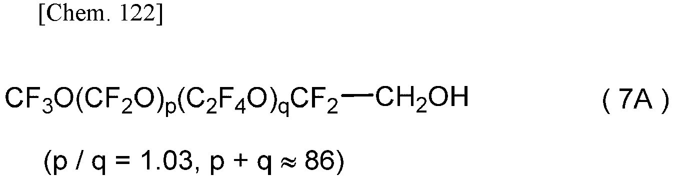

A reactor was charged with 50 g of the compound having the formula (7A) as the starting material, 3.0 g of allyl bromide, 0.68 g of tetrabutyl ammonium hydrogen sulfate, and 5.9 g of a 30 wt% aqueous sodium hydroxide solution, and the mixture was stirred at 60°C for 11 hours. Thereafter, an appropriate amount of hydrochloric acid was added thereto, and the mixture was stirred and then sufficiently washed. Further, the lower layer was taken out, and the solvent was distilled off under reduced pressure to obtain 45 g of a liquid product. The obtained product was confirmed to be a compound having the following formula (7B) by ¹⁹F-NMR and ¹H-NMR.

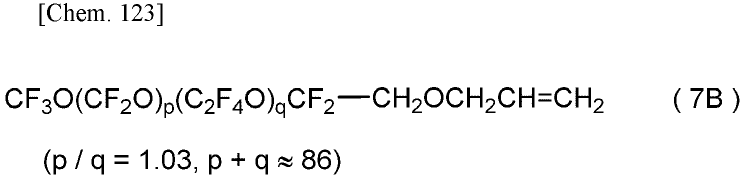

45 g of the compound having the formula (7B), 40 g of AC6000, 0.2 g of triacetoxymethylsilane, 3.7 g of trichlorosilane, and 0.015 g of a toluene solution of chloroplatinic acid/vinylsiloxane complex (containing 4.5×10⁻⁸ mol as Pt alone) were mixed, and the mixture was stirred at 60°C for 5 hours. Thereafter, the solvent and unreacted reactants were distilled off in vacuum, obtaining 40 g of a liquid product. The obtained product was confirmed to be a compound having the following formula (7C) by ¹⁹F-NMR and ¹H-NMR.

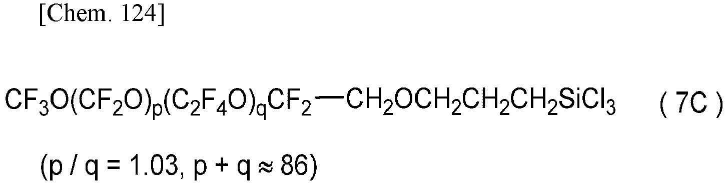

A reactor was charged with 40 g of the compound having the formula (7C), 40 g of AC6000, and 4.3 g of allylmagnesium bromide, and the mixture was stirred at 25°C for 10 hours. Thereafter, an appropriate amount of methanol was added thereto, and the mixture was stirred and then sufficiently washed. Further, the lower layer was taken out, and the solvent was distilled off under reduced pressure to obtain 36 g of a liquid product. The obtained product was confirmed to be a compound having the following formula (7D) by ¹⁹F-NMR and ¹H-NMR.

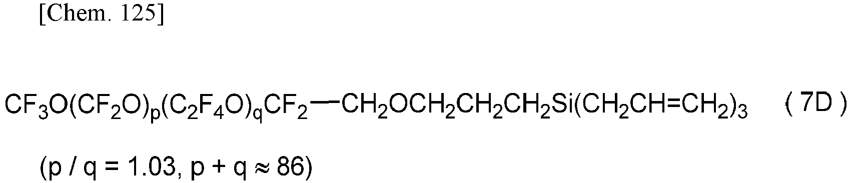

36 g of the compound having the formula (7D), 40 g of AC6000, 0.10 g of triacetoxymethylsilane, 3.0 g of trichlorosilane, and 0.015 g of a toluene solution of chloroplatinic acid/vinylsiloxane complex (containing 4.5×10⁻⁸ mol as Pt alone) were mixed, and the mixture was stirred at 60°C for 5 hours. Thereafter, the solvent and unreacted reactants were distilled off in vacuum, obtaining 30 g of a liquid product. The obtained product was confirmed to be a compound having the following formula (7E) by ¹⁹F-NMR and ¹H-NMR.

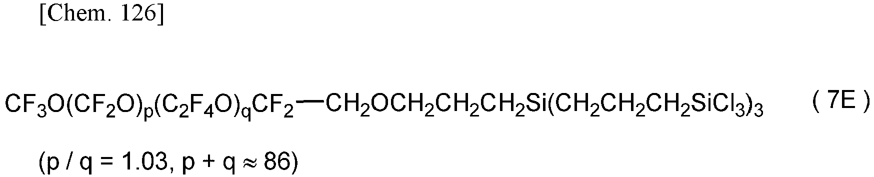

30 g of the compound having the formula (7E), 35 g of AC6000, 1.0 g of methanol, and 3.2 g of trimethyl orthoformate were mixed, and the mixture was stirred at 65°C for 3 hours. Thereafter, the solvent and unreacted reactants were distilled off in vacuum, obtaining 33 g of a liquid product. The obtained product was confirmed to be a compound having the following formula (7F) by ¹H-NMR. The compound having the formula (7F) had a numerical average molecular weight of 8,600 and a molecular weight distribution of 1.50.

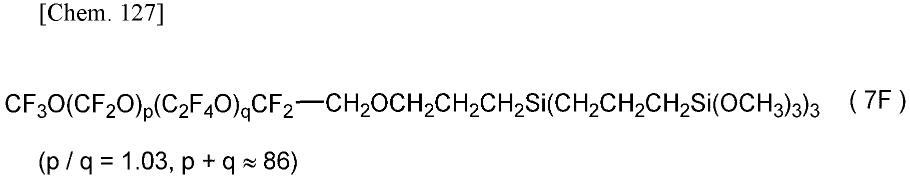

### [Synthesis Example 8]

A mixed solution of 35 g of a sodium bis(2-methoxyethoxy)aluminum hydride toluene solution, 30 g of tetrahydrofuran and 30 g of 1,3-trifluoromethylbenzene was prepared. Subsequently, 50 g of the compound having the formula (2A) and having a numerical average molecular weight of 4,000 and a molecular weight distribution of 1.32 as the starting material in Synthesis Example 2 was slowly added dropwise to the mixed solution cooled in an ice bath. After the dropwise addition, the mixture was stirred at 50°C for 3 hours. Thereafter, hydrochloric acid was added thereto, and the mixture was stirred and then sufficiently washed with water. Further, the lower layer was taken out, and the solvent was distilled off under reduced pressure to obtain 40 g of a liquid product. The obtained product was confirmed to be a compound having the following formula (8A) by ¹⁹F-NMR and ¹H-NMR.

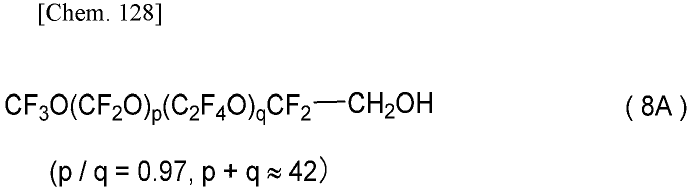

40 g of the compound having the formula (8A), 3.1 g of allyl bromide, and 0.83 g of tetrabutylammonium hydrogen sulfate were mixed. Subsequently, 5.5 g of potassium hydroxide was added thereto, and then the mixture was stirred at 60°C for 6 hours. Thereafter, an appropriate amount of hydrochloric acid was added thereto, and the mixture was stirred and then sufficiently washed with water. Further, the lower layer was taken out, and the solvent was distilled off to obtain 32 g of a liquid product. The obtained product was confirmed to be a compound having the following formula (8B) by ¹⁹F-NMR and ¹H-NMR.

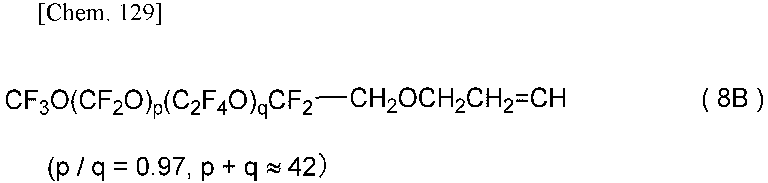

32 g of the compound having the formula (8B), 23 g of 1,3-trifluoromethylbenzene, 7.9 g of 1,3,5,7-tetramethylcyclotetrasiloxane, and 0.015 g of a toluene solution of chloroplatinic acid/vinylsiloxane complex (containing 4.5×10⁻⁸ mol as Pt alone) were mixed, and the mixture was aged at 75°C for 7 hours. Thereafter, the solvent and unreacted reactants were distilled off in vacuum, obtaining 31 g of a liquid product. The obtained product was confirmed to be a compound having the following formula (8C) by ¹H-NMR.

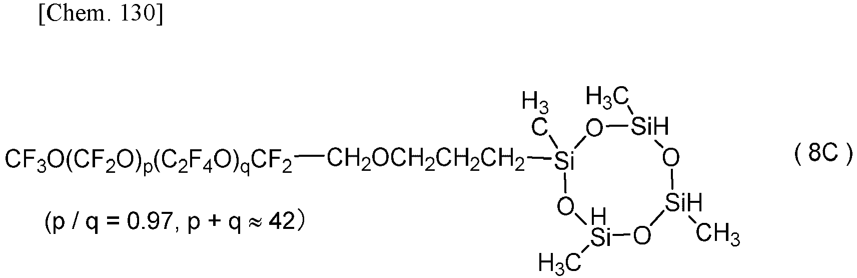

31 g of the compound having the formula (8C), 15 g of 1,3-trifluoromethylbenzene, 7.2 g of octenyltrimethoxysilane, and 0.015 g of a toluene solution of chloroplatinic acid/vinylsiloxane complex (containing 4.5×10⁻⁸ mol as Pt alone) were mixed, and the mixture was aged at 80°C for 6 hours. Thereafter, the solvent and unreacted reactants were distilled off in vacuum, obtaining 28 g of a liquid product. The obtained product was confirmed to be a compound having the following formula (8D) by ¹H-NMR. The compound having the formula (8D) had a numerical average molecular weight of 4,600 and a molecular weight distribution of 1.33.

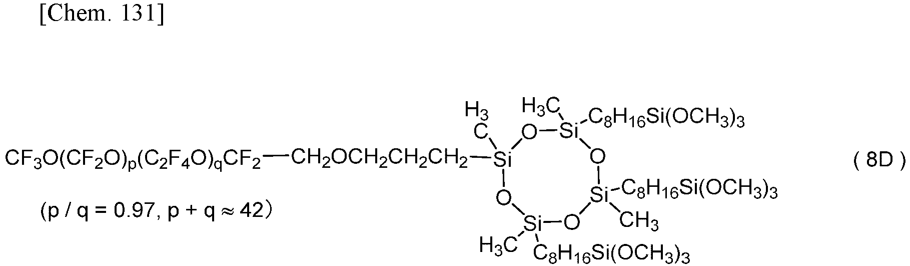

### [Synthesis Example 9]

30 g of the compound having the formula (2B) in Synthesis Example 2, 30 g of 1,3-trifluoromethylbenzene and 6.0 g of 2,2-diallyl-4-penten-1-amine were stirred at 50°C for 5 hours. Thereafter, the solvent and unreacted reactants were distilled off in vacuum, obtaining 25 g of a liquid product. The obtained product was confirmed to be a compound having the following formula (9A) by ¹H-NMR.

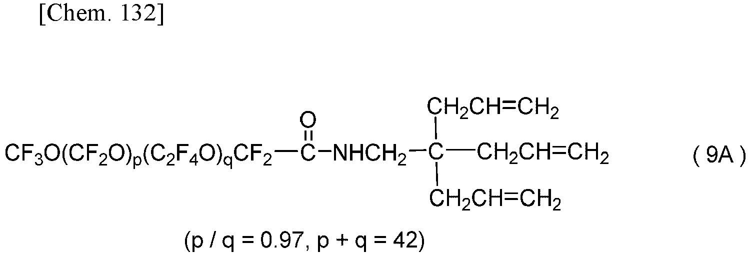

25 g of the compound having the formula (9A), 10 g of 1,3-trifluoromethylbenzene, 2.0 g of trimethoxysilane, and 0.015 g of a toluene solution of chloroplatinic acid/vinylsiloxane complex (containing 4.5×10⁻⁸ mol as Pt alone) were mixed, and the mixture was aged at 80°C for 3 hours. Thereafter, the solvent and unreacted reactants were distilled off in vacuum, obtaining 25 g of a liquid product. The obtained product was confirmed to be a compound having the following formula (9B) by ¹H-NMR. The compound having the formula (9B) had a numerical average molecular weight of 4,600 and a molecular weight distribution of 1.32.

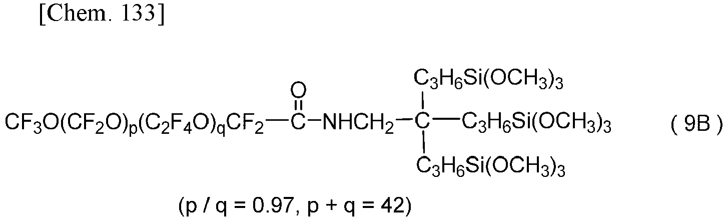

### [Synthesis Example 10]

A nickel autoclave was charged with 40 g of the compound having the formula (2B) in Synthesis Example 2 and 60 g of methanol. Subsequently, 40 g of liquid ammonia was added to the autoclave at a pressure of 1.0 MPa, and stirred at 50°C for 150 hours. Thereafter, the solvent was distilled off in vacuum, obtaining 35 g of a liquid product. The obtained product was confirmed to be a compound having the following formula (10A) by ¹⁹F-NMR and ¹H-NMR.

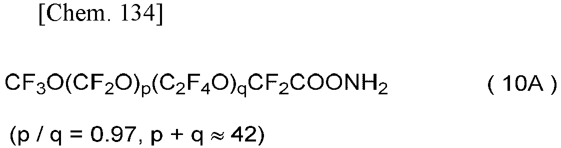

A solution was prepared by mixing 1.6 g of lithium aluminum hydride and 20 g of tetrahydrofuran (THF). Subsequently, 35 g of the compound having the formula (10A) was dissolved in 10 g of 1,3-trifluoromethylbenzene, and the resulting solution was slowly added dropwise to the THF solution cooled in an ice bath. After the dropwise addition, the mixture was stirred at 70°C for 10 hours. Thereafter, an appropriate amount of aqueous potassium hydroxide solution was added thereto, and the mixture was stirred and then sufficiently washed with water. Further, the lower layer was taken out, and the solvent was distilled off under reduced pressure to obtain 31 g of a liquid product. The obtained product was confirmed to be a compound having the following formula (10B) by ¹⁹F-NMR and ¹H-NMR.

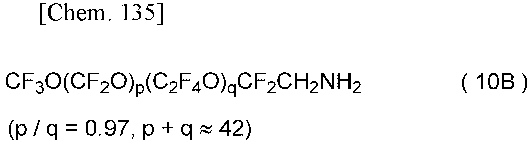

31 g of the compound having the formula (10B), 0.3 g of potassium hydrogencarbonate, and 2.8 g of allyl bromide were mixed, and the mixture was stirred at 70°C for 11 hours. Thereafter, an appropriate amount of hydrochloric acid was added thereto, and the mixture was stirred and then sufficiently washed. Further, the lower layer was taken out, and the solvent was distilled off under reduced pressure to obtain 28 g of a liquid product. The obtained product was confirmed to be a compound having the following formula (10C) by ¹⁹F-NMR and ¹H-NMR.

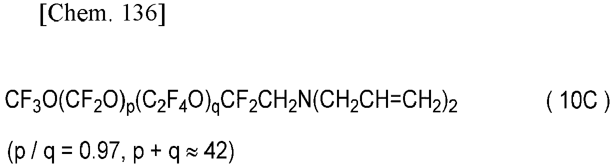

28 g of the compound having the formula (10C), 30 g of 1,3-trifluoromethylbenzene, 2.5 g of trimethoxysilane, and 0.015 g of a toluene solution of chloroplatinic acid/vinylsiloxane complex (containing 4.5×10⁻⁸ mol as Pt alone) were mixed, and the mixture was aged at 80°C for 3 hours. Thereafter, the solvent and unreacted reactants were distilled off in vacuum, obtaining 25 g of a liquid product. The obtained product was confirmed to be a compound having the following formula (10D) by ¹H-NMR. The compound having the formula (10D) had a numerical average molecular weight of 4,300 and a molecular weight distribution of 1.32.

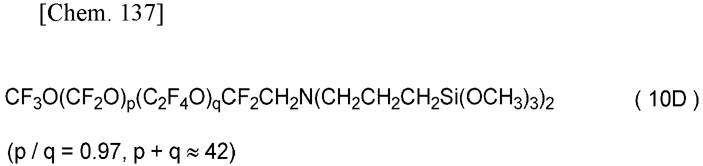

### [Synthesis Example 11]

A compound having the following formula (11A) and having a numerical average molecular weight of 4,200 and a molecular weight distribution of 1.34 (starting material) was used for the following synthesis.

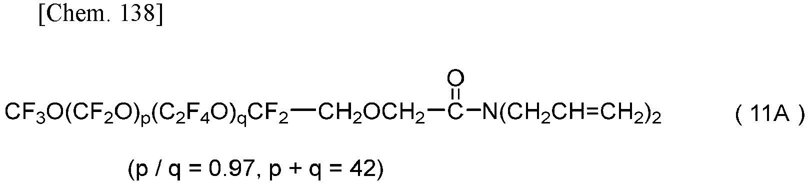

20 g of the compound having the formula (11A) as the starting material, 30 g of 1,3-trifluoromethylbenzene, 2.4 g of trimethoxysilane, and 0.015 g of a toluene solution of chloroplatinic acid/vinylsiloxane complex (containing 4.5×10⁻⁸ mol as Pt alone) were mixed, and the mixture was aged at 80°C for 3 hours. Thereafter, the solvent and unreacted reactants were distilled off in vacuum, obtaining 18 g of a liquid product. The obtained product was confirmed to be a compound having the following formula (11B) by ¹H-NMR. The compound having the formula (11B) had a numerical average molecular weight of 4,400 and a molecular weight distribution of 1.34.

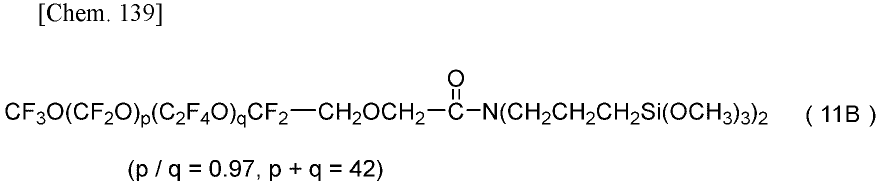

### [Synthesis Example 12]

A compound having the following formula (12A) and having a numerical average molecular weight of 4,000 and a molecular weight distribution of 1.00 (starting material) was used for the following synthesis.

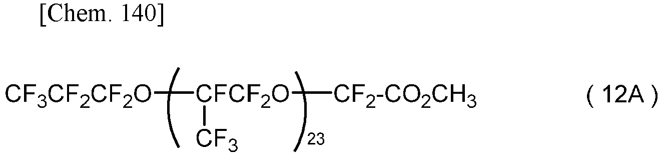

A reactor was charged with 40 g of the compound of the formula (12A) as the starting material, 5.9 g of butenyl magnesium bromide, and 30 g of AC6000, and the mixture was stirred at 60°C for 2 hours. Thereafter, an appropriate amount of hydrochloric acid was added thereto, and the mixture was stirred and then sufficiently washed with water. Further, the lower layer was taken out, and the solvent was distilled off under reduced pressure to obtain 30 g of a liquid product. The obtained product was confirmed to be a compound having the following formula (12B) by ¹⁹F-NMR and ¹H-NMR.

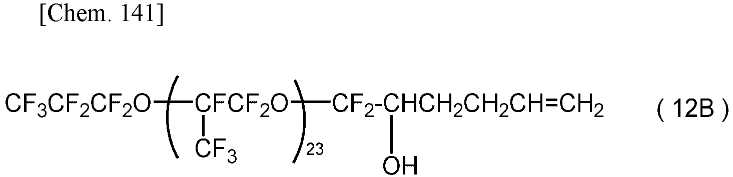

30 g of the compound having the formula (12B), 30 g of 1,3-trifluoromethylbenzene, 3.3 g of allyl bromide, and 0.06 g of tetrabutyl ammonium iodide were mixed. Subsequently, 3.9 g of potassium hydroxide was added thereto, and then the mixture was stirred at 60°C for 18 hours. Thereafter, an appropriate amount of hydrochloric acid was added thereto, and the mixture was stirred and then sufficiently washed with water. Further, the lower layer was taken out, and the solvent was distilled off to obtain 28 g of a liquid product. The obtained product was confirmed to be a compound having the following formula (12C) by ¹⁹F-NMR and ¹H-NMR.

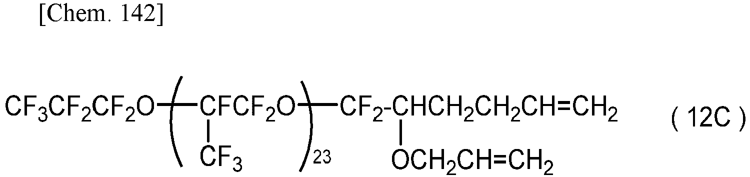

25 g of the compound having the formula (12C), 30 g of 1,3-trifluoromethylbenzene, 3.4 g of trimethoxysilane, and 0.015 g of a toluene solution of chloroplatinic acid/vinylsiloxane complex (containing 4.5×10⁻⁸ mol as Pt alone) were mixed, and the mixture was stirred at 80°C for 3 hours. Thereafter, the solvent and unreacted reactants were distilled off in vacuum, obtaining 23 g of a liquid product. The obtained product was confirmed to be a compound having the following formula (12D) by ¹H-NMR. The compound having the formula (12D) had a numerical average molecular weight of 4,300 and a molecular weight distribution of 1.00.

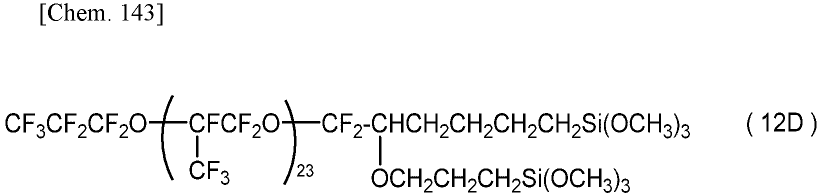

### [Synthesis Example 13]

The same procedure as in Synthesis Example 12 was carried out except for using a compound having the formula (12A) and having a numerical average molecular weight of 4,000 and a molecular weight distribution of 1.40 as a starting material in place of the compound having the formula (12A) and having a numerical average molecular weight of 4,000 and a molecular weight distribution of 1.00 as the starting material in Synthesis Example 12 to synthesize a compound having the following formula (13A) and having a numerical average molecular weight of 4,300 and a molecular weight distribution of 1.40.

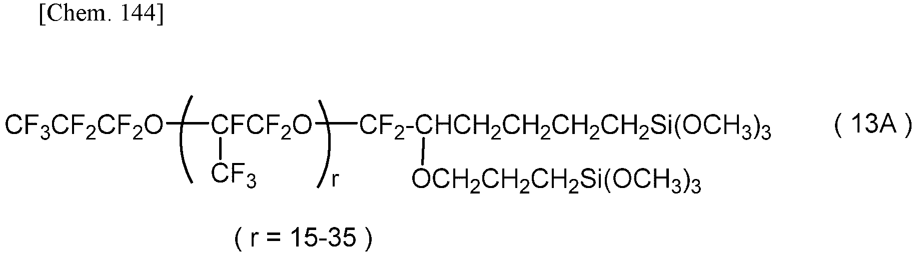

### [Synthesis Example 14]

A compound having the following formula (14A) and having a numerical average molecular weight of 5,000 and a molecular weight distribution of 1.30 (starting material) was used for the following synthesis.

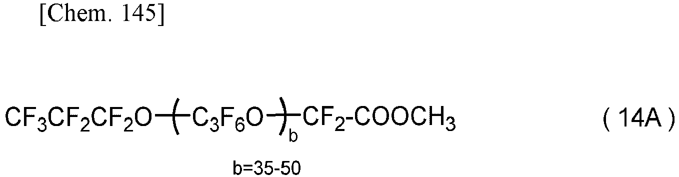

The same procedure as in Synthesis Example 2 was carried out except for using the compound having the formula (14A) as a starting material in place of the compound having the formula (2B) as the starting material in Synthesis Example 2 to synthesize a compound having the following formula (14B) and having a numerical average molecular weight of 5,300 and a molecular weight distribution of 1.35.

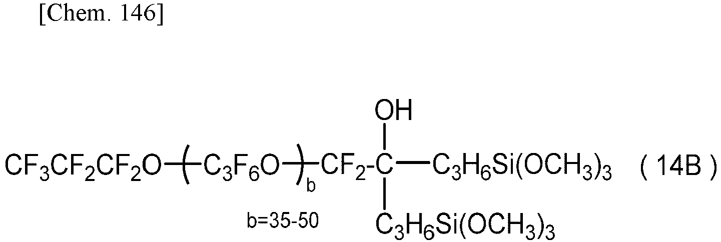

### [Synthesis Example 15]

A mixture which was composed of 80 mol% of a compound having the following formula (15A) and 20 mol% of a compound having the following formula (15B) and had a numerical average molecular weight of 8,000 and a molecular weight distribution of 1.55 (starting material) was used for the following synthesis.

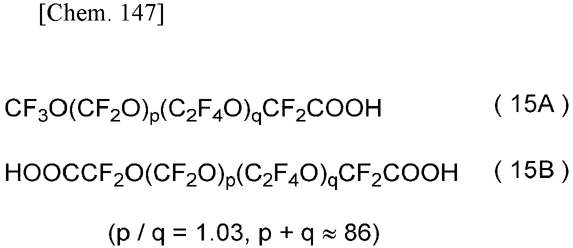

50 g of the mixture composed of 80 mol% of the compound having the formula (15A) and 20 mol% of the compound having the formula (15B) as the starting material was dissolved in a mixed solvent of 40 g of AC6000 and 20 g of methanol. After stirring the solution at 60°C for 4 hours, the lower layer was taken out, and the solvent was distilled off under reduced pressure to obtain 48 g of a liquid product. The obtained product was confirmed to be a mixture composed of 80 mol% of a compound having the following formula (15C) and 20 mol% of a compound having the following formula (15D) by ¹⁹F-NMR.

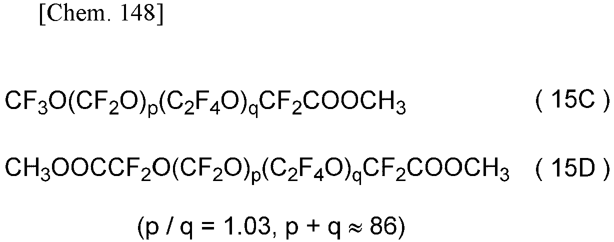

A reactor was charged with 48 g of the mixture composed of 80 mol% of the compound having the formula (15C) and 20 mol% of the compound having the formula (15D), 48 g of allylmagnesium chloride, 40 g of AC6000, and 40 g of PF5060, and the mixture was stirred at 50°C for 2 hours. Thereafter, an appropriate amount of hydrochloric acid was added thereto, and the mixture was stirred and then sufficiently washed with water. Further, the lower layer was taken out, and the solvent was distilled off under reduced pressure to obtain 40 g of a liquid product. The obtained product was confirmed to be a mixture composed of 80 mol% of a compound having the following formula (15E) and 20 mol% of a compound having the following formula (15F) by ¹⁹F-NMR and ¹H-NMR.

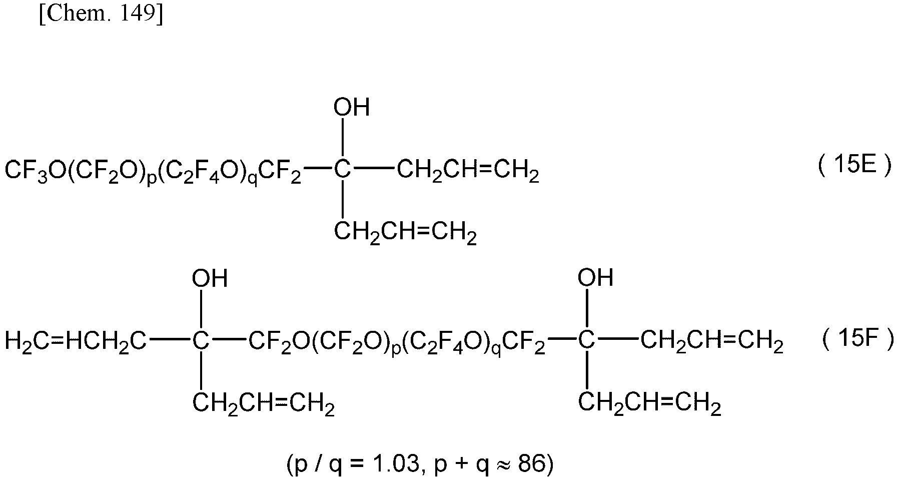

In a reactor, 40 g of the mixture composed of 80 mol% of the compound having the formula (15E) and 20 mol% of the compound having the formula (15F), 15 g of AC6000, 2.4 g of trimethoxysilane, and 0.015 g of a toluene solution of chloroplatinic acid/vinylsiloxane complex (containing 4.5×10⁻⁸ mol as Pt alone) were mixed, and the mixture was stirred at 80°C for 3 hours. Thereafter, the solvent and unreacted reactants were distilled off in vacuum, obtaining 25 g of a liquid product. The obtained product was confirmed to be a mixture composed of 80 mol% of a compound having the following formula (15G) and 20 mol% of a compound having the following formula (15H) by ¹H-NMR. The mixture composed of 80 mol% of the compound having the formula (15G) and 20 mol% of the compound having the formula (15H) had a numerical average molecular weight of 8,600 and a molecular weight distribution of 1.55.

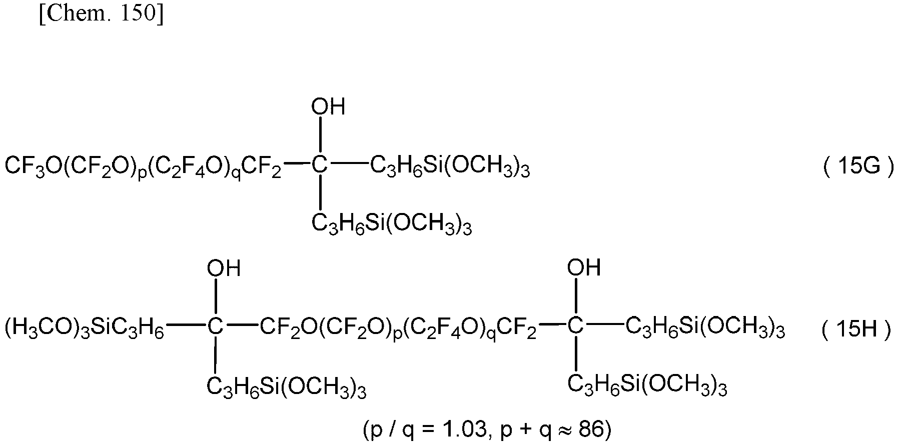

### [Example 2-1]

The compound having the formula (2D) obtained above was dissolved in Novec 7200 so as to have a concentration of 20 wt%, thereby preparing surface treatment agent 2-1.

### [Example 2-2]

The compound having the formula (3D) obtained above was dissolved in Novec 7200 so as to have a concentration of 20 wt%, thereby preparing surface treatment agent 2-2.

### [Example 2-3]

The compound having the formula (4B) obtained above was dissolved in Novec 7200 so as to have a concentration of 20 wt%, thereby preparing surface treatment agent 2-3.

### [Example 2-4]

The compound having the formula (5B) obtained above was dissolved in Novec 7200 so as to have a concentration of 20 wt%, thereby preparing surface treatment agent 2-4.

### [Example 2-5]

The compound having the formula (6F) obtained above was dissolved in Novec 7200 so as to have a concentration of 20 wt%, thereby preparing surface treatment agent 2-5.

### [Example 2-6]

The compound having the formula (7F) obtained above was dissolved in Novec 7200 so as to have a concentration of 20 wt%, thereby preparing surface treatment agent 2-6.

### [Example 2-7]

The compound having the formula (8D) obtained above was dissolved in Novec 7200 so as to have a concentration of 20 wt%, thereby preparing surface treatment agent 2-7.

### [Example 2-8]

The compound having the formula (9B) obtained above was dissolved in Novec 7200 so as to have a concentration of 20 wt%, thereby preparing surface treatment agent 2-8.

### [Example 2-9]

The compound having the formula (10D) obtained above was dissolved in Novec 7200 so as to have a concentration of 20 wt%, thereby preparing surface treatment agent 2-9.

### [Example 2-10]

The compound having the formula (11B) obtained above was dissolved in Novec 7200 so as to have a concentration of 20 wt%, thereby preparing surface treatment agent 2-10.

### [Example 2-11]

The compound having the formula (13A) obtained above was dissolved in Novec 7200 so as to have a concentration of 20 wt%, thereby preparing surface treatment agent 2-11.

### [Example 2-12]

The compound having the formula (14B) obtained above was dissolved in Novec 7200 so as to have a concentration of 20 wt%, thereby preparing surface treatment agent 2-12.

### [Example 2-13]

A mixture prepared by mixing the compound having the formula (2D) and the compound having the formula (3D) obtained above in equal weights was dissolved in Novec 7200 so as to have a concentration of 20 wt%, thereby preparing surface treatment agent 2-13. The equal weight mixture of the compound having the formula (2D) and the compound having the formula (3D) had a numerical average molecular weight of 6,500 and a molecular weight distribution of 1.70.

### [Example 2-14]

A mixture prepared by mixing 70 wt% of the compound having the formula (1D) and 30 wt% of the compound having the formula (5B) obtained above was dissolved in Novec 7200 so as to have a concentration of 20 wt%, thereby preparing a surface treatment agent 2-14. The mixture of the compound having the formula (1D) and the compound having the formula (5B) had a numerical average molecular weight of 4,500 and a molecular weight distribution of 1.22.

### [Example 2-15]

A mixture prepared by mixing the compound having the formula (5B) and the compound having the formula (12D) obtained above in equal weights was dissolved in Novec 7200 so as to have a concentration of 20 wt%, thereby preparing surface treatment agent 2-15. The equal weight mixture of the compound having the formula (5B) and the compound having the formula (12D) had a numerical average molecular weight of 4,400 and a molecular weight distribution of 1.36.

### [Example 2-16]

The mixture composed of 80 mol% of the compound having the formula (15G) and 20 mol% of the compound having the formula (15H) obtained above was dissolved in Novec 7200 so as to have a concentration of 20 wt%, thereby preparing surface treatment agent 2-16.

### [Example 2-17]

A mixture prepared by mixing the compound having the formula (7F) and the compound having the formula (9B) obtained above in equal weights was dissolved in Novec 7200 so as to have a concentration of 20 wt%, thereby preparing surface treatment agent 2-17. The equal weight mixture of the compound having the formula (7F) and the compound having the formula (9B) had a numerical average molecular weight of 6,700 and a molecular weight distribution of 1.42.

### [Example 2-18]

The compound of the formula (2D) obtained above was dissolved in methoxyperfluoroheptene so as to have a concentration of 20 wt%, thereby preparing surface treatment agent 2-18.

### [Example 2-19]

The compound having the formula (2D) obtained above was dissolved in Novec 7200 so as to have a concentration of 0.1 wt%, thereby preparing surface treatment agent 2-19.

### [Example 2-20]

The compound having the formula (3D) obtained above was dissolved in Novec 7200 so as to have a concentration of 0.1 wt%, thereby preparing surface treatment agent 2-20.

### [Example 2-21]

The compound having the formula (6F) obtained above was dissolved in Novec 7200 so as to have a concentration of 0.1 wt%, thereby preparing surface treatment agent 2-21.

### [Example 2-22]

The compound having the formula (8D) obtained above was dissolved in Novec 7200 so as to have a concentration of 0.1 wt%, thereby preparing surface treatment agent 2-22.

### [Example 2-23]

The compound having the formula (9B) obtained above was dissolved in Novec 7200 so as to have a concentration of 0.1 wt%, thereby preparing surface treatment agent 2-23.

### [Comparative Example 2-1]

The compound having the formula (1D) obtained above was dissolved in Novec 7200 so as to have a concentration of 20 wt%, thereby preparing surface treatment agent 2-24.

### [Comparative Example 2-2]

The compound having the formula (12D) obtained above was dissolved in Novec 7200 so as to have a concentration of 20 wt%, thereby preparing surface treatment agent 2-25.

### [Comparative Example 2-3]

A mixture prepared by mixing the compound having the formula (1D) and the compound having the formula (12D) obtained above in equal weights was dissolved in Novec 7200 so as to have a concentration of 20 wt%, thereby preparing surface treatment agent 2-26. The equal weight mixture of the compound having the formula (1D) and the compound having the formula (12D) had a numerical average molecular weight of 4,400 and a molecular weight distribution of 1.05.

### [Comparative Example 2-4]

The compound having the formula (1D) obtained above was dissolved in Novec 7200 so as to have a concentration of 0.1 wt%, thereby preparing surface treatment agent 2-27.

### [Preparation of cured film]

Onto a film having an outermost surface evaporated with SiO₂ of 100 nm (film evaporated with SiO₂ of 100 nm on the surface of transparent hard coat PET film rayhyper VC01 manufactured by Nakai Industrial Co., Ltd., 50 mm×100 mm), surface treatment agents 2-1 to 2-18 and 2-24 to 2-26 were deposited by vacuum evaporation at 6 µl under conditions including pressure 2.0×10⁻² Pa and heating temperature 700°C. The deposit cured in an atmosphere at a temperature of 80°C and a humidity of 80% for 12 hours, > 22000 US [non-DOCX for your Reference]obtaining a cured coating of 14 nm thick.

Surface treatment agents 2-19 to 2-23, 2-27 were spray-coated onto a chemically strengthened glass (Gorilla 5 manufactured by Corning) using a spray coating apparatus (NST-51 manufactured by T & K Co., Ltd.), and cured in an atmosphere at a temperature of 80°C and a humidity of 80% for 12 hours, obtaining a cured coating of 14 nm thick.

For each of the obtained cured coatings, haze measurement and an abrasion test were performed by the following methods.

### [Measurement of haze]

Haze (%) of the film on which the cured coating prepared above was formed was measured by the method described in JIS K7136 using a haze meter NDH5000 (manufactured by Nippon Denshoku Industries Co., Ltd.). A value obtained by subtracting the blank value (haze value of a film on which the cured coating is not formed) from the measured value (that is, increase in haze value) is shown in Table 2.

Haze (%) of the chemically strengthened glass on which the cured coating prepared above was formed was measured by the method described in JIS K7136 using a haze meter NDH5000 (manufactured by Nippon Denshoku Industries Co., Ltd.). A value obtained by subtracting the blank value (haze value of a chemically strengthened glass on which the cured coating is not formed) from the measured value (that is, increase in haze value) is shown in Table 3.

### [Abrasion resistance test]

Using a both-way wear tester (Heidon 30S, manufactured by Shinto Scientific Co., Ltd.), an abrasion resistance test of the cured coating (water/oil-repellent layer) was performed under the following conditions. The contact angle with water of the cured coating (water/oil-repellent layer) before and after the abrasion resistance test was measured using a contact angle meter (DropMaster, manufactured by Kyowa Interface Science Co., Ltd.). The results of the film on which the cured coating was formed are shown in Table 2, and the results of the chemically strengthened glass on which the cured coating was formed are shown in Table 3.

| | |
|---|---|
| Evaluation environmental conditions: | 25°C, humidity 40% |
| Rubbing material: | CS-5 felt (manufactured by Taber Industries) |
| Load: | 1 kg |
| Rubbing distance (one way): | 30 mm |
| Rubbing speed: | 3,600 mm/min |
| Number of reciprocations: | 1,000 cycles |

**[Table 2]**

| | | Molecular weight distribution | Numerical average molecular weight | Difference in haze value | Water contact angle (initial) | Abrasion resistance test (water contact angle) |
|---|---|---|---|---|---|---|
| Example 2-1 | Surface treatment agent 2-1 | 1.32 | 4,400 | 0.08 | 114 | 105 |
| Example 2-2 | Surface treatment agent 2-2 | 1.50 | 8,400 | 0.04 | 115 | 111 |
| Example 2-3 | Surface treatment agent 2-3 | 1.32 | 4,400 | 0.07 | 114 | 104 |
| Example 2-4 | Surface treatment agent 2-4 | 1.32 | 4,500 | 0.05 | 113 | 109 |
| Example 2-5 | Surface treatment agent 2-5 | 1.32 | 4,600 | 0.06 | 114 | 107 |
| Example 2-6 | Surface treatment agent 2-6 | 1.50 | 8,600 | 0.02 | 115 | 112 |
| Example 2-7 | Surface treatment agent 2-7 | 1.33 | 4,600 | 0.10 | 115 | 113 |
| Example 2-8 | Surface treatment agent 2-8 | 1.32 | 4,600 | 0.05 | 113 | 109 |
| Example 2-9 | Surface treatment agent 2-9 | 1.32 | 4,300 | 0.08 | 114 | 105 |
| Example 2-10 | Surface treatment agent 2-10 | 1.34 | 4,400 | 0.07 | 114 | 105 |
| Example 2-11 | Surface treatment agent 2-11 | 1.40 | 4,300 | 0.07 | 114 | 106 |
| Example 2-12 | Surface treatment agent 2-12 | 1.35 | 5,300 | 0.05 | 113 | 107 |
| Example 2-13 | Surface treatment agent 2-13 | 1.70 | 6,500 | 0.01 | 115 | 108 |
| Example 2-14 | Surface treatment agent 2-14 | 1.22 | 4,500 | 0.15 | 115 | 110 |
| Example 2-15 | Surface treatment agent 2-15 | 1.36 | 4,400 | 0.10 | 114 | 106 |
| Example 2-16 | Surface treatment agent 2-16 | 1.55 | 8,600 | 0.02 | 115 | 113 |
| Example 2-17 | Surface treatment agent 2-17 | 1.42 | 6,700 | 0.05 | 113 | 110 |
| Example 2-18 | Surface treatment agent 2-18 | 1.32 | 4,400 | 0.10 | 114 | 109 |
| Comparative Example 2-1 | Surface treatment agent 2-24 | 1.02 | 4,400 | 0.38 | 114 | 95 |
| Comparative Example 2-2 | Surface treatment agent 2-25 | 1.00 | 4,300 | 0.37 | 115 | 88 |
| Comparative Example 2-3 | Surface treatment agent 2-26 | 1.05 | 4,400 | 0.30 | 115 | 102 |

**[Table 3]**

| | | Molecular weight distribution | Numerical average molecular weight | Difference in haze value | Water contact angle (initial) | Abrasion resistance test (water contact angle) |
|---|---|---|---|---|---|---|
| Example 2-19 | Surface treatment agent 2-19 | 1.32 | 4,400 | 0.10 | 113 | 104 |
| Example 2-20 | Surface treatment agent 2-20 | 1.50 | 8,400 | 0.02 | 115 | 105 |
| Example 2-21 | Surface treatment agent 2-21 | 1.32 | 4,600 | 0.08 | 113 | 110 |
| Example 2-22 | Surface treatment agent 2-22 | 1.33 | 4,600 | 0.11 | 112 | 113 |
| Example 2-23 | Surface treatment agent 2-23 | 1.32 | 4,600 | 0.07 | 113 | 106 |
| Comparative Example 2-4 | Surface treatment agent 2-27 | 1.02 | 4,400 | 0.40 | 112 | 90 |

From the above results, since Comparative Examples 2-1, 2-2, and 2-4 have a molecular weight distribution of smaller than 1.2, the haze increases, and abrasion resistance is not sufficient. Comparative Example 2-3 had a molecular weight distribution of the entire mixture smaller than the range of the present invention even when two fluorooxyalkylene group-containing polymers were mixed, thus the haze increased. On the other hand, in Examples 2-1 to 2-23, the increase in haze was suppressed, and abrasion resistance was also good. In particular, it has been found that by mixing a plurality of fluorooxyalkylene group-containing polymers, the increase in haze is suppressed and abrasion resistance is excellent as long as the molecular weight distribution is within the range of the present invention.

## Claims

1. A surface treatment agent comprising a fluorooxyalkylene group-containing polymer having at one or more ends of a molecule at least one group of the following formula (1): 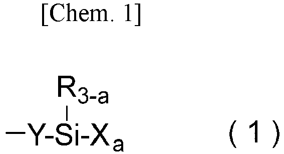 wherein Y is a single bond or a divalent hydrocarbon group which may contain one or two or more selected from a fluorine atom, a silicon atom, and a siloxane bond, R is a C₁-C₄ alkyl group or a phenyl group, X is a hydrolyzable group, and a is 2 or 3,
and/or a partial hydrolytic condensate thereof,
wherein the molecular weight distribution of the fluorooxyalkylene group-containing polymer and/or the partial hydrolytic condensate thereof or a fluorooxyalkylene group-containing polymer mixture containing the fluorooxyalkylene group-containing polymer and/or the partial hydrolytic condensate thereof contained in the surface treatment agent is in the range of 1.2 to 1.8.

2. The surface treatment agent according to claim 1, wherein the numerical average molecular weight of the fluorooxyalkylene group-containing polymer and/or the partial hydrolytic condensate thereof or the fluorooxyalkylene group-containing polymer mixture containing the fluorooxyalkylene group-containing polymer and/or the partial hydrolytic condensate thereof is 1,000 to 20,000.

3. The surface treatment agent according to claim 1 or 2, wherein the fluorooxyalkylene group-containing polymer has a polyfluorooxyalkylene structure of -(C_{b}F_{2b}O)ₘ-(wherein b is independently for each unit an integer of 1 to 6 and m is an integer of 1 to 250, and each unit may be linear or branched) in the molecule.

4. The surface treatment agent according to any one of claims 1 to 3, wherein the fluorooxyalkylene group-containing polymer is one having the following formula (2), (4) or (7): 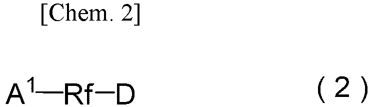 wherein Rf is a divalent polyfluorooxyalkylene structure-containing group of -C_{d}F_{2d}-O-(CF₂O)ₚ(C₂F₄O)_{q}(C₃F₆O)ᵣ(C₄F₈O)ₛ(C₅F₁₀O)ₜ(C₆F₁₂O)ᵤ-C_{d}F_{2d}- (wherein d is independently for each unit an integer of 0 to 5, p, q, r, s, t, and u are each independently an integer of 0 to 150, the sum of p, q, r, s, t, and u is an integer of 1 to 250, and each unit may be linear or branched, and individual repeating units within the parentheses with p, q, r, s, t, and u may be randomly bonded), A¹ is a monovalent fluorine-containing hydrocarbon group having CF₃- or CF₂H- at the end, optionally containing an oxygen atom, or D, and D is a monovalent group having the following formula (3): 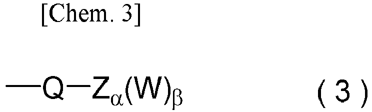 wherein Q is a single bond or a divalent organic group, Z is a di- to octa-valent group, α is 0 or 1, β is an integer of 1 to 7, and W is independently a monovalent hydrolyzable silyl group-containing group having the formula (1), 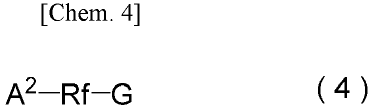 wherein Rf is the same as described above, A² is a monovalent fluorine-containing hydrocarbon group having CF₃- or CF₂H- at the end, optionally containing an oxygen atom, or G, and G is a monovalent group having the following formula (5): 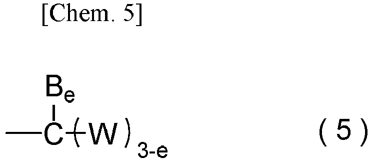 wherein W is the same as described above, B is independently a hydrogen atom or -OS, S is a hydrogen atom, a C₁-C₁₀ monovalent hydrocarbon group, or is a monovalent group having the following formula (6): 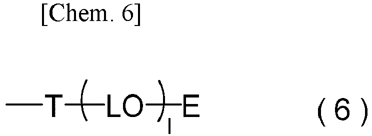 wherein T is a single bond or a di- to octa-valent group, L is independently a C₁-C₄ divalent hydrocarbon group, E is a C₁-C₆ monovalent hydrocarbon group, or W, and 1 is an integer of 0 to 20, and
e is 1 or 2, 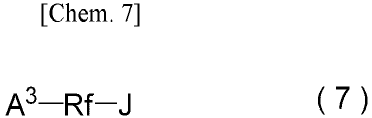 wherein Rf is the same as described above, A³ is a monovalent fluorine-containing hydrocarbon group having CF₃- or CF₂H- at the end, optionally containing an oxygen atom, or J, and J is a monovalent group having the following formula (8): 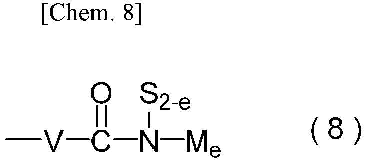 wherein S and e are the same as described above, V is a C₂-C₁₅ divalent hydrocarbon group optionally having a single bond or an ether bond, and M is a monovalent group having the following formula (9): 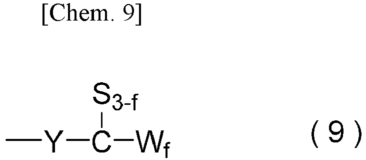 wherein Y, S, and W are the same as described above, and f is an integer of 1 to 3.

5. The surface treatment agent according to claim 4, wherein in formula (3), Q is an unsubstituted or substituted C₁-C₁₅ divalent hydrocarbon group which may contain one or more bonds selected from the group consisting of an amide bond, an ether bond, an ester bond, a sulfide bond, a urethane bond, a siloxane bond, a triazine bond, diorganosilylene groups, a silphenylene bond, and a silalkylene bond, and Z is a di- to octa-valent group selected from a silicon atom, a nitrogen atom, a silalkylene group, a silarylene group, and di- to octa-valent organopolysiloxane residues having a siloxane bond.

6. The surface treatment agent according to claim 4, wherein in formula (6), T is a single bond, or a silicon atom, a C₂-C₂₀ divalent hydrocarbon group which may contain at least one bond selected from the group consisting of a siloxane bond, a silalkylene bond, a silarylene bond, and diorganosilylene groups, a siloxane bond, a silalkylene group, or a diorganosilylene group.

7. The surface treatment agent according to any one of claims 1 to 6, wherein the fluorooxyalkylene group-containing polymer has at least two groups of the formula (1) at one or more ends of the molecule.

8. The surface treatment agent according to claim 7, which provides a cured coating in which a difference in haze value measured by a method in accordance with JIS K 7136 between a substrate and one having the substrate and a cured coating composed of a cured product of the surface treatment agent formed thereon is 0.2 or less.

9. The surface treatment agent according to any one of claims 1 to 8, further comprising a fluorooxyalkylene group-containing polymer having the following formula (10): 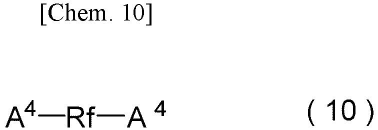 wherein Rf is a divalent polyfluorooxyalkylene structure-containing group of -C_{d}F_{2d}-O-(CF₂O)ₚ(C₂F₄O)_{q}(C₃F₆O)ᵣ(C₄F₈O)ₛ(C₅F₁₀O)ₜ(C₆F₁₂O)ᵤ-C_{d}F_{2d}- (wherein d is independently for each unit an integer of 0 to 5, p, q, r, s, t, and u are each independently an integer of 0 to 150, the sum of p, q, r, s, t, and u is an integer of 1 to 250, and each unit may be linear or branched, and individual repeating units within the parentheses with p, q, r, s, t, and u may be randomly bonded), and A⁴ is independently a monovalent fluorine-containing hydrocarbon group having CF₃- or CF₂H- at the end, optionally containing an oxygen atom, -OR³, -COOR³, or -PO(OR³)₂ [wherein R³ is a hydrogen atom or a C₁-C₁₀ monovalent hydrocarbon group].

10. The surface treatment agent according to any one of claims 1 to 9, further comprising a fluorine-based solvent.

11. An article having a cured product coating of the surface treatment agent according to any one of claims 1 to 10 on its surface.

12. The article according to claim 11, which is any one selected from a glass plate, a hard coat film, a high hardness film, an antireflection film, a spectacle lens, an optical lens, and a quartz substrate.
